# EUROPEAN PATENT APPLICATION

(11) **EP 4 501 997 A1**
(43) Date of publication of application: **05.02.2025**
(21) Application number: 23189102.9
(22) Date of filing: 01.08.2023
(51) Int. Cl.: C08G 18/10, C08G 18/32, C08G 18/50, C08G 18/73, C08G 18/76

(54) **RHEOLOGY MODIFIER FOR SEALANT OR ADHESIVE FORMULATIONS**

(71) Applicant: Elementis Specialties, Inc., East Windsor, New Jersey 08512 (US)
(72) Inventor: CHEN, Yanhui, Princeton, NJ, 08540 (US); GUPTA, Rajni, Princeton, NJ, 08540 (US); DESHMUKH, Prashant Balwant, Plainsboro, NJ, 08536 (US); GRAY, Maurice, Saint Albans, NY, 11412 (US); IJDO, Wouter Laurens, Yardley, PA, 19067 (US)
(74) Representative: HGF

(57) **Abstract**

A rheological additive comprising a polyurea is described. The polyurea is obtained or is obtainable from a reaction between (a) a linear C₂-C₁₂ alkylene diisocyanate and (b) at least one primary monoamine having an aliphatic side chain. Also disclosed are sealant formulations, adhesive formulations and processes for the manufacture of the rheological additives, sealant formulation and adhesive formulations.

## Description

### FIELD OF THE INVENTION

The invention relates to rheological additives, particularly rheological additives for use in sealant or adhesive formulations. The invention also relates to sealant formulations, adhesive formulations and to processes for the manufacture of the rheological additives, sealant formulation and adhesive formulations.

### BACKGROUND

Sealants and adhesives may be formulated as viscous materials that have little flow characteristic and therefore do not slump or sag much when applied. Other applications call for formulations that are quite fluid to allow for penetration into the material to which they are applied.

Sealants and adhesives formulated with chemically reactive polymers have become prevalent and particularly those polymers that have reactive alkoxysilyl groups are useful as these can cure with ambient air humidity or water. Silyl modified polyether (MS polymer), or silyl modified polyurethane (SPUR), as well as silyl modified acrylate polymers have become very popular. Wacker Chemie^{™} (GENIOSIL^{™}), as well as Kaneka^{™} (MS polymer) have commercially available silane modified polymers used in bonding and sealing applications.

Other chemically reactive sealant systems are based on silicone, polyurethane or polysulfide chemistry. Additives such as plasticizers, moisture scavenger, UV stabilizers, curing catalysts as well as fillers are added to the formulation to further optimize performance characteristics such as cure speed, flexibility, stability on aging and cost for instance.

The rheology of the adhesive or sealant formulation may need to be adjusted to control properties such as viscosity, anti-sag or slump, extrudability, ease of application etc. Organic thixotropes and organoclay rheological additives are primarily used in non-transparent systems.

Fumed silica is often utilized to adjust the rheology in transparent based crosslinking systems. There are some significant downsides to using fumed silica. The material has a low apparent density, and this means higher transportation costs and more storage space. In addition, the fumed silica needs to be dispersed into the sealant polymer under high shear mixing and incorporation can take a lot of time in view of the fluffy nature of this additive. Hang up and incomplete dispersion can take away clarity quickly and fumed silica thickened systems are often a little hazy.

### SUMMARY OF THE INVENTION

The invention provides a rheological additive for use in the manufacture of a sealant or an adhesive. It has surprisingly been found that a polyurea or a mixture of polyureas can address the problems associated with using fumed silica as a rheological additive, particularly in a sealant formulation or an adhesive formulation.

A first aspect of the invention provides a rheological additive comprising a polyurea or a mixture of polyureas. The first aspect of the invention also provides a process for the manufacture of the rheological additive.

In the first aspect, the polyurea is obtained or is obtainable from a reaction between (a) a diisocyanate and (b) at least one primary monoamine having an aliphatic side chain.

The process for the manufacture of a rheological additive comprises preparing a polyurea by reacting (a) a diisocyanate with (b) at least one primary monoamine having an aliphatic side chain.

In the first aspect, the diisocyanate is represented by formula (D):

OCN R¹-N-CO (D)

wherein R¹ is a linear C₂-C₁₂ alkylene group.

In the first aspect, the or each primary monoamine (e.g. of the at least one primary monoamine) has an aliphatic side chain. Each primary monoamine may be the same or different (e.g. when there is a plurality primary monoamines). The aliphatic side chain comprises or, when there is a plurality of primary monoamines, each aliphatic side chain independently comprises:
(i) an end group independently selected from C₁-C₂₀ alkyl, C₁-C₂₀ alkoxy and a silicon-containing group represented by formula (S):

   R^{a}_{q}(R^{b}O)_{3-q}Si- (S)

   wherein:
   each R^{a} is independently selected from C₁-C₄ alkyl, C₆-C₁₀ aryl and C₆-C₁₀ aryl-C₁-C₄ alkyl,
   each R^{b} is independently selected from C₁-C₄ alkyl, C₆-C₁₀ aryl and C₆-C₁₀ aryl-C₁-C₄ alkyl, and
   q is an integer of 0 to 3; and
(ii) a linker group between the end group and a primary amine group of the primary monoamine, wherein the linker group is either a single bond or one or more units selected from oxy-C₁-C₆-alkylene, amino-C₁-C₆-alkylene and a combination thereof; and
   optionally
(iii) a C₁-C₈ alkylene group between the linker group and the primary amine group;
   with the proviso that the linker group can be a single bond only when the end group is a silicon-containing group represented by formula (S).

In the first aspect of the invention, the rheological additive may comprise a polyurea represented by formula (P1): 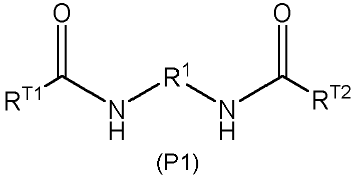 wherein:
R¹ is a linear C₂-C₁₂ alkylene group;
R^{T1} and R^{T2} are the same or different, and each of R^{T1} and R^{T2} is independently represented by formula (T):

   E¹-G¹-R²-NH-^{#} (T)

   wherein:
   each R² is independently a single bond or a C₁-C₈ alkylene group;
   each G¹ is independently a single bond or one or more units selected from oxy-C₁-C₆-alkylene, amino-C₁-C₆-alkylene and a combination thereof;
   each E¹ is independently selected from the group consisting of C₁-C₂₀ alkyl, C₁-C₂₀ alkoxy and a silicon-containing group represented by formula (S):

      R^{a}_{q}(R^{b}O)_{3-q}Si- (S)

      wherein:
   each R^{a} is independently selected from C₁-C₄ alkyl, C₆-C₁₀ aryl and C₆-C₁₀ aryl-C₁-C₄ alkyl;
   each R^{b} is independently selected from C₁-C₄ alkyl, C₆-C₁₀ aryl and C₆-C₁₀ aryl-C₁-C₄ alkyl; and
   each q is independently an integer of 0 to 3;
      with the provisos that:
      - G¹ and R² are not both single bonds;
      - E¹, G¹ and R² of each R^{T1} and R^{T2} are selected such that R^{T1} and R^{T2} do not have an oxygen-oxygen bond, an oxygen-nitrogen bond or a nitrogen-nitrogen bond; and
      - when E¹ is C₁-C₂₀ alkyl and R² is a C₁-C₈ alkylene group, then G¹ is not a single bond.

In formula (T) above, the hash (#) indicates the position at which the nitrogen atom of the NH group bonds to a carbonyl group in formula (P1).

The polyurea that is obtained or is obtainable from the reaction between (a) a diisocyanate and (b) at least one primary amine having an aliphatic side chain may be represented by formula (P1) as described herein.

It has surprisingly been found that a polyurea of the invention can provide a rheological additive for use in an adhesive or sealant formulation. The polyurea is derived from a linear alkylene di-isocyanate monomer and can provide comparable or superior rheological properties to fumed silica, while avoiding the disadvantages associated with this material. As mentioned above, the disadvantages of fumed silica are that it can be problematic to disperse and incorporate into a sealant or an adhesive formulation, with incomplete dispersion affecting the clarity of the final product, as well as being expensive to transport and store because of its low apparent density. The properties of the polyurea can be adjusted to control sealant properties such as viscosity, anti-sag or slump, extrudability, ease of application etc. for formulating adhesive or sealant formulations, particularly transparent systems.

A second aspect of the invention provides a rheological additive comprising a polyurea or a mixture of polyureas. The second aspect of the invention also provides a process for the manufacture of the rheological additive.

In the second aspect, the polyurea or the mixture of polyureas is obtained or is obtainable from a reaction between (a) a diisocyanate, (b) at least one primary monoamine having an aliphatic side chain and (c) a diamine having two primary amine groups or a triamine having three primary amine groups.

In the second aspect, the process for the manufacture of a rheological additive comprises preparing a polyurea or a mixture of polyureas by reacting (a) a diisocyanate, (b) at least one primary monoamine having an aliphatic side chain and (c) a diamine having two primary amine groups or a triamine having three primary amine groups.

In the second aspect, the diisocyanate is represented by formula (D):

OCN-R¹-NCO (D)

wherein R¹ is a linear C₂-C₁₂ alkylene group.

In the second aspect, the or each primary monoamine (e.g. of the at least one primary monoamine) has an aliphatic side chain. Each primary monoamine may be the same or different (e.g. when there is a plurality primary monoamines). The aliphatic side chain comprises, or when there is a plurality of primary monoamines, each aliphatic side chain independently comprises:
(i) an end group independently selected from C₁-C₂₀ alkyl, C₁-C₂₀ alkoxy and a silicon-containing group represented by formula (S):

   R^{a}_{q}(R^{b}O)_{3-q}Si- (S)

   wherein:
   each R^{a} is independently selected from C₁-C₄ alkyl, C₆-C₁₀ aryl and C₆-C₁₀ aryl-C₁-C₄ alkyl,
   each R^{b} is independently selected from C₁-C₄ alkyl, C₆-C₁₀ aryl and C₆-C₁₀ aryl-C₁-C₄ alkyl, and
   q is an integer of 0 to 3; and
(ii) a linker group between the end group and a primary amine group of the primary monoamine, wherein the linker group is either a single bond or one or more units selected from oxy-C₁-C₆-alkylene, amino-C₁-C₆-alkylene and a combination thereof; and
   optionally
(iii) a C₁-C₈ alkylene group between the linker group and the primary amine group;
   with the proviso that the linker group is a single bond only when the end group is a silicon-containing group represented by formula (S).

In the second aspect, the two primary amine groups (e.g. of the primary diamine) are linked by an aliphatic linker group and the three primary amine groups (e.g. of the primary triamine) are linked by an aliphatic linker group, wherein the aliphatic linker group (e.g. of the diamine and the triamine) comprises a group selected from a poly(oxy-C₁-C₆-alkylene) group, a mono(oxy-C₁-C₆-alkylene) group, a poly(amino-C₁-C₆-alkylene) group and a mono(amino-C₁-C₆-alkylene) group.

In the second aspect of the invention, the rheological additive may comprise a polyurea having a structure comprising:
(a) at least one backbone group, wherein each backbone group is independently represented by formula (U): 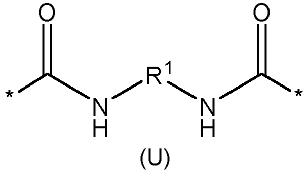 wherein:
   each R¹ is a linear C₂-C₁₂ alkylene group; and
   each backbone group is bonded at a position represented by an asterisk in formula (U) to either a terminal group represented by formula (T) or a linker group represented by formula (L1) or formula (L2);
(b) at least two terminal groups, wherein each terminal group is independently represented by formula (T):

   E¹-G¹-R²-NH-^{#} (T)

   wherein:
   each R² is independently a single bond or a C₁-C₈ alkylene group;
   each G¹ is independently a single bond or one or more units selected from oxy-C₁-C₆-alkylene, amino-C₁-C₆-alkylene and a combination thereof;
   each E¹ is independently selected from the group consisting of C₁-C₂₀ alkyl, C₁-C₂₀ alkoxy and a silyl group represented by formula (S):

      Ra(R^{b}O)_{3-q}Si- (S)

      wherein:
      each R^{a} is independently selected from C₁-C₄ alkyl, C₆-C₁₀ aryl and C₆-C₁₀ aryl-C₁-C₄ alkyl;
      each R^{b} is independently selected from C₁-C₄ alkyl, C₆-C₁₀ aryl and C₆-C₁₀ aryl-C₁-C₄ alkyl;
      each q is independently an integer of 0 to 3;
   with the provisos that:
      - G¹ and R² are not both single bonds;
      - E¹, G¹ and R² of each terminal group is selected such that the terminal group does not have an oxygen-oxygen bond, an oxygen-nitrogen bond or a nitrogen-nitrogen bond; and
      - when E¹ is C₁-C₂₀ alkyl and R² is a C₁-C₈ alkylene group, then G¹ is not a single bond;and
   each terminal group is bonded at a position represented by a hash (#) in formula (T) to a backbone group represented by formula (U) at a position represented by an asterisk (*); and
(c) a linker group, wherein each linker group is independently represented by formula (L1) or formula (L2):

   ^{#}-NH-R⁴-G²-R³-NH-^{#} (L1)

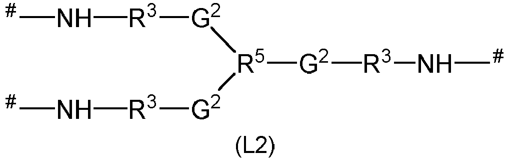

   wherein:
   each R³ is independently a single bond or a C₁-C₈ alkylene group;
   each R⁴ is independently a single bond or a C₁-C₈ alkylene group;
   each G² is the same or different and is independently selected from a poly(oxy-C₁-C₆-alkylene) group, a mono(oxy-C₁-C₆-alkylene) group, a poly(amino-C₁-C₆-alkylene) group and a mono(amino-C₁-C₆-alkylene) group;
   each R⁵ is independently selected from a nitrogen atom and a linear or branched C₁-C₁₂ hydrocarbyl group;
   with the provisos that:
   - in formula (L1), R³ and R⁴ are not both single bonds;
   - in formula (L1), G², R³ and R⁴ are selected such that the linker group represented by formula (L1) does not have an oxygen-oxygen bond, an oxygen-nitrogen bond or a nitrogen-nitrogen bond;
   - in formula (L2), when R⁵ is a nitrogen atom, then each R³ is independently a C₁-C₈ alkylene group; and
   - in formula (L2), when R⁵ is a linear or branched C₁-C₁₂ hydrocarbyl group, then each G² and R³ are selected such that the linker group represented by formula (L2) does not have an oxygen-oxygen bond, an oxygen-nitrogen bond or a nitrogen-nitrogen bond; and
      each linker group is bonded at a position represented by a hash (#) in formula (L1) or formula (L2) to a backbone group represented by formula (U) at a position represented by an asterisk (*); and
      wherein at least one linker group is bonded at a position represented by a hash (#) in formula (L1) or formula (L2) to a backbone group represented by formula (U) at a position represented by an asterisk (*).

The polyurea or the mixture of polyureas obtained or obtainable from the reaction between (a) a diisocyanate, (b) at least one primary monoamine having an aliphatic side chain and (c) a diamine having two primary amine groups or a triamine having three primary amine groups may be a polyurea having a structure comprising the (a) at least one backbone group, (b) at least two terminal groups and (c) a linker group, as described above.

The second aspect of the invention differs from the first aspect of the invention in that a diamine or a triamine is used to prepare the polyurea or the mixture of polyureas. The second aspect of the invention embraces all features of the first aspect of the invention as disclosed herein, unless the context indicates otherwise.

When a diamine or triamine is used to prepare a polyurea from a linear alkylene di-isocyanate monomer, it is possible to further control the rheological properties of the rheological additive. The presence of one or more moieties in the polyurea that are derived from a diamine or triamine can provide increased viscosity, as well as providing excellent anti-sag properties and decreased slump. A relatively minor amount of diamine can have significant effects. Higher amounts are not desirable. Danger of reactor gelling exists when incorporating triamines during polyurea preparation.

It was unexpectedly found that a rheological additive including a polyurea produced from a linear alkylene di-isocyanate and either a diamine or triamine can provide a sealant or an adhesive having excellent transparency and decreased turbidity. In fact, the sealant or the adhesive may show significantly improved transparency and turbidity compared to conventional sealants and adhesives, such as those including fumed silica as a rheological additive.

A third aspect of the invention provides a rheological additive comprising a polyurea or a mixture of polyureas. The third aspect of the invention also provides a process for the manufacture of the rheological additive.

In the third aspect, the polyurea is obtained or is obtainable from a method comprising: (1) reacting a first primary monoamine with a monouretdione to produce a polyurea intermediate; and (2) reacting the polyurea intermediate with a second amine to produce the polyurea.

The process for the manufacture of a rheological additive comprises preparing a polyurea by: (1) reacting a first primary monoamine with a monouretdione to produce a polyurea intermediate; and (2) reacting the polyurea intermediate with a second amine to produce the polyurea.

In the third aspect, the first primary monoamine has an aliphatic side chain, wherein the aliphatic side chain comprises:
(i) an end group independently selected from C₁-C₂₀ alkyl, C₁-C₂₀ alkoxy and a silicon-containing group represented by formula (S):

   R^{a}_{q}(R^{b}O)_{3-q}Si- (S)

   wherein:
   each R^{a} is independently selected from C₁-C₄ alkyl, C₆-C₁₀ aryl and C₆-C₁₀ aryl-C₁-C₄ alkyl,
   each R^{b} is independently selected from C₁-C₄ alkyl, C₆-C₁₀ aryl and C₆-C₁₀ aryl-C₁-C₄ alkyl, and
   q is an integer of 0 to 3; and
(ii) a linker group between the end group and a primary amine group of the primary monoamine, wherein the linker group is either a single bond or one or more units selected from oxy-C₁-C₆-alkylene, amino-C₁-C₆-alkylene and a combination thereof; and
   optionally
(iii) a C₁-C₈ alkylene group between the linker group and the primary amine group;
   with the proviso that the linker group is a single bond only when the end group is a silicon-containing group represented by formula (S).

The monouretdione is represented by formula (J): 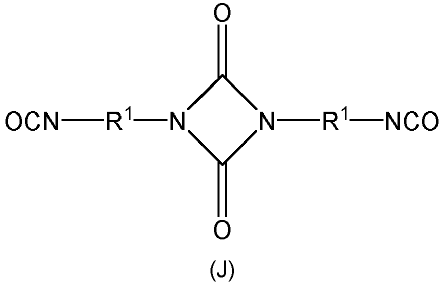 wherein R¹ is a linear C₂-C₁₂ alkylene group.

In the third aspect, the second amine is either:
(a) a second primary monoamine having an aliphatic side chain comprising:
   (i) an end group selected from C₁-C₂₀ alkyl, C₁-C₂₀ alkoxy and a silicon-containing group represented by formula (S2):

      R^{a'}ₓ(R^{b'}O)₃₋ₓSi- (S2)

      wherein:
      each R^{a} is independently selected from C₁-C₄ alkyl, C₆-C₁₀ aryl and C₆-C₁₀ aryl-C₁-C₄ alkyl,
      each R^{b} is independently selected from C₁-C₄ alkyl, C₆-C₁₀ aryl and C₆-C₁₀ aryl-C₁-C₄ alkyl, and
      x is an integer of 0 to 3; and
   (ii) a linker group between the end group and a primary amine group of the primary monoamine, wherein the linker group is either a single bond or one or more units selected from oxy-C₁-C₆-alkylene, amino-C₁-C₆-alkylene and a combination thereof; and optionally
   (iii) a C₁-C₈ alkylene group between the linker group and the primary amine group;
   with the proviso that the linker group is a single bond only when the end group is a silicon-containing group represented by formula (S2); or
(b) a diamine having two primary amine groups linked by an aliphatic linker group or a triamine having three primary amine groups linked by an aliphatic linker group, wherein the aliphatic linker group (e.g. of the diamine and the triamine) comprises a group selected from a poly(oxy-C₁-C₆-alkylene) group, a mono(oxy-C₁-C₆-alkylene) group, a poly(amino-C₁-C₆-alkylene) group and a mono(amino-C₁-C₆-alkylene) group.

A fourth aspect of the invention provides a sealant or an adhesive (also referred to herein as a sealant formulation or an adhesive formulation, respectively). The sealant or adhesive comprises a rheological additive of any one of the first to third aspects of the invention.

The fourth aspect of the invention also provides a process for the manufacture of the sealant or adhesive. The process comprises mixing a rheological additive of any one of the first to third aspects of the invention with at least one of a resin, a plasticizer, a moisture scavenger or a curing catalyst, such as described below. It is preferred that the rheological additive is mixed with a resin, a plasticizer or a curing catalyst.

A fifth aspect of the invention relates to the use of a polurea or a mixture of polyureas as a rheological additive, preferably in or for a sealant or an adhesive. The polyurea or the mixture of polyureas is as defined in any one of the first to third aspects of the invention.

### DETAILED DESCRIPTION

The following definitions apply to the disclosure herein, including all aspects of the invention and their embodiments.

The compounds and intermediates described herein may be named according to the IUPAC (International Union for Pure and Applied Chemistry) or the CAS (Chemical Abstracts Service) nomenclature systems or by their commercial trade names. It should also be understood that any reference to a compound described herein, such as a polyurea, a primary monoamine, a diamine or a triamine, encompasses all stereoisomers (e.g. cis and trans isomers) and/or optical isomers (e.g. R and S enantiomers) of such compounds, in substantially pure form and/or any mixtures of the foregoing in any ratio.

As used herein by itself or in conjunction with another term or terms, "substituted" indicates that a hydrogen atom on a molecule has been replaced with a different atom or group of atoms. The atom or group of atoms replacing the hydrogen atom is a "substituent." It should be understood that the terms "substituent", "substituents", "moiety", "moieties", "group", or "groups" refer to substituent(s).

The term "polyurea" as used herein refers to a compound having two or more urea groups (e.g. -NHC(O)NH-). In other words, the term "polyurea" embraces a bis-urea compound, a tris-urea compound, a tetrakis-urea compound and so on. Thus, the polyurea compound may be a bis-urea compound. The polyurea compound may be a tris-urea compound. The polyurea compound may be a tetrakis-urea compound.

The term "aliphatic" as used herein refers to a compound or a group, such as a side chain, comprising one or more saturated carbon atoms and/or two or more unsaturated carbon atoms, but does not include an aromatic group or compound. In other words, the term "aliphatic" does not include aromatic groups or substituents, unless the context indicates otherwise.

The various hydrocarbon-containing moieties provided herein may be described using a prefix designating the minimum and maximum number of carbon atoms in the moiety, namely "Cₐ-C_{b}". For example, Cₐ-C_{b} alkyl indicates an alkyl moiety having the integer "a" to the integer "b" number of carbon atoms, inclusive.

The term "alkylene" refers to a branched or unbranched (e.g. linear) saturated hydrocarbon chain, unless specified otherwise. An alkylene group is typically unsubstituted, unless indicated otherwise. An alkylene group typically has 1 to 12 carbon atoms, such as 2 to 10 carbon atoms or 4 to 8 carbon atoms. Representative examples include, but are not limited to, methylene, ethylene (e.g. -CH(CH₃)- and -CH₂CH₂-), propylene (e.g. - CH(CH₃)CH₂- and -CH₂CH₂CH₂-) etc.

As used herein, the term "alkyl", whether used alone or in conjunction with another term, refers to a branched or unbranched saturated hydrocarbon chain, unless specified otherwise. An alkyl group is typically unsubstituted, unless indicated otherwise. An alkyl group may have 1 to 20 carbon atoms, such as 1 to 12 carbon atoms, particularly 1 to 8 carbon atoms. Representative examples include, but are not limited to, methyl, ethyl, n-propyl, i-propyl, n-butyl, i-butyl, s-butyl, t-butyl, n-pentyl, n-hexyl, n-heptyl, n-octyl, n-nonyl, n-decyl, isopropyl, tert-butyl, isobutyl, etc.

As used herein, the term "aryl", whether used alone or in conjunction with another term, refers to phenyl and 7 to 10 membered ring systems in which at least one of the rings is aromatic. Ring systems may include bicyclic or tricyclic hydrocarbon ring systems, or bridged, spiro, and/or fused ring systems. An aryl group is unsubstituted unless specified otherwise. An aryl group may have 6 ring atoms (i.e. phenyl) or a ring system containing 7 to 10 atoms. Representative examples include, but are not limited to, naphthyl, indanyl and 1,2,3,4-tetrahydronaphthalenyl. In general, it is preferred that an aryl group is either phenyl or naphthyl, more preferably phenyl.

As used herein, the terms "aryl-alkyl", "arylalkyl" or "arylalkyl group" refer to an alkyl group in which a hydrogen atom is replaced by an aryl group, wherein the alkyl group and the aryl group are as previously defined. An example is C₆-C₁₀ aryl-C₁-C₄ alkyl, which includes benzyl (C₆H₅CH₂-). Aryl-alkyl groups are typically unsubstituted.

As used herein, the term "alkoxy" refers to an alkyl-oxy group, wherein the alkyl group is as previously defined. An alkoxy group is typically unsubstituted, unless specified otherwise. Representative examples include -OMe, -OEt, -OⁿPr, -OⁱPr.

The term "hydrocarbyl" as used herein refers to a branched or unbranched (e.g. linear) saturated hydrocarbon chain, unless specified otherwise. The hydrocarbyl group may be bonded by the same or a different carbon atom to a plurality of adjacent groups, as indicated by the content (e.g. a formula including a hydrocarbyl group). A hydrocarbyl group is typically unsubstituted, unless indicated otherwise. A hydrocarbyl group typically has 1 to 12 carbon atoms, such as 2 to 10 carbon atoms or 4 to 8 carbon atoms.

The term "primary monoamine" as used herein refers to a compound having a single primary amine group (e.g. R-NH₂). The single primary amine group is attached to a side chain (i.e. the R group in R-NH₂), which is not hydrogen. In general, the nitrogen atom of the amine group is directly bonded to a carbon atom of the side chain. The side chain may include heteroatoms, such as oxygen and/or nitrogen, preferably oxygen.

The expression "diamine having two primary amine groups" as used herein refers to a compound having only two primary amine groups. The two primary amine groups are typically linked by an aliphatic linker group. In general, the nitrogen atom of each amine group is directly bonded to a carbon atom in the aliphatic linker group. Typically, the nitrogen atom of one amine group is directly bonded to a carbon atom in the aliphatic linker group that is different to a carbon atom in the aliphatic linker group to which the other nitrogen atom of the other amine group is directly bonded. The aliphatic linker group may include heteroatoms, such as oxygen and/or nitrogen, preferably oxygen.

The expression "triamine having three primary amine groups" as used herein refers to a compound having only three primary amine groups. The three primary amine groups are typically linked by an aliphatic linker group. In general, the nitrogen atom of each amine group is directly bonded to a carbon atom in the aliphatic linker group. Typically, the nitrogen atom of one amine group is directly bonded to a carbon atom in the aliphatic linker group that is different to the carbon atoms in the aliphatic linker group to which the other nitrogen atoms of the other amine groups are directly bonded. In other words, none of the primary amine groups are bonded to the same carbon atom. The aliphatic linker group may include heteroatoms, such as oxygen and/or nitrogen, preferably oxygen.

The term "oxyalkylene" as used herein refers to an alkylene group, as previously defined, having a single terminal oxy group (e.g. -O-). The hydrocarbon chain of the oxyalkylene group may be branched or unbranched (e.g. linear), unless specified otherwise. An oxyalkylene group is typically unsubstituted, unless indicated otherwise. The bonding orientation of the oxyalkylene group is not limited. Thus, when the term "oxyalkylene" is used, then the oxyalkylene group may be bonded to another atom, group or moiety by either a carbon atom of the alkylene group or the oxygen atom. The term "oxyalkylene" embraces the term "alkylene-oxy" because neither term limits the bonding orientation of the group, unless specifically indicated otherwise.

In general, each oxyalkylene group is an oxy-C₁-C₆-alkylene group, preferably an oxy-C₂-C₆-alkylene group, more preferably an oxy-C₂-C₄-alkylene group. Representative examples include oxyethylene (e.g. -OCH(CH₃)-, -OCH₂CH₂- and -CH₂CH₂O-), oxypropylene (e.g. -OCH(CH₃)CH₂-, -CH(CH₃)CH₂O-, -OCH₂CH₂CH₂- and - CH₂CH₂CH₂O-) etc. The term "oxyethylene" is synonymous with the term "ethylene-oxy". The term "oxypropylene" is synonymous with the term "propylene-oxy", and so on.

The term "mono(oxyalkylene)" as used herein refers to a single oxyalkylene group as previously defined. As indicated by the word "mono", this oxyalkylene group is not directly bonded to an adjacent oxyalkylene group, unless indicated otherwise.

The term "poly(oxyalkylene)" as used herein refers to a plurality of (e.g. two or more) oxyalkylene groups bonded in series to one another. Thus, a first oxyalkylene group is directly bonded to a second oxyalkylene group, with the second oxyalkylene group being directly bonded to a third oxyalkylene group and so on. The number of oxyalkylene groups in the poly(oxyalkylene) group is not limited, unless specified otherwise.

In general, each oxyalkylene moiety in the poly(oxyalkylene) group may be the same or different. The poly(oxyalkylene) group may, for example, be a random copolymer, an alternating copolymer, a block copolymer or a homopolymer. The alternating copolymer may comprise, or consist essentially of, a first oxyalkylene group and a second oxyalkylene group. The block copolymer may comprise, or consist essentially of, a first homopolymer subunit (e.g. a first block) of a first oxyalkylene group and a second homopolymer subunit (e.g. a second block) of a second oxyalkylene group. In the alternating copolymer and the block copolymer, the first and second oxyalkylene groups are different.

Typically, the poly(oxyalkylene) group is a poly(oxy-C₁-C₆-alkylene) group, preferably a poly(oxy-C₂-C₆-alkylene group), more preferably a poly(oxy-C₂-C₄-alkylene) group.

As a general feature relating to all references to the term "oxyalkylene" described herein, including the terms "oxyethylene", "oxypropylene", "mono(oxyalkylene)" and "poly(oxyalkylene)", the oxygen atom or the oxy moiety of the or each oxyalkylene group is directly bonded to an atom of an adjacent group that is not a heteroatom (e.g. an oxygen atom or a nitrogen atom). Thus, the oxygen atom or the oxy moiety of the or each oxyalkylene group may be directly bonded to a carbon atom or a silicon atom of an adjacent group. For example, in a poly(oxyalkylene) group, the oxygen atom of a first oxyalkylene group is directly bonded to a carbon atom of an adjacent, second oxyalkylene group.

The term "aminoalkylene" as used herein refers to an alkylene group, as previously defined, having a single, terminal secondary amino group (e.g. -NH-). Thus, the term "aminoalkylene" is synonymous with the term "secondary aminoalkylene". The hydrocarbon chain of the aminoalkylene group may be branched or unbranched (e.g. linear), unless specified otherwise. An aminoalkylene group is typically unsubstituted, unless indicated otherwise. The bonding orientation of the aminoalkylene group is not limited. Thus, when the term "aminoalkylene" is used, then the aminoalkylene group may be bonded to another atom, group or moiety by either a carbon atom of the alkylene group or the nitrogen atom. The term "aminoalkylene" embraces the term "alkylene-amino" because neither term limits the bonding orientation of the group, unless specifically indicated otherwise. The term "alkylene-amino" is synonymous with the term "alkylene-secondary amino".

In general, each aminoalkylene group is an amino-C₁-C₆-alkylene group, preferably an amino-C₂-C₆-alkylene group, more preferably an amino-C₂-C₄-alkylene group. Representative examples include aminoethylene (e.g. -NHCH(CH₃)-, -NHCH₂CH₂- and - CH₂CH₂NH-), aminopropylene (e.g. -NHCH(CH₃)CH₂-, -CH(CH₃)CH₂NH-, - NHCH₂CH₂CH₂- and -CH₂CH₂CH₂NH-) etc. The term "aminoethylene" is synonymous with the terms "secondary aminoethylene", "ethylene-amino" or "ethylene-secondary amino". The term "aminopropylene" is synonymous with the terms "secondary aminopropylene", "propylene-amino" or "propylene-secondary amino".

The term "mono(aminoalkylene)" as used herein refers to a single aminoalkylene group as previously defined. As indicated by the word "mono", this aminoalkylene group is not directly bonded to an adjacent aminoalkylene group, unless indicated otherwise. The term "mono(aminoalkylene)" is synonymous with the term "mono(secondary aminoalkylene)".

The term "poly(aminoalkylene)" as used herein refers to a plurality (e.g. two or more) of aminoalkylene groups bonded in series to one another. Thus, a first aminoalkylene group is directly bonded to a second aminoalkylene group, with the second aminoalkylene group being directly bonded to a third aminoalkylene group and so on. The number of aminoalkylene groups in the poly(aminoalkylene) group is not limited, unless specified otherwise. The term "poly(aminoalkylene)" is synonymous with the term "poly(secondary aminoalkylene)".

In general, each aminoalkylene moiety in the poly(aminoalkylene) group may be the same or different. The poly(aminoalkylene) group may, for example, be an alternating copolymer, a block copolymer or a homopolymer. The alternating copolymer may comprise, or consist essentially of, a first aminoalkylene group and a second aminoalkylene group. The block copolymer may comprise, or consist essentially of, a first homopolymer subunit (e.g. a first block) of a first aminoalkylene group and a second homopolymer subunit (e.g. a second block) of a second aminoalkylene group. In the alternating copolymer and the block copolymer, the first and second aminoalkylene groups are different.

Typically, the poly(aminoalkylene) group is a poly(amino-C₁-C₆-alkylene) group, preferably a poly(amino-C₂-C₆-alkylene group), more preferably a poly(amino-C₂-C₄-alkylene) group.

As a general feature relating to all references to the term "aminoalkylene" described herein, including the terms "aminoethylene", "aminopropylene", "mono(aminoalkylene)" and "poly(aminoalkylene)", the nitrogen atom of the or each aminoalkylene group is directly bonded to an atom of an adjacent group that is not a heteroatom (e.g. an oxygen atom or a nitrogen atom). Thus, the nitrogen atom of the or each aminoalkylene group may be directly bonded to a carbon atom or a silicon atom of an adjacent group. For example, in a poly(aminoalkylene) group, the nitrogen atom of a first aminoalkylene group is directly bonded to a carbon atom of an adjacent, second aminoalkylene group.

The expression "direct bond" or "directly attached" as used herein means that a group, moiety or substituent is adjacent (i.e. immediately adjacent) and covalently bonded to an atom of another group, moiety or substituent. Put another way, there is no intervening atom, group, moiety or substituent.

The term "room temperature" as used herein refers to a temperature of about 20°C.

The terms "first", "second" and so on are used herein as labels to distinguish features, such as the primary monoamine, the polyurea etc, from one another. Any reference to, for example, a "second" feature does not require the presence of a "first" feature, unless the context indicates otherwise.

The term "average" as used herein in the context of the number-average molecular weight (Mₙ) and the weight-average molecular weight (M_{w}) is the mean. The number-average molecular weight (Mₙ) and the weight-average molecular weight (M_{w}) can be determined by conventional methods, such as gel permeation chromatography (GPC) using, for example, polystyrene as a standard.

The expression "water content" as used herein refers to the total amount of water in a composition. The water content may be measured by Karl Fischer titration using either coulometric titration or volumetric titration.

The term "activation" as used herein, particularly in relation to the rheological additive, refers to a transformation where the polyurea is physically transformed into a form which imparts changed rheological behaviour (e.g. thixotropic behaviour) to the formulation. The physical transformation may be from a powder like material to dispersed material with rheological activity. Temperature or other forms of energy input can facilitate this activation.

The term "rheological additive" as used herein refers to a composition comprising, or consisting essentially of, a polyurea or a mixture of polyureas as described herein. The rheological additive is included as an ingredient in another composition to control its rheological properties. It may be necessary to activate the rheological additive, either before or after it is added as an ingredient to another composition, to achieve the desired rheological properties.

The expressions "transparency" or "transparent" as used refers to a composition having a % transparency of at least 70%, as determined according to ASTM 1746-70, typically measuring transmittance at 550 nm wavelength (e.g. for 5 seconds). The term "transparent" is informally used to refer to compositions that are clear, i.e. a near complete absence of color or cloudiness. The term "translucent" refers to compositions that are transparent to a degree (e.g. a % transparency of just under 70%), but visibility on the other side is somewhat cloudy and blurred.

Amounts of a material, such as a compound, composition or an ingredient, are typically defined in terms of the wt% of the composition.

The term "about" when used herein in conjunction with a measurable value, such as transparency, turbidity or slump, encompasses reasonable variations of the value, for instance, to allow for experimental error in the measurement of said value.

For the avoidance of doubt, the expression "consists essentially of" as used herein limits the scope of a feature to include the specified materials, and any other materials or steps that do not materially affect the basic and novel characteristics of that feature, such as, for example, minor impurities. The expression "consists essentially of' embraces the expression "consisting of".

### Diisocyanate

In each of the first and second aspects of the invention, the diisocyanate is represented by formula (D):

OCN-R¹-NCO (D)

wherein R¹ is a linear C₂-C₁₂ alkylene group. For the avoidance of doubt, R¹ is an unsubstituted linear C₂-C₁₂ alkylene group. The diisocyanate referred to in this section of the disclosure is the first diisocyanate in the third aspect of the invention.

The diisocyanate may be selected from 1,2-diisocyanatoethane, 1,3-diisocyanatopropane, 1,4-diisocyanatobutane, 1,5-diisocyanatopentane, 1,6-diisocyanatohexane, 1,7-diisocyanatoheptane, 1,8-diisocyanatooctane, 1,9-diiso-cyanatononane, 1,10-diisocyanatodecane, 1,11-diisocyanatoundecane and 1,12-diisocyanatododecane. It is preferred that the diisocyanate is selected from 1,4-diiso-cyanatobutane, 1,5-diisocyanatopentane, 1,6-diisocyanatohexane, 1,7-diiso-cyanatoheptane and 1,8-diisocyanatooctane, more preferably the diisocyanate is 1,6-diisocyanatohexane.

In formula (D), it is preferred that R¹ is a linear C₄-C₈ alkylene group, more preferably R¹ is a linear C₆ alkylene group.

The advantageous rheological properties of the additive are associated with the use of a linear C₂-C₁₂ alkylene di-isocyanate monomer, especially a linear C₄-C₈ alkylene group, in combination with certain amines that are used to prepare the polyurea or mixture of polyureas.

### Primary monoamine

The primary monoamine referred to in this section of the disclosure is the primary monoamine in each of the first to third aspects of the invention, including the first and second primary monoamines of the third aspect of the invention.

A general feature of the primary monoamine is that it has at least one oxygen, nitrogen or silicon atom in the aliphatic side chain directly bonded to the nitrogen atom of the primary amine group.

The at least one primary monoamine has an aliphatic side chain comprising:
(i) an end group selected from C₁-C₂₀ alkyl, C₁-C₂₀ alkoxy and a silicon-containing group represented by formula (S):

   R^{a}_{q}(R^{b}O)_{3-q}Si- (S)

   wherein:
   each R^{a} is independently selected from C₁-C₄ alkyl, C₆-C₁₀ aryl and C₆-C₁₀ aryl-C₁-C₄ alkyl,
   each R^{b} is independently selected from C₁-C₄ alkyl, C₆-C₁₀ aryl and C₆-C₁₀ aryl-C₁-C₄ alkyl, and
   q is an integer of 0 to 3; and
(ii) a linker group between the end group and a primary amine group of the primary monoamine, wherein the linker group is either a single bond or one or more units selected from oxy-C₁-C₆-alkylene, amino-C₁-C₆-alkylene and a combination thereof; and optionally
(iii) a C₁-C₈ alkylene group between the linker group and the primary amine group;
   with the proviso that the linker group is a single bond only when the end group is a silicon-containing group represented by formula (S).

The linker group has a first end and a second end. The first end is a different end to the second end.

The linker group may be directly attached (e.g. directly bonded) to the end group. Thus, the end group is directly bonded to the first end of the linker group.

When a terminal atom at the first end of the linker group is an oxygen atom (e.g. of an oxy-C₁-C₆-alkylene group) or a nitrogen atom (e.g. of an amino-C₁-C₆-alkylene group), then it is preferred that the end group is selected from C₁-C₂₀ alkyl and the silicon-containing group represented by formula (S). The terminal atom (e.g. the oxygen atom or the nitrogen atom) at the first end of the linker group is directly bonded to a carbon atom (e.g. of the C₁-C₂₀ alkyl group) or to a silicon atom (e.g. of the silicon-containing group represented by formula (S)). The oxygen atom or the nitrogen atom of the first end of the linker group is preferably not bonded to an oxygen atom, such as when the end group is C₁-C₂₀ alkoxy.

The aliphatic side chain may optionally comprise a C₁-C₈ alkylene group.

The second end of the linker group may be directly bonded to a nitrogen atom of the primary amine group of the primary monoamine or to a carbon atom of the C₁-C₈ alkylene group.

When a terminal atom of the second end of the linker group is an oxygen atom (e.g. of an oxy-C₁-C₆-alkylene group) or a nitrogen atom (e.g. of an amino-C₁-C₆-alkylene group), then preferably the second end of the linker group is directly bonded to a carbon atom of the C₁-C₈ alkylene group. The terminal atom (e.g. the oxygen atom or the nitrogen atom) at the second end of the linker group is directly bonded to a carbon atom of the C₁-C₈ alkylene group.

The oxygen atom or the nitrogen atom of the second end of the linker group is preferably not bonded to a nitrogen atom of the primary amine group (e.g. of the primary monoamine).

When the aliphatic side chain comprises a C₁-C₈ alkylene group, then a carbon atom of the C₁-C₈ alkylene group may be directly bonded to the nitrogen atom of the primary amine group (e.g. of the primary monoamine). A carbon atom of the C₁-C₈ alkylene group may be directly bonded to the linker group, preferably to the second end of the linker group.

When a terminal atom of the second end of the linker group is a carbon atom, then preferably the second end of the linker group is directly bonded to the nitrogen atom of the primary amine group (e.g. of the primary monoamine) or to a carbon atom of the C₁-C₈ alkylene group.

The at least one primary monoamine having an aliphatic side chain may be represented by formula (A):

E¹-G¹-R²-NH₂ (A)

wherein:
each R² is independently a single bond or a C₁-C₈ alkylene group;
each G¹ is independently a single bond or one or more units selected from oxy-C₁-C₆-alkylene, amino-C₁-C₆-alkylene and a combination thereof;
each E¹ is independently selected from the group consisting of C₁-C₂₀ alkyl, C₁-C₂₀ alkoxy and a silicon-containing group represented by formula (S):

   R^{a}_{q}(R^{b}O)_{3-q}Si- (S)

   wherein:
each R^{a} is independently selected from C₁-C₄ alkyl, C₆-C₁₀ aryl and C₆-C₁₀ aryl-C₁-C₄ alkyl;
each R^{b} is independently selected from C₁-C₄ alkyl, C₆-C₁₀ aryl and C₆-C₁₀ aryl-C₁-C₄ alkyl;
each q is independently an integer of 0 to 3.

Each primary monoamine represented by formula (A) is subject to the following provisos or conditions:
- G¹ and R² are not both single bonds;
- E¹, G¹ and R² of each primary monoamine is selected such that the primary monoamine does not have an oxygen-oxygen bond, an oxygen-nitrogen bond or a nitrogen-nitrogen bond; and
- when E¹ is C₁-C₂₀ alkyl and R² is a C₁-C₈ alkylene group, then G¹ is not a single bond.

In formula (A), the aliphatic side chain is represented by E¹-G¹-R²-. The end group is represented by E¹. The linker group is represented by G¹. The C₁-C₈ alkylene group that may optionally be present in the aliphatic side chain is represented by R².

Both G¹ and R² cannot together be single bonds. Thus, when R² is a single bond, then G¹ is not a single bond. Similarly, when G¹ is a single bond, then R² is not a single bond. The primary amine of the at least one primary monoamine is not directly bonded to the end group E¹.

The or each primary monoamine represented by formula (A) does not have any oxygen-oxygen, oxygen-nitrogen or nitrogen-nitrogen bonds.

Typically, when G¹ is not a single bond (e.g. is one or more units selected from oxy-C₁-C₆-alkylene, amino-C₁-C₆-alkylene and a combination thereof) and a carbon atom of a unit in the one or more units of G¹ is directly bonded to E¹, then R² is a C₁-C₈ alkylene group. When one end of G¹ (e.g. the first end of G¹) is directly bonded by a carbon atom to E¹, then the other end of G¹ (e.g. the second end of G¹) is either an oxygen atom or a nitrogen atom. R² is a C₁-C₈ alkylene group to ensure that both the oxygen atom or the nitrogen atom at the second end of G¹ and the nitrogen atom of the NH₂ group shown in formula (A) are each bonded to a carbon atom (e.g. of the C₁-C₈ alkylene group).

When E¹ is C₁-C₂₀ alkoxy and G¹ is not a single bond (e.g. is one or more units selected from oxy-C₁-C₆-alkylene, amino-C₁-C₆-alkylene and a combination thereof), then one end of G¹ (e.g. the first end of G¹) is directly bonded by a carbon atom to E¹ (e.g. an oxygen atom of the C₁-C₂₀ alkoxy group).

Primary monoamines (e.g. represented by formula (A)) can be obtained commercially or prepared using known synthetic methods, such as the methods described in US 4,766,245 and US 5,540,337.

For the avoidance of doubt, it is preferred that each of the C₁-C₂₀ alkyl, C₁-C₂₀ alkoxy, C₁-C₄ alkyl, C₆-C₁₀ aryl and C₆-C₁₀ aryl-C₁-C₄ alkyl groups are unsubstituted.

The alkyl moiety in each of the C₁-C₂₀ alkyl, C₁-C₂₀ alkoxy, C₁-C₄ alkyl, C₆-C₁₀ aryl and C₆-C_{1O} aryl-C₁-C₄ alkyl groups may be linear or branched.

The end group of the at least one primary monoamine or each E¹ in formula (A) may be C₁-C₂₀ alkyl, preferably C₁-C₁₃ alkyl, such as C₁-C₁₂ alkyl, and more preferably C₁-Cs alkyl.

The end group of the at least one primary monoamine or each E¹ in formula (A) may be C₁-C₂₀ alkoxy, preferably C₁-C₁₃ alkoxy, such as C₁-C₁₂ alkoxy, and more preferably C₁-C₈ alkoxy, particularly C₁-C₄ alkoxy.

The end group of the at least one primary monoamine or each E¹ in formula (A) may be a silicon-containing group represented by formula (S). It is preferred that each R^{a} is independently selected from C₁-C₄ alkyl, phenyl and phenyl-C₁-C₄ alkyl; each R^{b} is independently selected from C₁-C₄ alkyl, phenyl and phenyl-C₁-C₄ alkyl; and each q is independently an integer of 0 to 3, such as 0, 1 or 2. More preferably, each R^{a} is independently selected from C₁-C₂ alkyl and phenyl; each R^{b} is independently selected from C₁-C₂ alkyl and phenyl; and each q is independently an integer of 0 to 3, such as 0, 1 or 2. Even more preferably, each R^{a} is independently C₁-C₂ alkyl; each R^{b} is independently from C₁-C₂ alkyl; and each q is independently an integer of 0 to 3, preferably 0, 1 or 2.

It may be advantageous for the end group or E¹ to be a silicon-containing group represented by formula (S). This group is hydrolysable, especially when q is an integer from 0 to 2, and can aid moisture curing of the rheological additive, when the end group is incorporated as part of a polyurea.

The linker group of the at least one primary monoamine and G¹ in formula (A) may be one or more units selected from oxy-C₁-C₆-alkylene, amino-C₁-C₆-alkylene and a combination thereof. The combination may be an (oxy-C₁-C₆-alkylene)-(amino-C₁-C₆-alkylene) group or an (amino-C₁-C₆-alkylene)-(oxy-C₁-C₆-alkylene) group. In the (oxy-C₁-C₆-alkylene)-(amino-C₁-C₆-alkylene) group, the nitrogen atom of the amino-C₁-C₆-alkylene moiety is bonded to a carbon atom of the oxy-C₁-C₆-alkylene moiety. In the (amino-C₁-C₆-alkylene)-(oxy-C₁-C₆-alkylene) group, the oxygen atom of the oxy-C₁-C₆-alkylene moiety is bonded to a carbon atom of the amino-C₁-C₆-alkylene moiety.

The linker group of the at least one primary monoamine and G¹ in formula (A) may have more than one unit, or a plurality of units (e.g. two or more units), selected from oxy-C₁-C₆-alkylene, amino-C₁-C₆-alkylene and a combination thereof. When there is more than one unit, it is preferred that the linker group and G¹ in formula (A) is selected from poly(oxy-C₁-C₆-alkylene) and poly(amino-C₁-C₆-alkylene).

It is generally preferred that the linker group of the at least one primary monoamine and G¹ in formula (A) is selected from a single bond, mono(oxy-C₁-C₆-alkylene), mono(amino-C₁-C₆-alkylene), an (oxy-C₁-C₆-alkylene)-(amino-C₁-C₆-alkylene) group, an (amino-C₁-C₆-alkylene)-(oxy-C₁-C₆-alkylene) group, poly(oxy-C₁-C₆-alkylene) and poly(amino-C₁-C₆-alkylene). More preferably, the linker group or G¹ is selected from a single bond, mono(oxy-C₁-C₆-alkylene), mono(amino-C₁-C₆-alkylene), poly(oxy-C₁-C₆-alkylene) and poly(amino-C₁-C₆-alkylene). It is further preferred that the linker group or G¹ is selected from a single bond, mono(oxy-C₁-C₆-alkylene), mono(amino-C₁-C₆-alkylene) and poly(oxy-C₁-C₆-alkylene). For example, the linker group or G¹ may be selected from mono(oxy-C₁-C₆-alkylene) and poly(oxy-C₁-C₆-alkylene).

The linker group of the at least one primary monoamine and G¹ in formula (A) may be one or more units selected from oxy-C₁-C₆-alkylene, amino-C₁-C₆-alkylene and a combination thereof.

The oxy-C₁-C₆-alkylene group is preferably an oxy-C₂-C₆-alkylene group, more preferably an oxy-C₂-C₄-alkylene group, particularly an oxy-C₂-C₃-alkylene group (e.g. oxy-ethylene or oxy-propylene), such as an oxy-C₂-alkylene group or an oxy-C₃-alkylene group, with the oxy-C₃-alkylene group being most preferred.

The amino-C₁-C₆-alkylene group is preferably an amino-C₂-C₆-alkylene group, more preferably an amino-C₂-C₄-alkylene group, particularly an amino-C₂-C₃-alkylene group (e.g. amino-ethylene or amino-propylene), such as an amino-C₂-alkylene group or an amino-C₃-alkylene group, with the amino-C₃-alkylene group being most preferred.

The combination of the oxy-C₁-C₆-alkylene group and the amino-C₁-C₆-alkylene group is preferably an (oxy-C₂-C₆-alkylene)-(amino-C₂-C₆-alkylene) group or an (amino-C₂-C₆-alkylene)-(oxy-C₂-C₆-alkylene) group, more preferably an (oxy-C₂-C₄-alkylene)-(amino-C₂-C₄-alkylene) group or an (amino-C₂-C₄-alkylene)-(oxy-C₂-C₄-alkylene) group, even more preferably an (oxy-C₂-C₃-alkylene)-(amino-C₂-C₃-alkylene) group or an (amino-C₂-C₃-alkylene)-(oxy-C₂-C₃-alkylene) group.

When the linker group of the at least one primary monoamine and G¹ in formula (A) has more than one unit, or a plurality of units (e.g. two or more units), then preferably the linker group and G¹ in formula (A) is selected from poly(oxy-C₂-C₆-alkylene) and poly(amino-C₂-C₆-alkylene), more preferably selected from poly(oxy-C₂-C₄-alkylene) and poly(amino-C₂-C₄-alkylene), and still more preferably selected from poly(oxy-C₂-C₃-alkylene) and poly(amino-C₂-C₃-alkylene).

It is generally preferred that the linker group of the at least one primary monoamine and G¹ in formula (A) is selected from a single bond, mono(oxy-C₂-C₃-alkylene), mono(amino-C₂-C₃-alkylene), an (oxy-C₂-C₃-alkylene)-(amino-C₂-C₃-alkylene) group, an (amino-C₂-C₃-alkylene)-(oxy-C₂-C₃-alkylene) group, poly(oxy-C₂-C₃-alkylene) and poly(amino-C₂-C₃-alkylene). More preferably, the linker group or G¹ is selected from a single bond, mono(oxy-C₂-C₃-alkylene), mono(amino-C₂-C₃-alkylene), poly(oxy-C₂-C₃-alkylene) and poly(amino-C₂-C₃-alkylene). It is further preferred that the linker group or G¹ is selected from a single bond, mono(oxy-C₂-C₃-alkylene), mono(amino-C₂-C₃-alkylene) and poly(oxy-C₂-C₃-alkylene). For example, the linker group or G¹ may be selected from mono(oxy-C₂-C₃-alkylene) and poly(oxy-C₂-C₃-alkylene).

When the linker group of the at least one primary monoamine or G¹ in formula (A) is a poly(oxy-C₁-C₆-alkylene) group, then the poly(oxy-C₁-C₆-alkylene) group may be a random copolymer consisting of oxy-C₁-C₆-alkylene units, an alternating copolymer consisting of oxy-C₁-C₆-alkylene units, a block copolymer consisting of oxy-C₁-C₆-alkylene units or a homopolymer consisting of oxy-C₁-C₆-alkylene units. It is preferred that the poly(oxy-C₁-C₆-alkylene) group is a block copolymer consisting of oxy-C₁-C₆-alkylene units or a homopolymer consisting of oxy-C₁-C₆-alkylene units. The same applies when the poly(oxy-C₁-C₆-alkylene) group is a poly(oxy-C₂-C₆-alkylene) group, a poly(oxy-C₂-C₄-alkylene) group, or a poly(oxy-C₂-C₃-alkylene) group.

The poly(oxy-C₂-C₃-alkylene) group may be a random copolymer consisting of oxy-C₂-C₃-alkylene units, an alternating copolymer consisting of oxy-C₂-C₃-alkylene units, a block copolymer consisting of oxy-C₂-C₃-alkylene units or a homopolymer consisting of oxy-C₂-C₃-alkylene units. For example, the poly(oxy-C₂-C₃-alkylene) group may be a block copolymer consisting of oxy-C₂-C₃-alkylene units or a homopolymer consisting of oxy-C₂-C₃-alkylene units. The poly(oxy-C₂-C₃-alkylene) group may be a block copolymer consisting of oxy-C₂-alkylene units and oxy-C₃-alkylene units, a homopolymer consisting of oxy-C₃-alkylene units or a homopolymer consisting of oxy-C₂-alkylene units, especially a block copolymer consisting of oxy-C₂-alkylene units and oxy-C₃-alkylene units or a homopolymer consisting of oxy-C₃-alkylene units.

When the linker group of the at least one primary monoamine or G¹ in formula (A) is a poly(amino-C₁-C₆-alkylene) group, then the poly(amino-C₁-C₆-alkylene) group may be a random copolymer consisting of amino-C₁-C₆-alkylene units, an alternating copolymer consisting of amino-C₁-C₆-alkylene units, a block copolymer consisting of amino-C₁-C₆-alkylene units or a homopolymer consisting of amino-C₁-C₆-alkylene units. The poly(amino-C₁-C₆-alkylene) group may be a homopolymer consisting of amino-C₁-C₆-alkylene units. The same applies when the poly(amino-C₁-C₆-alkylene) group is a poly(amino-C₂-C₆-alkylene) group, a poly(amino-C₂-C₄-alkylene) group or a poly(amino-C₂-C₃-alkylene) group.

The poly(amino-C₂-C₃-alkylene) group may be a random copolymer consisting of amino-C₂-C₃-alkylene units, an alternating copolymer consisting of amino-C₂-C₃-alkylene units, a block copolymer consisting of amino-C₂-C₃-alkylene units or a homopolymer consisting of amino-C₂-C₃-alkylene units. For example, the poly(amino-C₂-C₃-alkylene) group may be a homopolymer consisting of amino-C₂-C₃-alkylene units. The poly(amino-C₂-C₃-alkylene) group may be a block copolymer consisting of amino-C₂-alkylene units and amino-C₃-alkylene units, a homopolymer consisting of amino-C₃-alkylene units or a homopolymer consisting of amino-C₂-alkylene units, especially a homopolymer consisting of amino-C₂-alkylene units or a homopolymer consisting of oxy-C₃-alkylene units.

The linker group of the at least one primary monoamine or G¹ in formula (A) can include an oxy-C₂-C₃-alkylene moiety, such as in a mono(oxy-C₂-C₃-alkylene) group or in a poly(oxy-C₂-C₃-alkylene) group.

When the oxy-C₂-C₃-alkylene moiety is oxy-C₂-alkylene (e.g. oxy-ethylene), it is generally preferred that the oxy-C₂-alkylene moiety is a linear or unbranched oxy-C₂-alkylene moiety (e.g. linear oxy-ethylene). The linear or unbranched oxy-C₂-alkylene moiety is -OCH₂CH₂- (i.e. not -OCH(CH₃)-).

When the oxy-C₂-C₃-alkylene moiety is oxy-C₃-alkylene (e.g. oxy-propylene), it is generally preferred that the oxy-C₃-alkylene moiety is a linear or unbranched oxy-C₃-alkylene moiety (e.g. linear oxy-propylene) or a branched oxy-C₃-alkylene moiety, preferably an oxy-C₃-alkylene moiety having a methyl-branch (e.g. branched oxy-propylene). The linear or unbranched oxy-C₃-alkylene moiety is -OCH₂CH₂CH₂-. The oxy-C₃-alkylene moiety having a methyl-branch is either -OCH(CH₃)CH₂- or -OCH₂CH(CH₃)-. More preferably, the oxy-C₃-alkylene moiety is a branched oxy-propylene (i.e. oxy-C₃-alkylene moiety having a methyl-branch).

The linker group of the at least one primary monoamine or G¹ in formula (A) can include an amino-C₂-C₃-alkylene moiety, such as in a mono(amino-C₂-C₃-alkylene) group or in a poly(amino-C₂-C₃-alkylene) group.

When the amino-C₂-C₃-alkylene moiety is amino-C₂-alkylene (e.g. amino-ethylene), it is generally preferred that the amino-C₂-alkylene moiety is a linear or unbranched amino-C₂-alkylene moiety (e.g. linear amino-ethylene). The linear or unbranched amino-C₂-alkylene moiety is -NHCH₂CH₂- (i.e. not -NHCH(CH₃)-).

When the amino-C₂-C₃-alkylene moiety is amino-C₃-alkylene (e.g. amino-propylene), it is generally preferred that the amino-C₃-alkylene moiety is a linear or unbranched amino-C₃-alkylene moiety (e.g. linear amino-propylene) or a branched amino-C₃-alkylene moiety, preferably an amino-C₃-alkylene moiety having a methyl-branch (e.g. branched amino-propylene). The linear or unbranched amino-C₃-alkylene moiety is -NHCH₂CH₂CH₂-. The amino-C₃-alkylene moiety having a methyl-branch is either -NHCH(CH₃)CH₂- or -NHCH₂CH(CH₃)-.

In general, it is preferred that the linker group of the at least one primary monoamine or G¹ in formula (A) is independently a single bond or is selected from: 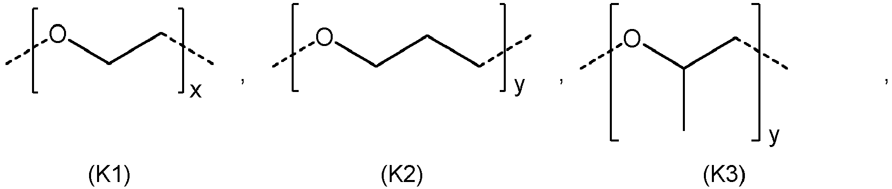 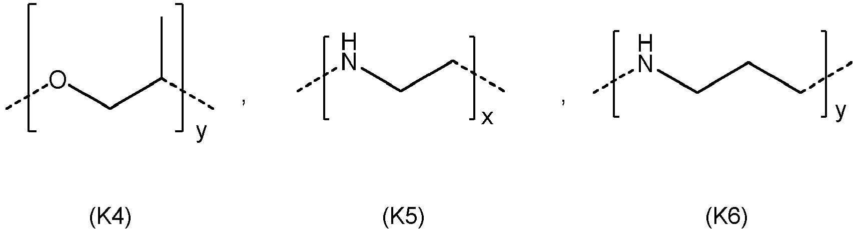 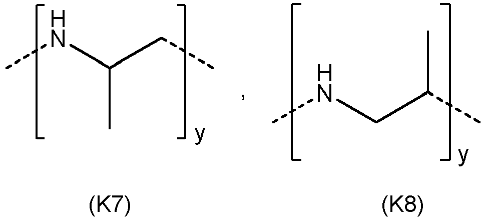 and a combination of two or more thereof;
wherein each x and y is independently an integer from 1 to 100.

The dashed bonds above indicate the positions at which the linker group or G¹ is directly bonded to either the end group or E¹, the optional C₁-C₈ alkylene group or R², or to the nitrogen atom of the primary amine. The orientation of each structure is not limited. The terms in parentheses, such as (K1), (K2) etc, are labels to identify each moiety of the linker group.

More preferably, the linker group of the at least one primary monoamine or G¹ in formula (A) is independently a single bond or is selected from:

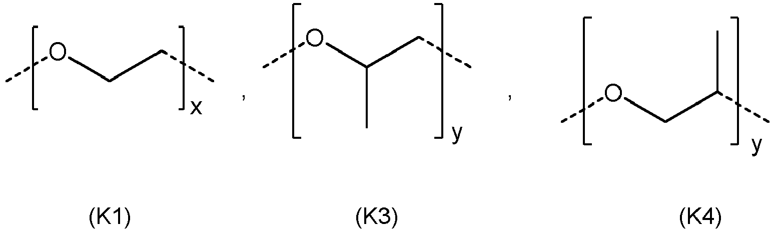

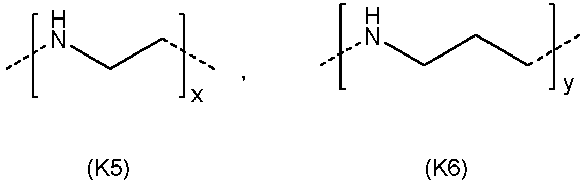

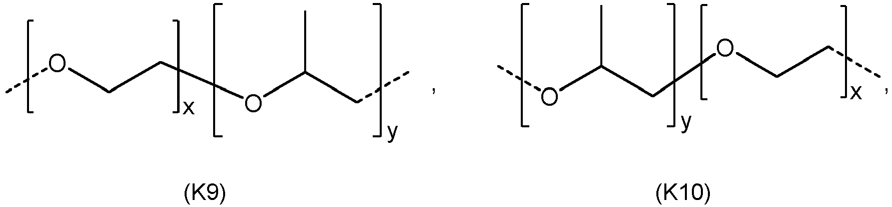

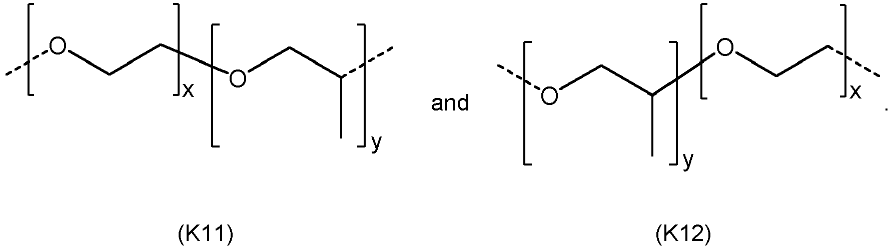

It is further preferred that the linker group of the at least one primary monoamine or G¹ in formula (A) is independently selected from:

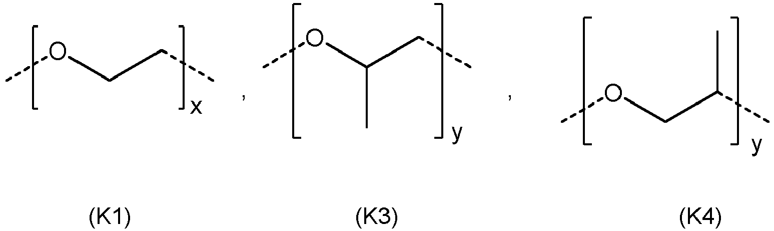

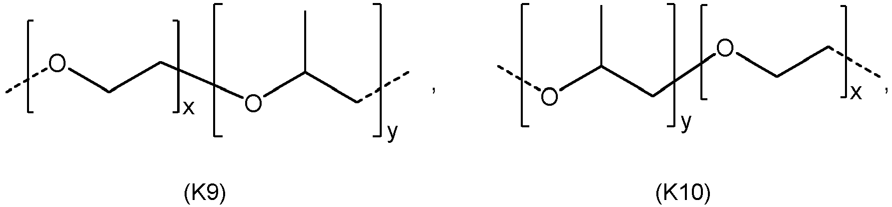

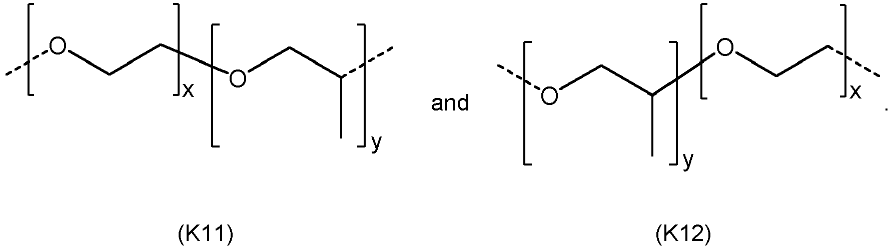

In the moieties represented above by formulas (K1) to (K12), each x and y is independently an integer from 1 to 100. It is preferred that each x and y is independently an integer from 1 to 50, more preferably each x and y is independently an integer from 1 to 25, particularly from 1 to 15, an even more preferably from 1 to 10.

In general, it is preferred that each x is independently an integer from 1 to 15, more preferably from 1 to 10, even more preferably from 1 to 5.

Independently of or in conjunction with the value of x, typically each y is independently an integer from 1 to 10, more preferably from 1 to 8, even more preferably from 1 to 4.

The aliphatic side chain of the primary monoamine may comprise a C₁-C₈ alkylene group between the linker group and the primary amine group. This structural feature is represented by R² in formula (A), where R² is a single bond or a C₁-C₈ alkylene group. For the avoidance of doubt, the C₁-C₈ alkylene group is unsubstituted and may be linear or branched.

In general, it is preferred that the C₁-C₈ alkylene group (e.g. of the aliphatic side chain or R²) is a C₂-C₈ alkylene group, such as a C₂-C₆ alkylene group, more preferably a C₂-C₄ alkylene group, particularly a C₂-C₃ alkylene group. The C₂-C₃ alkylene group is preferably a linear or unbranched C₂-alkylene moiety (e.g. linear ethylene, -CH₂CH₂-), a linear or unbranched C₃-alkylene moiety (e.g. linear propylene, -CH₂CH₂CH₂-) or a C₃-alkylene moiety having a methyl-branch (e.g. branched propylene, -CH(CH₃)CH₂-).

The or each primary monoamine may, for example, be selected from 2-methoxyethylamine, 3-methoxypropylamine, 3-butoxypropylamine, hexyloxypropylamine, 3-(2-ethylhexyloxy)propylamine, octylpropylamine, decyloxypropylamine, isodecyl-oxypropylamine, dodecyloxypropylamine, tetradecyloxypropylamine, isotridecyloxypropyl, tetradecyloxypropylamine, a linear C₁-C₂₀-alkoxypropylamine, 3-aminopropyl-triethoxysilane, 3-aminopropyltrimethoxysilane, (3-aminopropyl)methyldiethoxysilane, (3-aminopropyl)methyldimethoxysilane, N-(2-aminoethyl)-3-aminopropyltriethoxysilane, N-(2-aminoethyl)-3-aminopropyltrimethoxy-silane, 3-(2-aminoethylamino)propyldiethoxymethyl-silane, 3-(2-aminoethylamino)propyldimethoxymethylsilane and a polyether monoamine having an aliphatic side chain derived from polypropylene glycol (PPG) or a block copolymer of polyethylene glycol and polypropylene glycol (e.g. PEG/PPG), such as the Jeffamine^{™} M series of monoamines. It is preferred that the or each primary monoamine is selected from 2-methoxyethylamine, 3-methoxypropylamine, 3-butoxypropylamine, hexyloxypropylamine, 3-(2-ethylhexyloxy)propylamine, 3-aminopropyl-triethoxysilane, 3-aminopropyltrimethoxysilane, (3-aminopropyl)methyldiethoxysilane, (3-aminopropyl)-methyldimethoxysilane, *N*-(2-aminoethyl)-3-aminopropyltriethoxysilane, *N*-(2-aminoethyl)-3-aminopropyltrimethoxy-silane, 3-(2-aminoethylamino)propyldiethoxymethyl-silane, 3-(2-aminoethylamino)propyldimethoxymethylsilane and a polyether monoamine having an aliphatic side chain derived from polypropylene glycol (PPG) or a block copolymer of polyethylene glycol and polypropylene glycol (e.g. PEG/PPG). More preferably, the or each primary monoamine is selected from 3-(2-ethylhexyloxy)propylamine and a polyether monoamine having an aliphatic side chain derived from polypropylene glycol (PPG) or a block copolymer of polyethylene glycol and polypropylene glycol (e.g. PEG/PPG).

In embodiment 1, the at least one primary monoamine has an aliphatic side chain comprising:
(i) an end group that is C₁-C₁₃ alkyl; and
(ii) a linker group between the end group and the primary amine group of the primary monoamine, wherein the linker group is an oxy-C₂-C₃-alkylene group (e.g. mono(oxy-C₂-C₃-alkylene).

When represented by formula (A), then R² is a single bond; G¹ is an oxy-C₂-C₃-alkylene group, and E¹ is C₁-C₁₃ alkyl.

It is preferred that the at least one primary monoamine is:

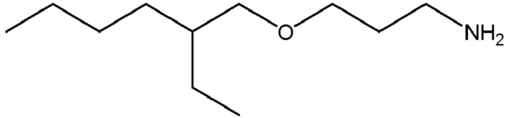

This amine is commercially available as Tomamine^{™} PA-12 EH.

In embodiment 2, the at least one primary monoamine has an aliphatic side chain comprising either:
(i) an end group that is C₁-C₈ alkyl, preferably C₁-C₄ alkyl; and
(ii) a linker group between the end group and the primary amine group of the primary monoamine, wherein the linker group is: 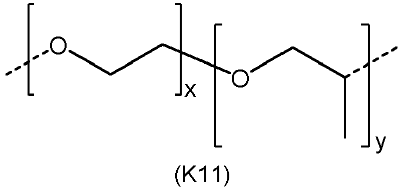 wherein:
   x is an integer from 1 to 100; and
   y is an integer from 1 to 100.

It is preferred that x is an integer from 1 to 70, preferably from 1 to 30, more preferably from 1 to 15.

It is preferred that y is an integer from 1 to 70, preferably from 1 to 30, more preferably from 1 to 15.

It is preferred that the sum of x and y is from 2 to 70, preferably to 5 to 60, more preferably 8 to 45.

When the at least one primary monoamine is represented by formula (A), then R² is a single bond; G¹ is a block copolymer of an oxy-C₂-alkylene unit and oxy-C₂-alkylene unit (e.g. as shown in (K11) above, with x and y defined in the preceding paragraph); and E¹ is C₁-C₈ alkyl.

The at least one primary monoamine of embodiment 2 may be present as a primary monoamine composition.

It is preferred that the at least one primary monoamine is: 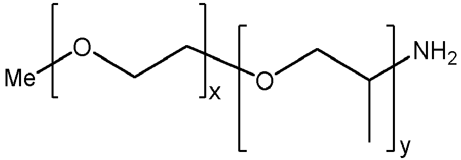 wherein:
x is an integer from 1 to 100; and
y is an integer from 1 to 100.

It is preferred that x is an integer from 1 to 70, preferably from 1 to 30, more preferably from 1 to 15.

It is preferred that y is an integer from 1 to 70, preferably from 1 to 30, more preferably from 1 to 15.

It is preferred that the sum of x and y is from 2 to 70, preferably to 5 to 60, more preferably 8 to 45.

In embodiment 3, the at least one primary monoamine has an aliphatic side chain comprising:
(i) an end group that is C₁-C₈ alkoxy, preferably C₁-C₄ alkoxy;
(ii) a linker group between the end group and the primary amine group of the primary monoamine, wherein the linker group is: 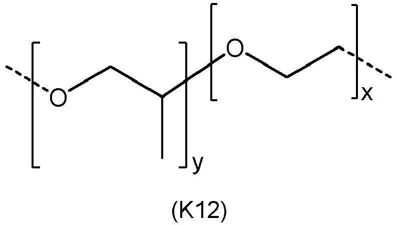 wherein:
   x is 1; and
   y is an integer from 1 to 10, preferably from 1 to 8;
(iii) a C₂-C₃ alkylene group between the linker group and the primary amine group, preferably a C₃ alkylene group;

When the at least one primary monoamine is represented by formula (A), then R² is a C₂-C₃ alkylene group; G¹ is a block copolymer of an oxy-C₂-alkylene unit and an oxy-C₃-alkylene unit (e.g. as shown in (K12) above, with x and y defined in the preceding paragraph); and E¹ is C₁-C₈ alkoxy.

The at least one primary monoamine of embodiment 3 may be present as a primary monoamine composition.

It is preferred that the at least one primary monoamine is: 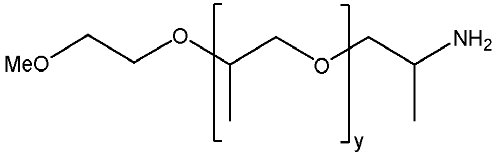 wherein:
y is an integer from 1 to 10, preferably from 1 to 8.

In embodiments 2 and 3, it is preferred that the at least one primary monoamine is a polyether monoamine having an aliphatic side chain derived from polypropylene glycol (PPG) or a block copolymer of polyethylene glycol and polypropylene glycol (e.g. PEG/PPG), such as the Jeffamine^{™} M series of monoamines.

The primary monoamines of embodiment 2 or embodiment 3 may be present as a primary monoamine composition. The primary monoamine composition comprises a plurality of primary monoamines of either embodiment 2 or embodiment 3.

The primary monoamine composition may comprise a plurality of primary monoamines having a number-average molecular weight (Mₙ) of from about 500 to about 4000, preferably from about 600 to about 3000, such as from about 600 to about 2000 or from about 1000 to about 3000.

Additionally or alternatively, the primary monoamine composition may comprise a plurality of primary monoamines having a weight-average molecular weight (M_{w}) of about 500 to about 4000, preferably from about 600 to about 3000, such as from about 600 to about 2000 or from about 1000 to about 3000.

In embodiment 4, the at least one primary monoamine has an aliphatic side chain comprising:
(i) an end group represented by formula (S), wherein each R^{a} is independently selected from C₁-C₂ alkyl, preferably methyl; each R^{b} is independently selected from C₁-C₂ alkyl; and q is an integer of 0, 1 or 2;
   and either:
(A) (ii) a linker group between the end group and the primary amine group of the primary monoamine, wherein the linker group is an amino-C₂-C₃-alkylene group (e.g. mono(amino-C₂-C₃-alkylene), preferably a linear amino-C₃-alkylene group; and
(iii) a C₂-C₃ alkylene group between the linker group and the primary amine group, preferably a C₂ alkylene group; or
(B) (ii) a linker group that is a single bond; and
(iii) a C₂-C₃ alkylene group between the linker group and the primary amine group, preferably a linear C₃ alkylene group.

When the at least one primary monoamine is represented by formula (A), then E¹ is represented by formula (S), wherein each R^{a} is independently selected from C₁-C₂ alkyl, preferably methyl; each R^{b} is independently selected from C₁-C₂ alkyl; and q is an integer of 0, 1 or 2; and either:
(A) G¹ is an amino-C₂-C₃-alkylene group (e.g. mono(amino-C₂-C₃-alkylene), preferably a linear amino-C₃-alkylene group, and R² is a C₂-C₃ alkylene group, preferably a linear C₃ alkylene group; or
(B) G¹ is a single bond and R² is a C₂-C₃ alkylene group, preferably a linear C₃ alkylene group.

In embodiment 4, it is preferred that the at least one primary monoamine is 3-aminopropyltriethoxysilane, 3-aminopropyltrimethoxysilane, (3-aminopropyl)methyldiethoxysilane, (3-aminopropyl)methyldimethoxysilane, *N*-(2-aminoethyl)-3-aminopropyltriethoxysilane, *N*-(2-aminoethyl)-3-aminopropyltrimethoxy-silane, 3-(2-aminoethylamino)-propyl-diethoxymethylsilane and 3-(2-aminoethylamino)propyl-dimethoxymethylsilane.

In general, the primary monoamine may be present as a primary monoamine composition.

The primary monoamine composition may comprise, or consist essentially of, a plurality of primary monoamines, such as a mixture of primary monoamines. When a primary monoamine composition is used, then a mixture of polyureas may be obtained.

The primary monoamine may be present as a primary monoamine composition when the linker group or G¹ has a repeating unit, in which the number of repeating units varies and is present as a distribution. There may, for example, be a distribution of repeating units when the linker group or G¹ is poly(oxy-C₁-C₆-alkylene) and poly(amino-C₁-C₆-alkylene), where the number of oxy-C₁-C₆-alkylene or amino-C₁-C₆-alkylene moieties, respectively, may vary per molecule of primary monoamine.

The or each primary monoamine composition comprises, or consists essentially of, a plurality of primary monoamines. Each primary monoamine of the plurality of primary monoamines is as described hereinabove with reference to the at least one primary monoamine, where the linker group or G¹ has two or more units (e.g. a plurality of units) selected from oxy-C₁-C₆-alkylene, amino-C₁-C₆-alkylene and a combination thereof. It is preferred that the linker group or G¹ is poly(oxy-C₁-C₆-alkylene) or poly(amino-C₁-C₆-alkylene).

The or each primary monoamine composition may comprise, or consist essentially of, a plurality of primary monoamines having an aliphatic side chain represented by formula (A'):

E¹-G¹-R²-NH₂ (A')

wherein:
every R² is the same and is a single bond or a C₁-C₈ alkylene group;
G¹ is the same group and is selected from poly(oxy-C₁-C₆-alkylene) and poly(amino-C₁-C₆-alkylene);
every E¹ is the same and is selected from the group consisting of C₁-C₂₀ alkyl, C₁-C₂₀ alkoxy and a silicon-containing group represented by formula (S):

   R^{a}_{q}(R^{b}O)_{3-q}Si- (S)

   wherein:
every R^{a} is the same and is selected from C₁-C₄ alkyl, C₆-C₁₀ aryl and C₆-C₁₀ aryl-C₁-C₄ alkyl;
every R^{b} is the same and is selected from C₁-C₄ alkyl, C₆-C₁₀ aryl and C₆-C₁₀ aryl-C₁-C₄ alkyl; and
every q is the same and is an integer of 0 to 3.

The primary monoamines represented by formula (A') are subject to the following proviso or condition:
- E¹, G¹ and R² of the primary monoamines are selected such that the primary monoamines do not have an oxygen-oxygen bond, an oxygen-nitrogen bond or a nitrogen-nitrogen bond.

The primary monoamines share the same R², E¹ and, when E¹ is a silicon-containing group represented by formula (S), the same R^{a}, R^{b} and q. The primary monoamines share the same group for G¹, in that all of the primary monoamines have either a poly(oxy-C₁-C₆-alkylene) group or a poly(amino-C₁-C₆-alkylene) group. However, the number of oxy-C₁-C₆-alkylene or amino-C₁-C₆-alkylene moieties in the poly(oxy-C₁-C₆-alkylene) group or the poly(amino-C₁-C₆-alkylene) group, respectively, of each primary monoamine molecule may vary.

The linker group of the plurality of primary monoamines and G¹ in formula (A') is as defined herein above in relation to the at least one primary monoamine.

The primary monoamine composition may comprise a plurality of primary monoamines having a number-average molecular weight (Mₙ) of from about 500 to about 4000, preferably from about 600 to about 3000, such as from about 600 to about 2000 or from about 1000 to about 3000.

Additionally or alternatively, the primary monoamine composition may comprise a plurality of primary monoamines having a weight-average molecular weight (M_{w}) of about 500 to about 4000, preferably from about 600 to about 3000, such as from about 600 to about 2000 or from about 1000 to about 3000.

The use of primary monoamines having a higher molecular weight may be advantageous because the resulting polyureas can increase the activation temperature of the rheological additive.

### Primary diamine

The diamine referred to in this section of the disclosure is the diamine in each of the second and third aspects of the invention.

The or each diamine has two primary amine groups, which are linked by an aliphatic linker group. A general feature of the diamine is that the aliphatic linker group has at least one oxygen or nitrogen atom between the two primary amine groups.

The aliphatic linker group of the diamine comprises, or consists of, a group selected from a poly(oxy-C₁-C₆-alkylene) group, a mono(oxy-C₁-C₆-alkylene) group, a poly(amino-C₁-C₆-alkylene) group and a mono(amino-C₁-C₆-alkylene) group.

The or each diamine may be represented by formula (A2):

H₂N-R⁴-G²-R³-NH₂ (A2)

wherein:
each R³ is independently a single bond or a C₁-C₈ alkylene group;
each R⁴ is independently a single bond or a C₁-C₈ alkylene group; and
each G² is the same or different and is independently selected from a poly(oxy-C₁-C₆-alkylene) group, a mono(oxy-C₁-C₆-alkylene) group, a poly(amino-C₁-C₆-alkylene) group and a mono(amino-C₁-C₆-alkylene) group.

The or each diamine represented by formula (A2) is subject to the following provisos or conditions:
- in formula (A2), R³ and R⁴ are not both single bonds; and
- in formula (A2), G², R³ and R⁴ are selected such that the diamine represented by formula (A2) does not have an oxygen-oxygen bond, an oxygen-nitrogen bond or a nitrogen-nitrogen bond.

In formula (A2), the aliphatic linker group is represented by -R⁴-G²-R³-.

Both R³ and R⁴ cannot together be single bonds. Thus, when R³ is a single bond, then R⁴ is not a single bond. Similarly, when R⁴ is a single bond, then R³ is not a single bond. As one end of the aliphatic linker group with be a heteroatom, the presence of one of R³ or R⁴ ensures the nitrogen atoms of the primary amine groups in formula (A2) are bonded to a carbon atom in the aliphatic linker group.

R³ and R⁴ can both be a C₁-C₈ alkylene group.

The or each diamine represented by formula (A2) does not have any oxygen-oxygen, oxygen-nitrogen or nitrogen-nitrogen bonds.

Typically, a terminal atom at one end of G² is either an oxygen atom (e.g. of an oxy-C₁-C₆-alkylene moiety) or a nitrogen atom (e.g. of an amino-C₁-C₆-alkylene moiety). The terminal atom at the opposite end of G² is a carbon atom. The oxygen atom or the nitrogen atom at one end of G² is directly bonded to a carbon atom in a C₁-C₈ alkylene group from either R³ or R⁴. The carbon atom at the other end of G² may be directly bonded to the primary amine group. Thus, one of R³ and R⁴ is a C₁-C₈ alkylene group and the other is a single bond.

The diamines (e.g. represented by formula (A2)) can be obtained commercially or prepared using known synthetic methods, such as the methods described in US 4,766,245 and US 5,540,337.

The aliphatic linker group of the diamine may comprise a C₁-C₈ alkylene group between the aliphatic linker group and the primary amine group. This structural feature is represented by R³ or R⁴ in formula (A2).

For the avoidance of doubt, the C₁-C₈ alkylene group in is R³ or R⁴ unsubstituted and may be linear or branched.

When R³ is a C₁-C₈ alkylene group, it is preferred that the C₁-C₈ alkylene group is a C₂-C₈ alkylene group, such as a C₂-C₆ alkylene group, more preferably a C₂-C₄ alkylene group, particularly a C₂-C₃ alkylene group. The C₂-C₃ alkylene group is preferably a linear or unbranched C₂-alkylene moiety (e.g. linear ethylene, -CH₂CH₂-), a linear or unbranched C₃-alkylene moiety (e.g. linear propylene, -CH₂CH₂CH₂-) or a C₃-alkylene moiety having a methyl-branch (e.g. branched propylene, -CH(CH₃)CH₂-).

When R⁴ is a C₁-C₈ alkylene group, it is preferred that the C₁-C₈ alkylene group is a C₂-C₈ alkylene group, such as a C₂-C₆ alkylene group, more preferably a C₂-C₄ alkylene group, particularly a C₂-C₃ alkylene group. The C₂-C₃ alkylene group is preferably a linear or unbranched C₂-alkylene moiety (e.g. linear ethylene, -CH₂CH₂-), a linear or unbranched C₃-alkylene moiety (e.g. linear propylene, -CH₂CH₂CH₂-) or a C₃-alkylene moiety having a methyl-branch (e.g. branched propylene, -CH(CH₃)CH₂-).

It is generally preferred that G² in formula (A2) is selected from a mono(oxy-C₁-C₆-alkylene) group, a mono(amino-C₁-C₆-alkylene) group and a poly(oxy-C₁-C₆-alkylene) group. It is further preferred that G² in formula (A2) is selected from mono(oxy-C₁-C₆-alkylene) and poly(oxy-C₁-C₆-alkylene). Even more preferably, G² is poly(oxy-C₁-C₆-alkylene).

The oxy-C₁-C₆-alkylene moiety in the mono(oxy-C₁-C₆-alkylene) group or the poly(oxy-C₁-C₆-alkylene) group, is preferably an oxy-C₂-C₆-alkylene moiety, more preferably an oxy-C₂-C₄-alkylene moiety, particularly an oxy-C₂-C₃-alkylene moiety (e.g. oxy-ethylene or oxy-propylene), such as an oxy-C₂-alkylene moiety or an oxy-C₃-alkylene moiety, with the oxy-C₃-alkylene moiety being most preferred.

The amino-C₁-C₆-alkylene moiety in the mono(amino-C₁-C₆-alkylene) group or the poly(amino-C₁-C₆-alkylene) group is preferably an amino-C₂-C₆-alkylene moiety, more preferably an amino-C₂-C₄-alkylene moiety, particularly an amino-C₂-C₃-alkylene moiety (e.g. amino-ethylene or amino-propylene), such as an amino-C₂-alkylene moiety or an amino-C₃-alkylene moiety, with the amino-C₃-alkylene moiety being most preferred.

When G² in formula (A2) is a poly(oxy-C₁-C₆-alkylene) group, then preferably G² is poly(oxy-C₂-C₆-alkylene), more preferably poly(oxy-C₂-C₄-alkylene), and still more preferably poly(oxy-C₂-C₃-alkylene).

When G² in formula (A2) is a poly(amino-C₁-C₆-alkylene) group, then preferably G² is poly(amino-C₂-C₆-alkylene), more preferably poly(amino-C₂-C₄-alkylene), and still more preferably poly(amino-C₂-C₃-alkylene).

It is generally preferred that G² in formula (A2) is selected from a mono(oxy-C₂-C₃-alkylene) group, a mono(amino-C₂-C₃-alkylene) group, a poly(oxy-C₂-C₃-alkylene) group and a poly(amino-C₂-C₃-alkylene) group. More preferably, G² is selected from a mono(oxy-C₂-C₃-alkylene) group, a mono(amino-C₂-C₃-alkylene) group and a poly(oxy-C₂-C₃-alkylene) group. It is further preferred that G² is selected from a mono(oxy-C₂-C₃-alkylene) group and a poly(oxy-C₂-C₃-alkylene) group. Even more preferably, G² is a poly(oxy-C₂-C₃-alkylene) group.

When G² in formula (A2) is a poly(oxy-C₁-C₆-alkylene) group, then the poly(oxy-C₁-C₆-alkylene) group may be a random copolymer consisting of oxy-C₁-C₆-alkylene units, an alternating copolymer consisting of oxy-C₁-C₆-alkylene units, a block copolymer consisting of oxy-C₁-C₆-alkylene units or a homopolymer consisting of oxy-C₁-C₆-alkylene units. For example, the poly(oxy-C₁-C₆-alkylene) group may be a block copolymer consisting of oxy-C₁-C₆-alkylene units or a homopolymer consisting of oxy-C₁-C₆-alkylene units. The same applies when the poly(oxy-C₁-C₆-alkylene) group is a poly(oxy-C₂-C₆-alkylene) group, a poly(oxy-C₂-C₄-alkylene) group or a poly(oxy-C₂-C₃-alkylene) group.

The poly(oxy-C₂-C₃-alkylene) group may be a random copolymer consisting of oxy-C₂-C₃-alkylene units, an alternating copolymer consisting of oxy-C₂-C₃-alkylene units, a block copolymer consisting of oxy-C₂-C₃-alkylene units or a homopolymer consisting of oxy-C₂-C₃-alkylene units. For example, the poly(oxy-C₂-C₃-alkylene) group may be a block copolymer consisting of oxy-C₂-C₃-alkylene units or a homopolymer consisting of oxy-C₂-C₃-alkylene units. The poly(oxy-C₂-C₃-alkylene) group may be a block copolymer consisting of oxy-C₂-alkylene units and oxy-C₃-alkylene units, a homopolymer consisting of oxy-C₃-alkylene units or a homopolymer consisting of oxy-C₂-alkylene units, especially a block copolymer consisting of oxy-C₂-alkylene units and oxy-C₃-alkylene units or a homopolymer consisting of oxy-C₃-alkylene units.

When G² in formula (A2) is a poly(amino-C₁-C₆-alkylene) group, then the poly(amino-C₁-C₆-alkylene) group may be a random copolymer consisting of amino-C₁-C₆-alkylene units, an alternating copolymer consisting of amino-C₁-C₆-alkylene units, a block copolymer consisting of amino-C₁-C₆-alkylene units or a homopolymer consisting of amino-C₁-C₆-alkylene units. For example, the poly(amino-C₁-C₆-alkylene) group may be a homopolymer consisting of amino-C₁-C₆-alkylene units. The same applies when the poly(amino-C₁-C₆-alkylene) group is a poly(amino-C₂-C₆-alkylene) group, a poly(amino-C₂-C₄-alkylene) group or a poly(amino-C₂-C₃-alkylene) group.

The poly(amino-C₂-C₃-alkylene) group may be a random copolymer consisting of amino-C₂-C₃-alkylene units, an alternating copolymer consisting of amino-C₂-C₃-alkylene units, a block copolymer consisting of amino-C₂-C₃-alkylene units or a homopolymer consisting of amino-C₂-C₃-alkylene units. For example, the poly(amino-C₂-C₃-alkylene) group may be a homopolymer consisting of amino-C₂-C₃-alkylene units. The poly(amino-C₂-C₃-alkylene) group may be a block copolymer consisting of amino-C₂-alkylene units and amino-C₃-alkylene units, a homopolymer consisting of amino-C₃-alkylene units or a homopolymer consisting of amino-C₂-alkylene units, especially a homopolymer consisting of amino-C₂-alkylene units or a homopolymer consisting of oxy-C₃-alkylene units.

When the oxy-C₂-C₃-alkylene moiety is oxy-C₂-alkylene (e.g. oxy-ethylene), it is generally preferred that the oxy-C₂-alkylene moiety is a linear or unbranched oxy-C₂-alkylene moiety (e.g. linear oxy-ethylene). The linear or unbranched oxy-C₂-alkylene moiety is -OCH₂CH₂- (i.e. not -OCH(CH₃)-).

When the oxy-C₂-C₃-alkylene moiety is oxy-C₃-alkylene (e.g. oxy-propylene), it is generally preferred that the oxy-C₃-alkylene moiety is a linear or unbranched oxy-C₃-alkylene moiety (e.g. linear oxy-propylene) or a branched oxy-C₃-alkylene moiety, preferably an oxy-C₃-alkylene moiety having a methyl-branch (e.g. branched oxy-propylene). The linear or unbranched oxy-C₃-alkylene moiety is -OCH₂CH₂CH₂-. The oxy-C₃-alkylene moiety having a methyl-branch is either -OCH(CH₃)CH₂- or -OCH₂CH(CH₃)-. More preferably, the oxy-C₃-alkylene moiety is a branched oxy-propylene (i.e. oxy-C₃-alkylene moiety having a methyl-branch).

When the amino-C₂-C₃-alkylene moiety is amino-C₂-alkylene (e.g. amino-ethylene), it is generally preferred that the amino-C₂-alkylene moiety is a linear or unbranched amino-C₂-alkylene moiety (e.g. linear amino-ethylene). The linear or unbranched amino-C₂-alkylene moiety is -NHCH₂CH₂- (i.e. not -NHCH(CH₃)-).

When the amino-C₂-C₃-alkylene moiety is amino-C₃-alkylene (e.g. amino-propylene), it is generally preferred that the amino-C₃-alkylene moiety is a linear or unbranched amino-C₃-alkylene moiety (e.g. linear amino-propylene) or a branched amino-C₃-alkylene moiety, preferably an amino-C₃-alkylene moiety having a methyl-branch (e.g. branched amino-propylene). The linear or unbranched amino-C₃-alkylene moiety is -NHCH₂CH₂CH₂-. The amino-C₃-alkylene moiety having a methyl-branch is either -NHCH(CH₃)CH₂- or -NHCH₂CH(CH₃)-.

In general, it is preferred that G² in formula (A2) is selected from: 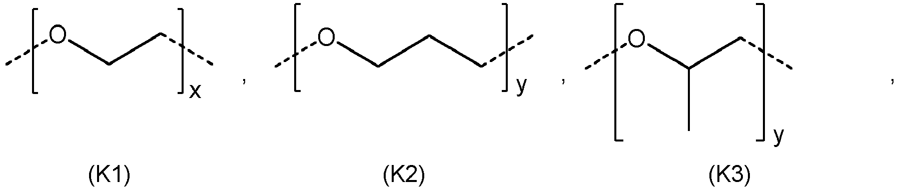 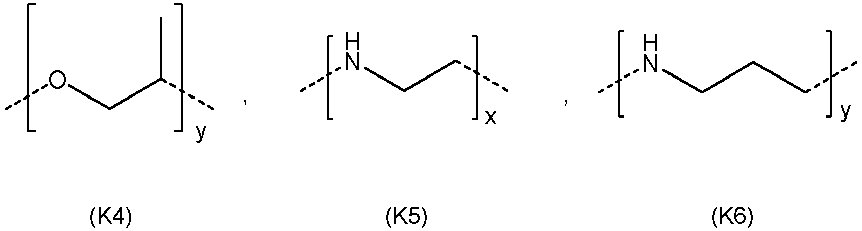 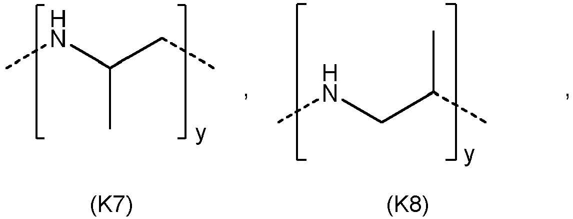 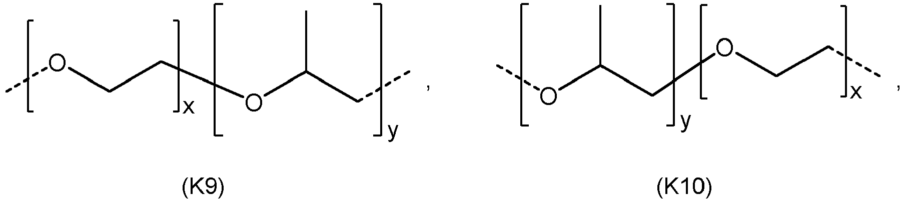 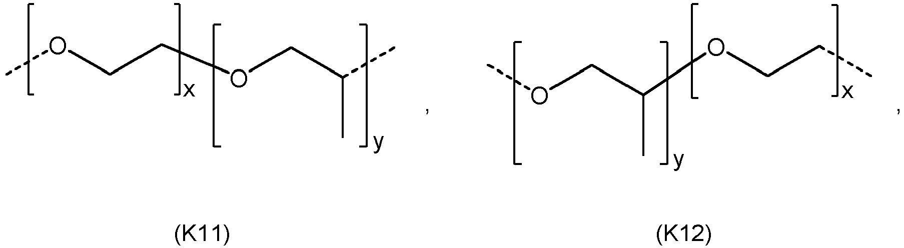 and 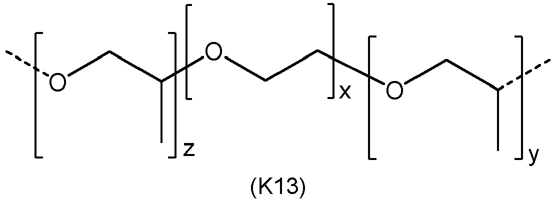 wherein each x, y and z is independently an integer from 1 to 100.

The dashed bonds above indicate the positions at which G² is directly bonded to R³, R⁴ or the nitrogen atom of a primary amine group. The orientation of each structure is not limited.

More preferably, G² in formula (A2) is selected from: 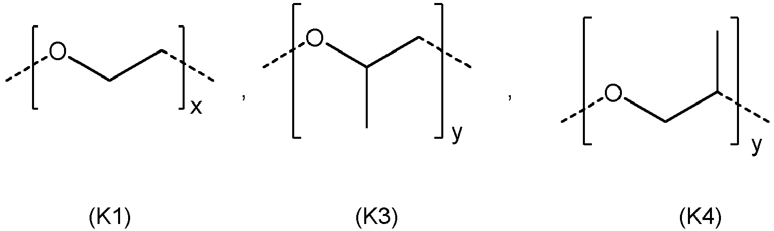 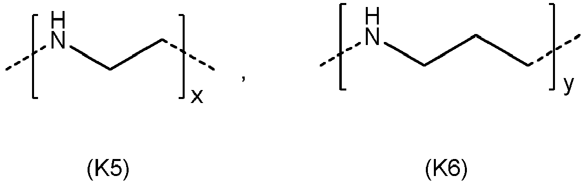 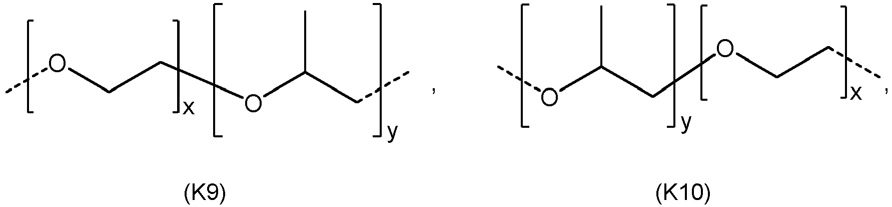 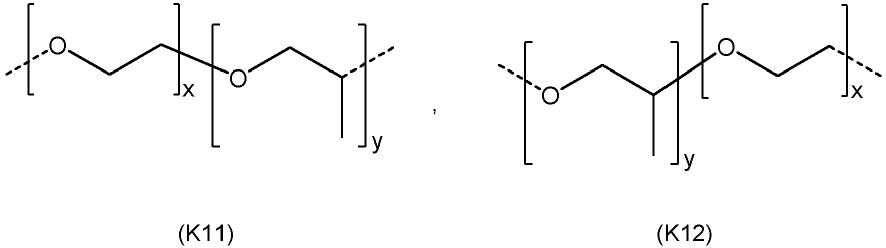 and

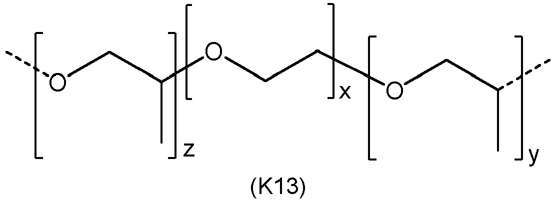

It is further preferred that G² in formula (A2) is selected from: 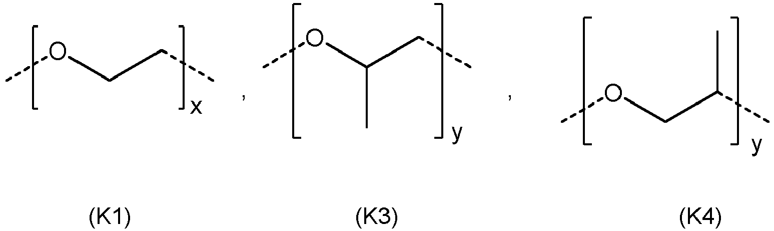 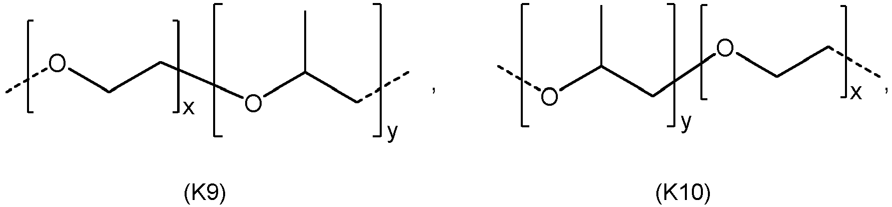 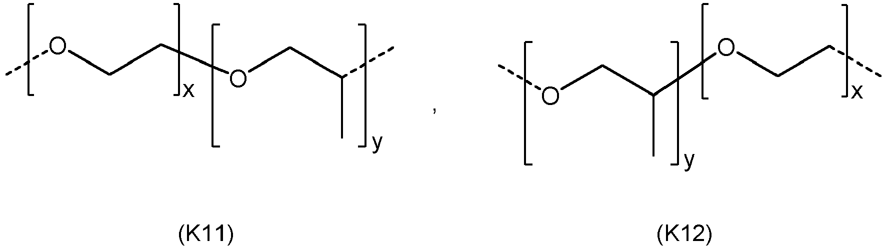 and

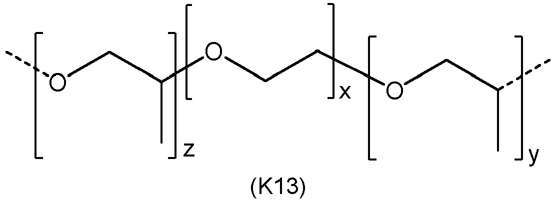

In the moieties represented above by formulas (K1) to (K13), each x, y and z is independently an integer from 1 to 100. It is preferred that each x, y and z is independently an integer from 1 to 50, more preferably each x, y and z is independently an integer from 1 to 25, particularly from 1 to 15, an even more preferably from 1 to 10.

In general, it is preferred that each x is independently an integer from 1 to 15, more preferably from 1 to 10, even more preferably from 1 to 5.

Independently of or in conjunction with the value of x, typically each y is independently an integer from 1 to 10, more preferably from 1 to 8, even more preferably from 1 to 4.

Independently of or in conjunction with the values of x and y, typically each z is independently an integer from 1 to 15, more preferably from 1 to 10, even more preferably from 1 to 5.

In embodiment 5, the or each diamine is represented by formula (A2a):

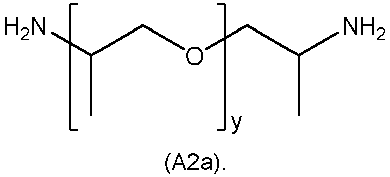

Typically, y is an integer from 1 to 200, preferably from 2 to 100, more preferably from 3 to 75.

The diamine represented by formula (A2a) is commercially available as a Jeffamine^{™} D series diamine, such as D-230, D-400, D-2000, D-2010 and D-4000.

The diamine represented by formula (A2a) is present as a diamine composition. The diamine composition comprises, or consists of, a plurality of diamines, wherein each diamine is represented by formula (A2a).

In the diamine composition, the plurality of diamines of formula (A2a) has a mean value of y from about 2.0 to about 100.0, preferably from about 2.5 to about 75.0.

Additionally or alternatively, the plurality of diamines of formula (A2a) may have a weight-average molecular weight (M_{w}) of about 200 to about 4500, preferably from about 230 to about 4000, such as from about 430 to about 3000.

In embodiment 6, the or each diamine is represented by formula (A2b):

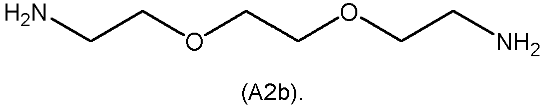

The diamine represented by formula (A2b) is commercially available as a Jeffamine^{™} EDR diamine.

In embodiment 7, the or each diamine is represented by formula (A2c):

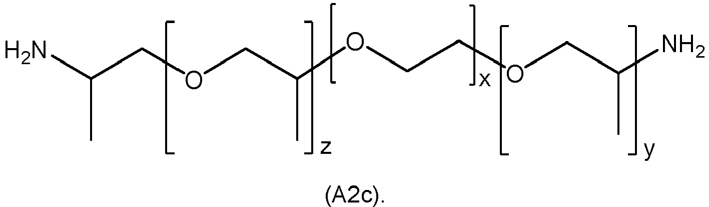

Typically, each x, y and z is independently an integer from 1 to 75, preferably from 1 to 50, such as from 1 to 25.

The diamine represented by formula (A2c) is commercially available as a Jeffamine^{™} ED series diamine, such as ED-600, ED-900 and ED-2003.

The diamine represented by formula (A2c) is present as a diamine composition. The diamine composition comprises, or consists of, a plurality of diamines, wherein each diamine is represented by formula (A2c).

In the diamine composition, the plurality of diamines of formula (A2c) may have a weight-average molecular weight (M_{w}) of about 500 to about 3000, preferably from about 600 to about 2000, such as from about 600 to about 1000.

In general, the diamine may be present as a diamine composition. The diamine composition may comprise, or consist essentially of, a plurality of diamines represented by formula (A2), such as a mixture of diamines.

The diamine may be present as a diamine composition when G² has a repeating unit, where the number of repeating units varies and is present as a distribution. There may, for example, be a distribution of repeating units when G² is poly(oxy-C₁-C₆-alkylene) or poly(amino-C₁-C₆-alkylene), where the number of oxy-C₁-C₆-alkylene or amino-C₁-C₆-alkylene moieties, respectively, may vary per molecule of diamine.

The or each diamine composition comprises, or consists essentially of, a plurality of diamines. The diamine of the plurality of diamines is as described hereinabove with reference to the at least one diamine, where G² is poly(oxy-C₁-C₆-alkylene) or poly(amino-C₁-C₆-alkylene).

The or each diamine composition may comprise, or consist essentially of, a plurality of diamines represented by formula (A2'):

H₂N-R⁴-G²-R³-NH₂ (A2')

wherein:
every R³ is the same and is a single bond or a C₁-C₈ alkylene group;
every R⁴ is the same and is a single bond or a C₁-C₈ alkylene group; and
G² is the same group and is selected from a poly(oxy-C₁-C₆-alkylene) group and a poly(amino-C₁-C₆-alkylene) group.

The plurality of diamines represented by formula (A2') is subject to the following provisos or conditions:
- in formula (A2'), R³ and R⁴ are not both single bonds; and
- in formula (A2'), G², R³ and R⁴ are selected such that the diamine represented by formula (A2') does not have an oxygen-oxygen bond, an oxygen-nitrogen bond or a nitrogen-nitrogen bond.

The diamine composition may comprise a plurality of diamines having a number-average molecular weight (Mₙ) of from about 200 to about 4500, preferably from about 230 to about 4000, such as from about 430 to about 3000 or from about 600 to about 2000.

Additionally or alternatively, the diamine composition may comprise a plurality of diamines having a weight-average molecular weight (M_{w}) of about 500 to about 4000, preferably from about 600 to about 3000, such as from about 600 to about 2000 or from about 1000 to about 3000.

### Primary triamine

The triamine referred to in this section of the disclosure is the triamine in each of the second and third aspects of the invention.

The triamine has three primary amine groups, which are linked by an aliphatic linker group. A general feature of the triamine is that the aliphatic linker group has at least one oxygen or nitrogen atom between the three primary amine groups.

The aliphatic linker group of the triamine comprises, or consists of, a group selected from a poly(oxy-C₁-C₆-alkylene) group, a mono(oxy-C₁-C₆-alkylene) group, a poly(amino-C₁-C₆-alkylene) group and a mono(amino-C₁-C₆-alkylene) group.

The triamine may be represented by formula (A3): 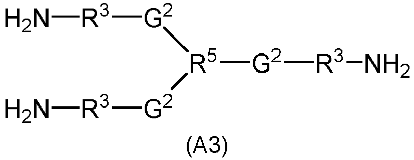 wherein:
each R³ is independently a single bond or a C₁-C₈ alkylene group;
each G² is the same or different and is independently selected from a poly(oxy-C₁-C₆-alkylene) group, a mono(oxy-C₁-C₆-alkylene) group, a poly(amino-C₁-C₆-alkylene) group and a mono(amino-C₁-C₆-alkylene) group; and
R⁵ is selected from a nitrogen atom and a linear or branched C₁-C₁₂ hydrocarbyl group.

The or each triamine represented by formula (A3) is subject to the following provisos or conditions:
- in formula (A3), when R⁵ is a nitrogen atom, then each R³ is independently a C₁-C₈ alkylene group; and
- in formula (A3), when R⁵ is a linear or branched C₁-C₁₂ hydrocarbyl group, then each G² and R³ are selected such that the triamine represented by formula (A3) does not have an oxygen-oxygen bond, an oxygen-nitrogen bond or a nitrogen-nitrogen bond.

In formula (A3), the aliphatic linker group is represented by the -R⁵-(G²-R³-)₃ moiety.

When R⁵ is a nitrogen atom, then a carbon atom (e.g. a terminal atom) at one end of G² is directly bonded to this nitrogen atom. The terminal atom at the opposite end of G² is either an oxygen atom (e.g. of an oxy-C₁-C₆-alkylene moiety) or a nitrogen atom (e.g. of an amino-C₁-C₆-alkylene moiety). The oxygen atom or the nitrogen atom at this end of G² is directly bonded to a carbon atom in a C₁-C₈ alkylene group from R³. Thus, R³ is a C₁-C₈ alkylene group, not a single bond.

The or each triamine represented by formula (A3) does not have any oxygen-oxygen, oxygen-nitrogen or nitrogen-nitrogen bonds.

Typically, a terminal atom at one end of G² is either an oxygen atom (e.g. of an oxy-C₁-C₆-alkylene moiety) or a nitrogen atom (e.g. of an amino-C₁-C₆-alkylene moiety). The terminal atom at the opposite end of G² is a carbon atom.

When R⁵ is a linear or branched C₁-C₁₂ hydrocarbyl group, then an oxygen atom or a nitrogen atom at one end of G² may be directly bonded to a carbon atom in R³ or R⁵.

When a carbon atom (e.g. terminal atom) at one end of G² is directly bonded to R⁵, then either an oxygen atom or a nitrogen atom at the opposite end of G² is directly bonded to a carbon atom (e.g. of a C₁-C₈ alkylene group) in R³. In this instance, R³ is a C₁-C₈ alkylene group, not a single bond.

The triamines (e.g. represented by formula (A3)) can be obtained commercially or prepared using known synthetic methods, such as the methods described in US 4,766,245 and US 5,540,337.

R³ may be a C₁-C₈ alkylene group. For the avoidance of doubt, the C₁-C₈ alkylene group in R³ is unsubstituted and may be linear or branched.

Each R³ can be a C₁-C₈ alkylene group. It is preferred that the C₁-C₈ alkylene group is a C₂-C₈ alkylene group, such as a C₂-C₆ alkylene group, more preferably a C₂-C₄ alkylene group, particularly a C₂-C₃ alkylene group. The C₂-C₃ alkylene group is preferably a linear or unbranched C₂-alkylene moiety (e.g. linear ethylene, -CH₂CH₂-), a linear or unbranched C₃-alkylene moiety (e.g. linear propylene, -CH₂CH₂CH₂-) or a C₃-alkylene moiety having a methyl-branch (e.g. branched propylene, -CH(CH₃)CH₂-).

R⁵ can be a linear or branched C₁-C₁₂ hydrocarbyl group. The linear or branched C₁-C₁₂ hydrocarbyl group is preferably a linear or branched C₃-C₁₀ hydrocarbyl group, more preferably a linear or branched C₃-C₈ hydrocarbyl group.

The linear or branched C₁-C₁₂ hydrocarbyl group may be selected from: 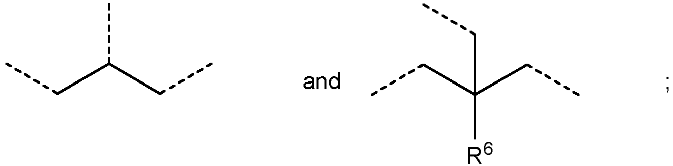 wherein R⁶ is hydrogen, methyl or ethyl.

It is preferred that R⁶ is hydrogen or ethyl.

The dashed bonds above indicate the positions at which R⁵ is directly bonded to each G².

R⁵ is selected from a nitrogen atom and a linear or branched C₁-C₁₂ hydrocarbyl group. In general, it is preferred that R⁵ is a linear or branched C₁-C₁₂ hydrocarbyl group.

It is generally preferred that G² in formula (A3) is selected from a mono(oxy-C₁-C₆-alkylene) group, a mono(amino-C₁-C₆-alkylene) group and a poly(oxy-C₁-C₆-alkylene) group. It is further preferred that G² in formula (A3) is selected from mono(oxy-C₁-C₆-alkylene) and poly(oxy-C₁-C₆-alkylene). Even more preferably, G² is poly(oxy-C₁-C₆-alkylene).

The oxy-C₁-C₆-alkylene moiety in the mono(oxy-C₁-C₆-alkylene) group or the poly(oxy-C₁-C₆-alkylene) group, is preferably an oxy-C₂-C₆-alkylene moiety, more preferably an oxy-C₂-C₄-alkylene moiety, particularly an oxy-C₂-C₃-alkylene moiety (e.g. oxy-ethylene or oxy-propylene), such as an oxy-C₂-alkylene moiety or an oxy-C₃-alkylene moiety, with the oxy-C₃-alkylene moiety being most preferred.

The amino-C₁-C₆-alkylene moiety in the mono(amino-C₁-C₆-alkylene) group or the poly(amino-C₁-C₆-alkylene) group is preferably an amino-C₂-C₆-alkylene moiety, more preferably an amino-C₂-C₄-alkylene moiety, particularly an amino-C₂-C₃-alkylene moiety (e.g. amino-ethylene or amino-propylene), such as an amino-C₂-alkylene moiety or an amino-C₃-alkylene moiety, with the amino-C₃-alkylene moiety being most preferred.

When G² in formula (A3) is a poly(oxy-C₁-C₆-alkylene) group, then preferably G² is poly(oxy-C₂-C₆-alkylene), more preferably poly(oxy-C₂-C₄-alkylene), and still more preferably poly(oxy-C₂-C₃-alkylene).

When G² in formula (A3) is a poly(amino-C₁-C₆-alkylene) group, then preferably G² is poly(amino-C₂-C₆-alkylene), more preferably poly(amino-C₂-C₄-alkylene), and still more preferably poly(amino-C₂-C₃-alkylene).

It is generally preferred that G² in formula (A3) is selected from a mono(oxy-C₂-C₃-alkylene) group, a mono(amino-C₂-C₃-alkylene) group, a poly(oxy-C₂-C₃-alkylene) group and a poly(amino-C₂-C₃-alkylene) group. More preferably, G² is selected from a mono(oxy-C₂-C₃-alkylene) group, a mono(amino-C₂-C₃-alkylene) group and a poly(oxy-C₂-C₃-alkylene) group. It is further preferred that G² is selected from a mono(oxy-C₂-C₃-alkylene) group and a poly(oxy-C₂-C₃-alkylene) group. Even more preferably, G² is a poly(oxy-C₂-C₃-alkylene) group.

When G² in formula (A3) is a poly(oxy-C₁-C₆-alkylene) group, then the poly(oxy-C₁-C₆-alkylene) group may be a random copolymer consisting of oxy-C₁-C₆-alkylene units, an alternating copolymer consisting of oxy-C₁-C₆-alkylene units, a block copolymer consisting of oxy-C₁-C₆-alkylene units or a homopolymer consisting of oxy-C₁-C₆-alkylene units. For example, the poly(oxy-C₁-C₆-alkylene) group may be a homopolymer consisting of oxy-C₁-C₆-alkylene units. The same applies when the poly(oxy-C₁-C₆-alkylene) group is a poly(oxy-C₂-C₆-alkylene) group, a poly(oxy-C₂-C₄-alkylene) group or a poly(oxy-C₂-C₃-alkylene) group.

The poly(oxy-C₂-C₃-alkylene) group may be a random copolymer consisting of oxy-C₂-C₃-alkylene units, an alternating copolymer consisting of oxy-C₂-C₃-alkylene units, a block copolymer consisting of oxy-C₂-C₃-alkylene units or a homopolymer consisting of oxy-C₂-C₃-alkylene units. For example, the poly(oxy-C₂-C₃-alkylene) group may be a homopolymer consisting of oxy-C₂-C₃-alkylene units.

When G² in formula (A3) is a poly(amino-C₁-C₆-alkylene) group, then the poly(amino-C₁-C₆-alkylene) group may be a random copolymer consisting of amino-C₁-C₆-alkylene units, an alternating copolymer consisting of amino-C₁-C₆-alkylene units, a block copolymer consisting of amino-C₁-C₆-alkylene units or a homopolymer consisting of amino-C₁-C₆-alkylene units. For example, the poly(amino-C₁-C₆-alkylene) group may be a homopolymer consisting of amino-C₁-C₆-alkylene units. The same applies when the poly(amino-C₁-C₆-alkylene) group is a poly(amino-C₂-C₆-alkylene) group, a poly(amino-C₂-C₄-alkylene) group or a poly(amino-C₂-C₃-alkylene) group.

The poly(amino-C₂-C₃-alkylene) group may be a random copolymer consisting of amino-C₂-C₃-alkylene units, an alternating copolymer consisting of amino-C₂-C₃-alkylene units, a block copolymer consisting of amino-C₂-C₃-alkylene units or a homopolymer consisting of amino-C₂-C₃-alkylene units. For example, the poly(amino-C₂-C₃-alkylene) group may be a homopolymer consisting of amino-C₂-C₃-alkylene units. The poly(amino-C₂-C₃-alkylene) group may be a block copolymer consisting of amino-C₂-alkylene units and amino-C₃-alkylene units, a homopolymer consisting of amino-C₃-alkylene units or a homopolymer consisting of amino-C₂-alkylene units, especially a homopolymer consisting of amino-C₂-alkylene units or a homopolymer consisting of oxy-C₃-alkylene units.

When the oxy-C₂-C₃-alkylene moiety is oxy-C₂-alkylene (e.g. oxy-ethylene), it is generally preferred that the oxy-C₂-alkylene moiety is a linear or unbranched oxy-C₂-alkylene moiety (e.g. linear oxy-ethylene). The linear or unbranched oxy-C₂-alkylene moiety is -OCH₂CH₂- (i.e. not -OCH(CH₃)-).

When the oxy-C₂-C₃-alkylene moiety is oxy-C₃-alkylene (e.g. oxy-propylene), it is generally preferred that the oxy-C₃-alkylene moiety is a linear or unbranched oxy-C₃-alkylene moiety (e.g. linear oxy-propylene) or a branched oxy-C₃-alkylene moiety, preferably an oxy-C₃-alkylene moiety having a methyl-branch (e.g. branched oxy-propylene). The linear or unbranched oxy-C₃-alkylene moiety is -OCH₂CH₂CH₂-. The oxy-C₃-alkylene moiety having a methyl-branch is either -OCH(CH₃)CH₂- or -OCH₂CH(CH₃)-. More preferably, the oxy-C₃-alkylene moiety is a branched oxy-propylene (i.e. oxy-C₃-alkylene moiety having a methyl-branch).

When the amino-C₂-C₃-alkylene moiety is amino-C₂-alkylene (e.g. amino-ethylene), it is generally preferred that the amino-C₂-alkylene moiety is a linear or unbranched amino-C₂-alkylene moiety (e.g. linear amino-ethylene). The linear or unbranched amino-C₂-alkylene moiety is -NHCH₂CH₂- (i.e. not -NHCH(CH₃)-).

When the amino-C₂-C₃-alkylene moiety is amino-C₃-alkylene (e.g. amino-propylene), it is generally preferred that the amino-C₃-alkylene moiety is a linear or unbranched amino-C₃-alkylene moiety (e.g. linear amino-propylene) or a branched amino-C₃-alkylene moiety, preferably an amino-C₃-alkylene moiety having a methyl-branch (e.g. branched amino-propylene). The linear or unbranched amino-C₃-alkylene moiety is -NHCH₂CH₂CH₂-. The amino-C₃-alkylene moiety having a methyl-branch is either -NHCH(CH₃)CH₂- or -NHCH₂CH(CH₃)-.

In general, it is preferred that G² in formula (A3) is selected from: 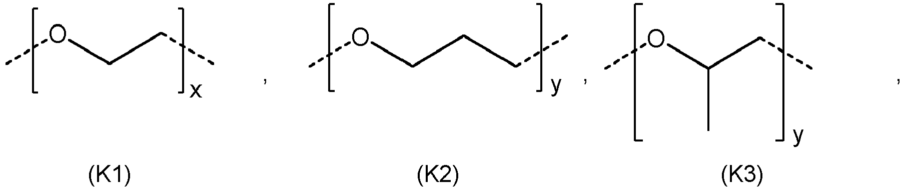 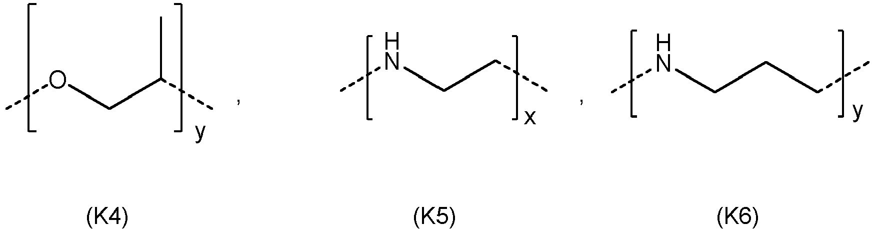 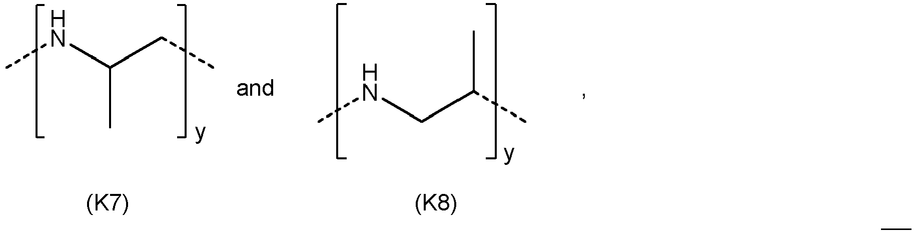 wherein each x and y is independently an integer from 1 to 50.

The dashed bonds above indicate the positions at which G² is directly bonded to R³, R⁵ or the nitrogen atom of a primary amine group. The orientation of each structure is not limited.

More preferably, G² in formula (A3) is selected from:

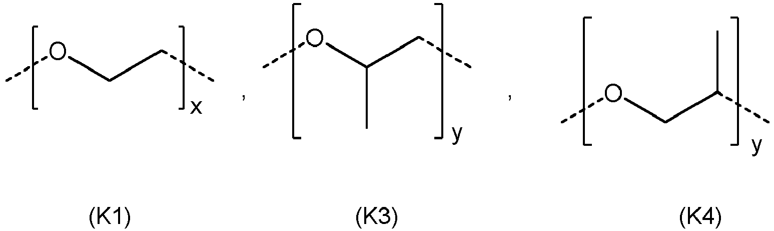

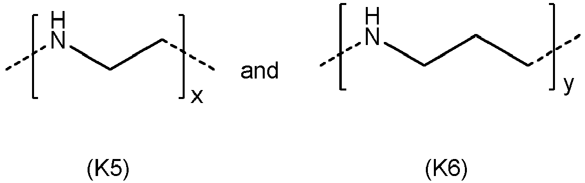

It is further preferred that G² in formula (A3) is selected from:

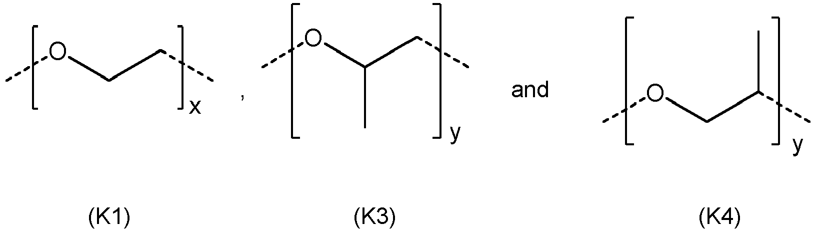

In the moieties represented above by formulas (K1) to (K8), each x and y is independently an integer from 1 to 50. It is preferred that each x and y is independently an integer from 1 to 30, more preferably each x and y is independently an integer from 1 to 25, particularly from 1 to 20, an even more preferably from 1 to 10.

In general, it is preferred that each x is independently an integer from 1 to 30, more preferably from 1 to 25, even more preferably from 1 to 10.

Independently of or in conjunction with the value of x, typically each y is independently an integer from 1 to 30, more preferably from 1 to 20, even more preferably from 1 to 10.

In embodiment 8, the or each triamine is represented by formula (A3a): 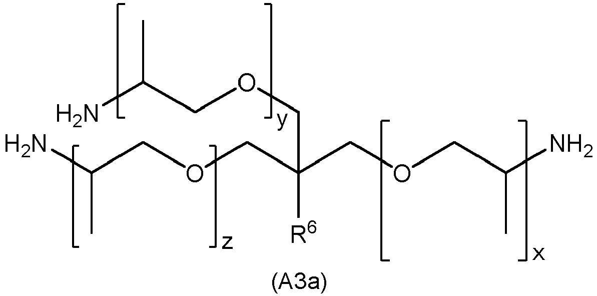 wherein:
R⁶ is hydrogen or ethyl;
x is an integer from 1 to 30;
y is an integer from 1 to 30; and
z is an integer from 1 to 30.

The triamine represented by formula (A3a) is commercially available as a Jeffamine^{™} T series diamine, such as T-403, T-3000 and T-5000.

The triamine represented by formula (A3a) is present as a triamine composition. The triamine composition comprises, or consists of, a plurality of triamines, wherein each triamine is represented by formula (A3a).

In the triamine composition, the plurality of triamines of formula (A3a) has a mean value of each of x, y and z of from about 1.5 to about 30.0, preferably from about 2.0 to about 28.5.

Additionally or alternatively, the plurality of triamines of formula (A3a) may have a weight-average molecular weight (M_{w}) of about 400 to about 5000, preferably from about 440 to about 5000, such as from about 440 to about 3000.

In general, the triamine may be present as a triamine composition. The triamine composition may comprise, or consist essentially of, a plurality of triamines represented by formula (A3), such as a mixture of diamines.

The triamine may be present as a triamine composition when G² has a repeating unit, where the number of repeating units varies and is present as a distribution. There may, for example, be a distribution of repeating units when G² is poly(oxy-C₁-C₆-alkylene) or poly(amino-C₁-C₆-alkylene), where the number of oxy-C₁-C₆-alkylene or amino-C₁-C₆-alkylene moieties, respectively, may vary per molecule of triamine.

The or each triamine composition comprises, or consists essentially of, a plurality of triamines. The triamine of the plurality of triamines is as described hereinabove with reference to the at least one triamine, where G² is poly(oxy-C₁-C₆-alkylene) or poly(amino-C₁-C₆-alkylene) .

The triamine composition may comprise a plurality of triamines having a number-average molecular weight (Mₙ) of from about 400 to about 5000, preferably from about 420 to about 4000, such as from about 440 to about 3000.

Additionally or alternatively, the triamine composition may comprise a plurality of triamines having a weight-average molecular weight (M_{w}) of from about 400 to about 5000, preferably from about 420 to about 4000, such as from about 440 to about 3000.

### First aspect

In the first aspect of the invention, the rheological additive comprises, or consists essentially, of a polyurea or a mixture of polyureas.

The polyurea or the mixture of polyureas can be obtained or is obtainable from the reaction between (a) a diisocyanate and (b) at least one primary monoamine having an aliphatic side chain. It is preferred that the polyurea or the mixture of polyureas is directly obtained or is directly obtainable from the reaction between (a) the diisocyanate and (b) the at least one primary monoamine having an aliphatic side chain. The polyurea or the mixture of polyureas is the reaction product of the reaction between (a) and (b). In other words, there is no other ingredient present in the reaction that contributes to the structure of the polyurea or the mixture of polyureas.

Further features in relation to the reaction between (a) the diisocyanate and (b) the at least one primary monoamine having an aliphatic side chain are described hereinbelow in relation to the process for the manufacture of a rheological additive.

The rheological additive may comprise, or consist essentially of, a polyurea represented by formula (P1) or a mixture of polyureas, wherein the mixture comprises at least one polyurea represented by formula (P1): 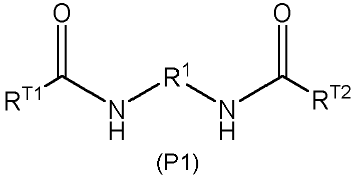 wherein R¹ is a linear C₂-C₁₂ alkylene group. For the avoidance of doubt, R¹ is an unsubstituted linear C₂-C₁₂ alkylene group.

The bis-urea moiety shown in formula (P1) is derivable from the diisocyanate. The groups R^{T1} and R^{T2} are derivable from the at least one primary monoamine having an aliphatic side chain.

In formula (P1), it is preferred that R¹ is a linear C₄-C₈ alkylene group, more preferably R¹ is a linear C₆ alkylene group.

In the polyurea represented by formula (P1), the groups R^{T1} and R^{T2} are derivable from the at least one primary monoamine having an aliphatic side chain.

In formula (P1), R^{T1} and R^{T2} is the same or different, and each of R^{T1} and R^{T2} is independently represented by formula (T):

E¹-G¹-R²-NH-^{#} (T)

wherein:
each R² is independently a single bond or a C₁-C₈ alkylene group;
each G¹ is independently a single bond or one or more units selected from oxy-C₁-C₆-alkylene, amino-C₁-C₆-alkylene and a combination thereof;
each E¹ is independently selected from the group consisting of C₁-C₂₀ alkyl, C₁-C₂₀ alkoxy and a silicon-containing group represented by formula (S):

   R^{a}_{q}(R^{b}O)_{3-q}Si- (S)
wherein:
each R^{a} is independently selected from C₁-C₄ alkyl, C₆-C₁₀ aryl and C₆-C₁₀ aryl-C₁-C₄ alkyl;
each R^{b} is independently selected from C₁-C₄ alkyl, C₆-C₁₀ aryl and C₆-C₁₀ aryl-C₁-C₄ alkyl;
each q is independently an integer of 0 to 3;
   with the provisos that:
   - G¹ and R² are not both single bonds;
   - E¹, G¹ and R² of each R^{T1} and R^{T2} is selected such that R^{T1} and R^{T2} do not have an oxygen-oxygen bond, an oxygen-nitrogen bond or a nitrogen-nitrogen bond; and
   - when E¹ is C₁-C₂₀ alkyl and R² is a C₁-C₈ alkylene group, then G¹ is not a single bond.

In formula (T) above, the hash (#) indicates the position at which the nitrogen atom of the NH group bonds to a carbonyl group in formula (P1).

Each of R^{T1} and R^{T2} is a terminal group. They are terminal groups in the sense that they are incorporated into the polyurea in a termination step during the polymerisation reaction.

In formula (T), E¹-G¹-R²- represents an aliphatic side chain. E¹ represents an end group. G¹ represents a linker group. R² is a C₁-C₈ alkylene group. G¹ and R² may optionally be present because they can each represent a single bond.

Both G¹ and R² cannot together be single bonds. Thus, when R² is a single bond, then G¹ is not a single bond. Similarly, when G¹ is a single bond, then R² is not a single bond. The nitrogen atom of the NH group in formula (T) is not directly bonded to E¹.

Each of R^{T1} and R^{T2} represented by formula (T) does not have any oxygen-oxygen, oxygen-nitrogen or nitrogen-nitrogen bonds.

Typically, when G¹ is not a single bond (e.g. is one or more units selected from oxy-C₁-C₆-alkylene, amino-C₁-C₆-alkylene and a combination thereof) and a carbon atom of a unit in the one or more units of G¹ is directly bonded to E¹, then R² is a C₁-C₈ alkylene group. When one end of G¹ (e.g. the first end of G¹) is directly bonded by a carbon atom to E¹, then the other end of G¹ (e.g. the second end of G¹) is either an oxygen atom or a nitrogen atom. R² is a C₁-C₈ alkylene group to ensure that both the oxygen atom or the nitrogen atom at the second end of G¹ and the nitrogen atom of the NH group in formula (T) are each bonded to a carbon atom (e.g. of the C₁-C₈ alkylene group).

When E¹ is C₁-C₂₀ alkoxy and G¹ is not a single bond (e.g. is one or more units selected from oxy-C₁-C₆-alkylene, amino-C₁-C₆-alkylene and a combination thereof), then one end of G¹ (e.g. the first end of G¹) is directly bonded by a carbon atom to E¹ (e.g. an oxygen atom of the C₁-C₂₀ alkoxy group).

For the avoidance of doubt, it is preferred that each of the C₁-C₂₀ alkyl, C₁-C₂₀ alkoxy, C₁-C₄ alkyl, C₆-C₁₀ aryl and C₆-C₁₀ aryl-C₁-C₄ alkyl groups are unsubstituted.

The alkyl moiety in each of the C₁-C₂₀ alkyl, C₁-C₂₀ alkoxy, C₁-C₄ alkyl, C₆-C₁₀ aryl and C₆-C₁₀ aryl-C₁-C₄ alkyl groups may be linear or branched.

Each E¹ in formula (T) may be C₁-C₂₀ alkyl, preferably C₁-C₁₃ alkyl, such as C₁-C₁₂ alkyl, and more preferably C₁-C₈ alkyl.

Each E¹ in formula (T) may be C₁-C₂₀ alkoxy, preferably C₁-C₁₃ alkoxy, such as C₁-C₁₂ alkoxy, and more preferably C₁-C₈ alkoxy, particularly C₁-C₄ alkoxy.

Each E¹ in formula (T) may be a silicon-containing group represented by formula (S). It is preferred that each R^{a} is independently selected from C₁-C₄ alkyl, phenyl and phenyl-C₁-C₄ alkyl; each R^{b} is independently selected from C₁-C₄ alkyl, phenyl and phenyl-C₁-C₄ alkyl; and each q is independently an integer of 0 to 3, such as 0, 1 or 2. More preferably, each R^{a} is independently selected from C₁-C₂ alkyl and phenyl; each R^{b} is independently selected from C₁-C₂ alkyl and phenyl; and each q is independently an integer of 0 to 3, such as 0, 1 or 2. Even more preferably, each R^{a} is independently C₁-C₂ alkyl; each R^{b} is independently from C₁-C₂ alkyl; and each q is independently an integer of 0 to 3, preferably 0, 1 or 2.

It may be advantageous for the end group or E¹ to be a silicon-containing group represented by formula (S). This group is hydrolysable, especially when q is an integer from 0 to 2, and can aid moisture curing of the rheological additive.

Each G¹ in formula (T) may be one or more units selected from oxy-C₁-C₆-alkylene, amino-C₁-C₆-alkylene and a combination thereof. The combination may be an (oxy-C₁-C₆-alkylene)-(amino-C₁-C₆-alkylene) group or an (amino-C₁-C₆-alkylene)-(oxy-C₁-C₆-alkylene) group. In the (oxy-C₁-C₆-alkylene)-(amino-C₁-C₆-alkylene) group, the nitrogen atom of the amino-C₁-C₆-alkylene moiety is bonded to a carbon atom of the oxy-C₁-C₆-alkylene moiety. In the (amino-C₁-C₆-alkylene)-(oxy-C₁-C₆-alkylene) group, the oxygen atom of the oxy-C₁-C₆-alkylene moiety is bonded to a carbon atom of the amino-C₁-C₆-alkylene moiety.

Each G¹ in formula (T) may have more than one unit, or a plurality of units (e.g. two or more units), selected from oxy-C₁-C₆-alkylene, amino-C₁-C₆-alkylene and a combination thereof. When there is more than one unit, it is preferred that G¹ in formula (T) is selected from poly(oxy-C₁-C₆-alkylene) and poly(amino-C₁-C₆-alkylene).

It is generally preferred G¹ in formula (T) is selected from a single bond, mono(oxy-C₁-C₆-alkylene), mono(amino-C₁-C₆-alkylene), an (oxy-C₁-C₆-alkylene)-(amino-C₁-C₆-alkylene) group, an (amino-C₁-C₆-alkylene)-(oxy-C₁-C₆-alkylene) group, poly(oxy-C₁-C₆-alkylene) and poly(amino-C₁-C₆-alkylene). More preferably, the linker group or G¹ is selected from a single bond, mono(oxy-C₁-C₆-alkylene), mono(amino-C₁-C₆-alkylene), poly(oxy-C₁-C₆-alkylene) and poly(amino-C₁-C₆-alkylene). It is further preferred that the linker group or G¹ is selected from a single bond, mono(oxy-C₁-C₆-alkylene), mono(amino-C₁-C₆-alkylene) and poly(oxy-C₁-C₆-alkylene). Even more preferably, the linker group or G¹ is selected from mono(oxy-C₁-C₆-alkylene) and poly(oxy-C₁-C₆-alkylene).

G¹ in formula (T) may be one or more units selected from oxy-C₁-C₆-alkylene, amino-C₁-C₆-alkylene and a combination thereof.

The oxy-C₁-C₆-alkylene group is preferably an oxy-C₂-C₆-alkylene group, more preferably an oxy-C₂-C₄-alkylene group, particularly an oxy-C₂-C₃-alkylene group (e.g. oxy-ethylene or oxy-propylene), such as an oxy-C₂-alkylene group or an oxy-C₃-alkylene group, with the oxy-C₃-alkylene group being most preferred.

The amino-C₁-C₆-alkylene group is preferably an amino-C₂-C₆-alkylene group, more preferably an amino-C₂-C₄-alkylene group, particularly an amino-C₂-C₃-alkylene group (e.g. amino-ethylene or amino-propylene), such as an amino-C₂-alkylene group or an amino-C₃-alkylene group, with the amino-C₃-alkylene group being most preferred.

The combination of the oxy-C₁-C₆-alkylene group and the amino-C₁-C₆-alkylene group is preferably an (oxy-C₂-C₆-alkylene)-(amino-C₂-C₆-alkylene) group or an (amino-C₂-C₆-alkylene)-(oxy-C₂-C₆-alkylene) group, more preferably an (oxy-C₂-C₄-alkylene)-(amino-C₂-C₄-alkylene) group or an (amino-C₂-C₄-alkylene)-(oxy-C₂-C₄-alkylene) group, even more preferably an (oxy-C₂-C₃-alkylene)-(amino-C₂-C₃-alkylene) group or an (amino-C₂-C₃-alkylene)-(oxy-C₂-C₃-alkylene) group.

When G¹ in formula (T) has more than one unit, or a plurality of units (e.g. two or more units), then preferably G¹ in formula (T) is selected from poly(oxy-C₂-C₆-alkylene) and poly(amino-C₂-C₆-alkylene), more preferably selected from poly(oxy-C₂-C₄-alkylene) and poly(amino-C₂-C₄-alkylene), and still more preferably selected from poly(oxy-C₂-C₃-alkylene) and poly(amino-C₂-C₃-alkylene).

It is generally preferred that G¹ in formula (T) is selected from a single bond, mono(oxy-C₂-C₃-alkylene), mono(amino-C₂-C₃-alkylene), an (oxy-C₂-C₃-alkylene)-(amino-C₂-C₃-alkylene) group, an (amino-C₂-C₃-alkylene)-(oxy-C₂-C₃-alkylene) group, poly(oxy-C₂-C₃-alkylene) and poly(amino-C₂-C₃-alkylene). More preferably, G¹ is selected from a single bond, mono(oxy-C₂-C₃-alkylene), mono(amino-C₂-C₃-alkylene), poly(oxy-C₂-C₃-alkylene) and poly(amino-C₂-C₃-alkylene). It is further preferred that G¹ is selected from a single bond, mono(oxy-C₂-C₃-alkylene), mono(amino-C₂-C₃-alkylene) and poly(oxy-C₂-C₃-alkylene). Even more preferably, G¹ is selected from mono(oxy-C₂-C₃-alkylene) and poly(oxy-C₂-C₃-alkylene).

When G¹ in formula (T) is a poly(oxy-C₁-C₆-alkylene) group, then the poly(oxy-C₁-C₆-alkylene) group may be a random copolymer consisting of oxy-C₁-C₆-alkylene units, an alternating copolymer consisting of oxy-C₁-C₆-alkylene units, a block copolymer consisting of oxy-C₁-C₆-alkylene units or a homopolymer consisting of oxy-C₁-C₆-alkylene units. For example, the poly(oxy-C₁-C₆-alkylene) group may be a block copolymer consisting of oxy-C₁-C₆-alkylene units or a homopolymer consisting of oxy-C₁-C₆-alkylene units.

When the poly(oxy-C₁-C₆-alkylene) group is a poly(oxy-C₂-C₆-alkylene) group, then the poly(oxy-C₂-C₆-alkylene) group may be a random copolymer consisting of oxy-C₂-C₆-alkylene units, an alternating copolymer consisting of oxy-C₂-C₆-alkylene units, a block copolymer consisting of oxy-C₂-C₆-alkylene units or a homopolymer consisting of oxy-C₂-C₆-alkylene units. For example, the poly(oxy-C₂-C₆-alkylene) group may be a block copolymer consisting of oxy-C₂-C₆-alkylene units or a homopolymer consisting of oxy-C₂-C₆-alkylene units.

When the poly(oxy-C₁-C₆-alkylene) group is a poly(oxy-C₂-C₄-alkylene) group, then the poly(oxy-C₂-C₄-alkylene) group may be a random copolymer consisting of oxy-C₂-C₄-alkylene units, an alternating copolymer consisting of oxy-C₂-C₄-alkylene units, a block copolymer consisting of oxy-C₂-C₄-alkylene units or a homopolymer consisting of oxy-C₂-C₄-alkylene units. For example, the poly(oxy-C₂-C₄-alkylene) group may be a block copolymer consisting of oxy-C₂-C₄-alkylene units or a homopolymer consisting of oxy-C₂-C₄-alkylene units.

When the poly(oxy-C₁-C₆-alkylene) group is a poly(oxy-C₂-C₃-alkylene) group, then the poly(oxy-C₂-C₃-alkylene) group may be a random copolymer consisting of oxy-C₂-C₃-alkylene units, an alternating copolymer consisting of oxy-C₂-C₃-alkylene units, a block copolymer consisting of oxy-C₂-C₃-alkylene units or a homopolymer consisting of oxy-C₂-C₃-alkylene units. For example, the poly(oxy-C₂-C₃-alkylene) group may be a block copolymer consisting of oxy-C₂-C₃-alkylene units or a homopolymer consisting of oxy-C₂-C₃-alkylene units. The poly(oxy-C₂-C₃-alkylene) group may be a block copolymer consisting of oxy-C₂-alkylene units and oxy-C₃-alkylene units, a homopolymer consisting of oxy-C₃-alkylene units or a homopolymer consisting of oxy-C₂-alkylene units, especially a block copolymer consisting of oxy-C₂-alkylene units and oxy-C₃-alkylene units or a homopolymer consisting of oxy-C₃-alkylene units.

When G¹ in formula (T) is a poly(amino-C₁-C₆-alkylene) group, then the poly(amino-C₁-C₆-alkylene) group may be a random copolymer consisting of amino-C₁-C₆-alkylene units, an alternating copolymer consisting of amino-C₁-C₆-alkylene units, a block copolymer consisting of amino-C₁-C₆-alkylene units or a homopolymer consisting of amino-C₁-C₆-alkylene units. For example, the poly(amino-C₁-C₆-alkylene) group may be a homopolymer consisting of amino-C₁-C₆-alkylene units.

When the poly(amino-C₁-C₆-alkylene) group is a poly(amino-C₂-C₆-alkylene) group, then the poly(amino-C₂-C₆-alkylene) group may be a random copolymer consisting of amino-C₂-C₆-alkylene units, an alternating copolymer consisting of amino-C₂-C₆-alkylene units, a block copolymer consisting of amino-C₂-C₆-alkylene units or a homopolymer consisting of amino-C₂-C₆-alkylene units. It is preferred that the poly(amino-C₂-C₆-alkylene) group is a homopolymer consisting of amino-C₂-C₆-alkylene units.

When the poly(amino-C₁-C₆-alkylene) group is a poly(amino-C₂-C₄-alkylene) group, then the poly(amino-C₂-C₄-alkylene) group may be a random copolymer consisting of amino-C₂-C₄-alkylene units, an alternating copolymer consisting of amino-C₂-C₄-alkylene units, a block copolymer consisting of amino-C₂-C₄-alkylene units or a homopolymer consisting of amino-C₂-C₄-alkylene units. For example, the poly(amino-C₂-C₄-alkylene) group may be a homopolymer consisting of amino-C₂-C₄-alkylene units.

When the poly(amino-C₁-C₆-alkylene) group is a poly(amino-C₂-C₃-alkylene) group, then the poly(amino-C₂-C₃-alkylene) group may be a random copolymer consisting of amino-C₂-C₃-alkylene units, an alternating copolymer consisting of amino-C₂-C₃-alkylene units, a block copolymer consisting of amino-C₂-C₃-alkylene units or a homopolymer consisting of amino-C₂-C₃-alkylene units. For example, the poly(amino-C₂-C₃-alkylene) group may be a homopolymer consisting of amino-C₂-C₃-alkylene units. The poly(amino-C₂-C₃-alkylene) group may be a block copolymer consisting of amino-C₂-alkylene units and amino-C₃-alkylene units, a homopolymer consisting of amino-C₃-alkylene units or a homopolymer consisting of amino-C₂-alkylene units, especially a homopolymer consisting of amino-C₂-alkylene units or a homopolymer consisting of oxy-C₃-alkylene units.

G¹ in formula (T) may include an oxy-C₂-C₃-alkylene moiety, such as when G¹ is a mono(oxy-C₂-C₃-alkylene) group or a poly(oxy-C₂-C₃-alkylene) group.

When the oxy-C₂-C₃-alkylene moiety is oxy-C₂-alkylene (e.g. oxy-ethylene), it is generally preferred that the oxy-C₂-alkylene moiety is a linear or unbranched oxy-C₂-alkylene moiety (e.g. linear oxy-ethylene). The linear or unbranched oxy-C₂-alkylene moiety is -OCH₂CH₂- (i.e. not -OCH(CH₃)-).

When the oxy-C₂-C₃-alkylene moiety is oxy-C₃-alkylene (e.g. oxy-propylene), it is generally preferred that the oxy-C₃-alkylene moiety is a linear or unbranched oxy-C₃-alkylene moiety (e.g. linear oxy-propylene) or a branched oxy-C₃-alkylene moiety, preferably an oxy-C₃-alkylene moiety having a methyl-branch (e.g. branched oxy-propylene). The linear or unbranched oxy-C₃-alkylene moiety is -OCH₂CH₂CH₂-. The oxy-C₃-alkylene moiety having a methyl-branch is either -OCH(CH₃)CH₂- or -OCH₂CH(CH₃)-. More preferably, the oxy-C₃-alkylene moiety is a branched oxy-propylene (i.e. oxy-C₃-alkylene moiety having a methyl-branch).

G¹ in formula (T) can include an amino-C₂-C₃-alkylene moiety, such as when G¹ is a mono(amino-C₂-C₃-alkylene) group or a poly(amino-C₂-C₃-alkylene) group.

When the amino-C₂-C₃-alkylene moiety is amino-C₂-alkylene (e.g. amino-ethylene), it is generally preferred that the amino-C₂-alkylene moiety is a linear or unbranched amino-C₂-alkylene moiety (e.g. linear amino-ethylene). The linear or unbranched amino-C₂-alkylene moiety is -NHCH₂CH₂- (i.e. not -NHCH(CH₃)-).

When the amino-C₂-C₃-alkylene moiety is amino-C₃-alkylene (e.g. amino-propylene), it is generally preferred that the amino-C₃-alkylene moiety is a linear or unbranched amino-C₃-alkylene moiety (e.g. linear amino-propylene) or a branched amino-C₃-alkylene moiety, preferably an amino-C₃-alkylene moiety having a methyl-branch (e.g. branched amino-propylene). The linear or unbranched amino-C₃-alkylene moiety is -NHCH₂CH₂CH₂-. The amino-C₃-alkylene moiety having a methyl-branch is either -NHCH(CH₃)CH₂- or -NHCH₂CH(CH₃)-.

In general, it is preferred that G¹ in formula (T) is independently a single bond or is selected from: 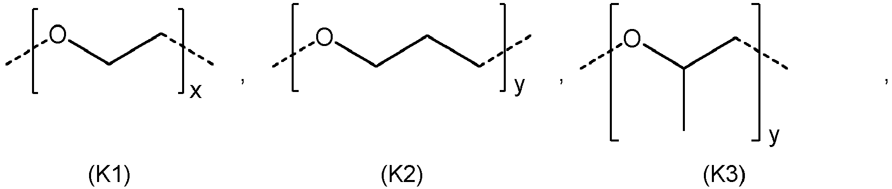 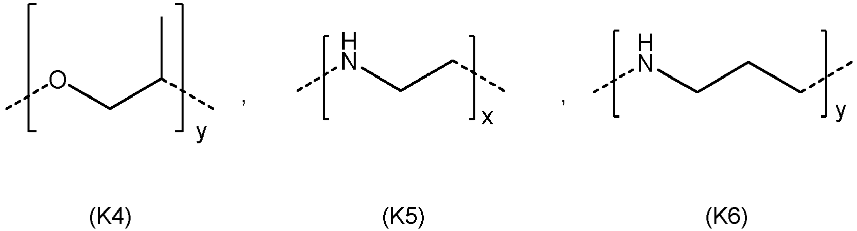 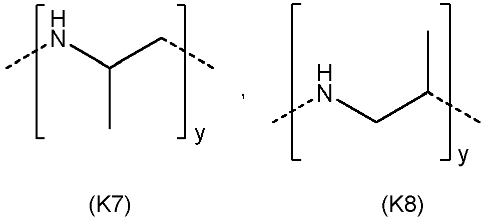 and a combination of two or more thereof;
wherein each x and y is independently an integer from 1 to 100.

The dashed bonds above indicate the positions at which the linker group or G¹ is directly bonded to either the end group or E¹, the optional C₁-C₈ alkylene group or R², or to the nitrogen atom of the NH group shown in formula (T). The orientation of each structure is not limited.

More preferably, G¹ in formula (T) is independently a single bond or is selected from:

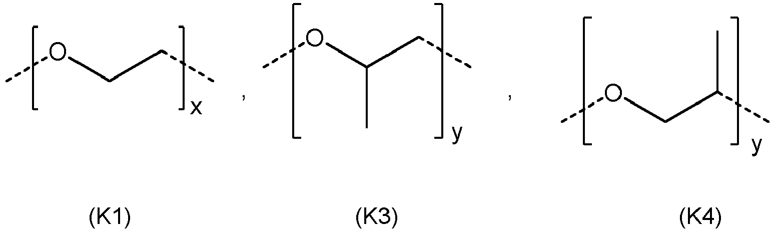

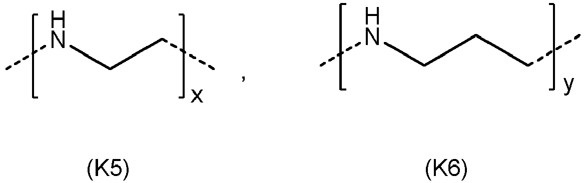

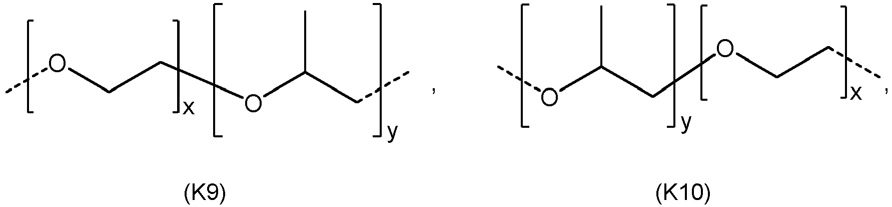

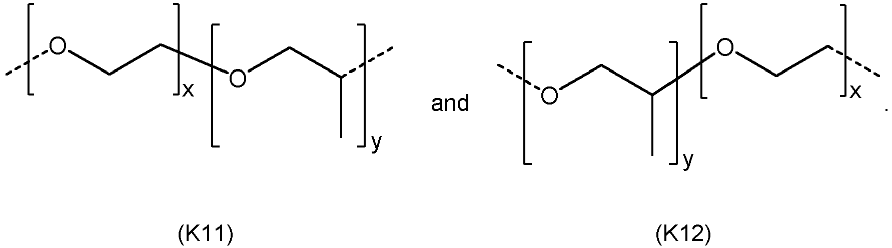

It is further preferred that G¹ in formula (T) is independently selected from:

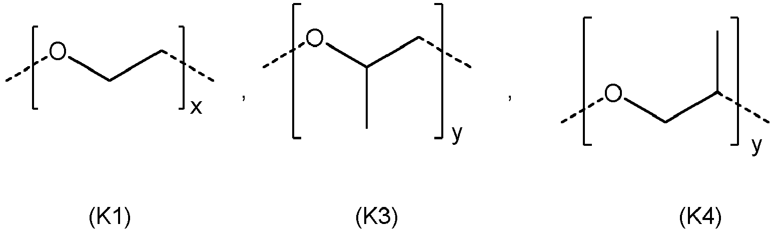

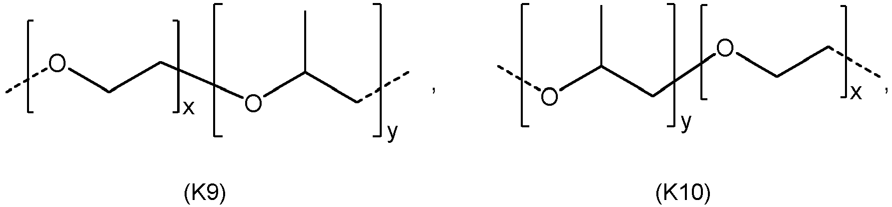

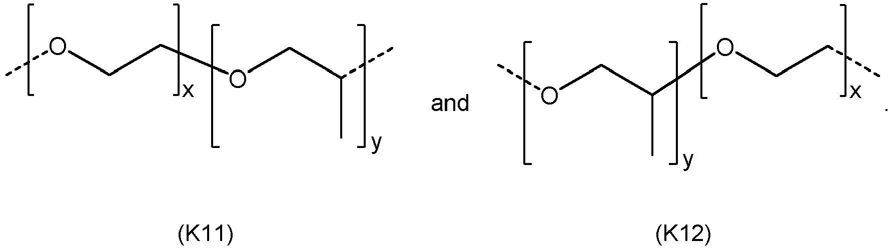

In the moieties represented above by formulas (K1) to (K12), each x and y is independently an integer from 1 to 100. It is preferred that each x and y is independently an integer from 1 to 50, more preferably each x and y is independently an integer from 1 to 25, particularly from 1 to 15, an even more preferably from 1 to 10.

In general, it is preferred that each x is independently an integer from 1 to 15, more preferably from 1 to 10, even more preferably from 1 to 5.

Additionally or alternatively, typically each y is independently an integer from 1 to 10, more preferably from 1 to 8, even more preferably from 1 to 4.

In formula (T), R² is a single bond or a C₁-C₈ alkylene group. For the avoidance of doubt, the C₁-C₈ alkylene group is unsubstituted and may be linear or branched.

In general, when R² is a C₁-C₈ alkylene group, then preferably R² is a C₂-C₆ alkylene group, more preferably a C₂-C₄ alkylene group, particularly a C₂-C₃ alkylene group. The C₂-C₃ alkylene group is preferably a linear or unbranched C₂-alkylene moiety (e.g. linear ethylene, -CH₂CH₂-), a linear or unbranched C₃-alkylene moiety (e.g. linear propylene, -CH₂CH₂CH₂-) or a C₃-alkylene moiety having a methyl-branch (e.g. branched propylene, -CH(CH₃)CH₂-).

In formula (P1), each R^{T1} and R^{T2} may independently be derived from a primary monoamine selected from 2-methoxyethylamine, 3-methoxypropylamine, 3-butoxypropylamine, hexyloxypropylamine, 3-(2-ethylhexyloxy)propylamine, octylpropylamine, decyloxypropyl-amine, isodecyloxypropylamine, dodecyloxypropylamine, tetradecyloxypropylamine, isotridecyloxypropyl, tetradecyloxypropylamine, a linear C₁-C₂₀-alkoxypropylamine, 3-aminopropyltriethoxysilane, 3-aminopropyltrimethoxysilane, (3-aminopropyl)methyl-diethoxysilane, (3-aminopropyl)methyldimethoxysilane, N-(2-aminoethyl)-3-aminopropyl-triethoxysilane, N-(2-aminoethyl)-3-aminopropyltrimethoxy-silane, 3-(2-aminoethylamino)-propyldiethoxymethyl-silane, 3-(2-aminoethylamino)propyldimethoxymethylsilane and a polyether monoamine having an aliphatic side chain derived from polypropylene glycol (PPG) or a block copolymer of polyethylene glycol and polypropylene glycol (e.g. PEG/PPG), such as the Jeffamine^{™} M series of monoamines. It is preferred that the primary monoamine is selected from 2-methoxyethylamine, 3-methoxypropylamine, 3-butoxypropylamine, hexyloxypropylamine, 3-(2-ethylhexyloxy)propylamine, 3-aminopropyltriethoxysilane, 3-aminopropyltrimethoxysilane, (3-aminopropyl)methyldiethoxysilane, (3-aminopropyl)-methyldimethoxysilane, *N*-(2-aminoethyl)-3-aminopropyltriethoxysilane, *N-*(2-aminoethyl)-3-aminopropyltrimethoxy-silane, 3-(2-aminoethylamino)propyldiethoxy-methyl-silane, 3-(2-aminoethylamino)propyldimethoxymethylsilane and a polyether monoamine having an aliphatic side chain derived from polypropylene glycol (PPG) or a block copolymer of polyethylene glycol and polypropylene glycol (e.g. PEG/PPG). More preferably, the primary monoamine is selected from 3-(2-ethylhexyloxy)propylamine and a polyether monoamine having an aliphatic side chain derived from polypropylene glycol (PPG) or a block copolymer of polyethylene glycol and polypropylene glycol (e.g. PEG/PPG).

In embodiment 1, at least one or both of R^{T1} and R^{T2} is represented by formula (T), wherein R² is a single bond; G¹ is an oxy-C₂-C₃-alkylene group (e.g. mono(oxy-C₂-C₃-alkylene), and E¹ is C₁-C₁₃ alkyl.

It is preferred that at least one or both of R^{T1} and R^{T2} is:

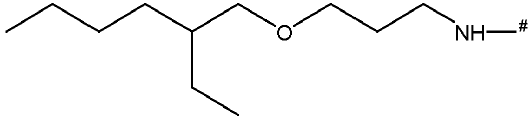

In embodiment 2, in formula (P1), at least one or both of R^{T1} and R^{T2} is represented by formula (T), wherein R² is a single bond; G¹ is a block copolymer of an oxy-C₂-alkylene unit and oxy-C₃-alkylene unit, such as: 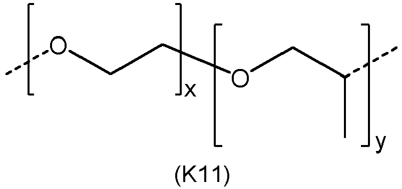 wherein:
x is an integer from 1 to 10, preferably 1 to 5; and
y is an integer from 1 to 10, preferably from 1 to 8;
and E¹ is C₁-C₈ alkyl.

It is preferred that at least one or both of R^{T1} and R^{T2} is: 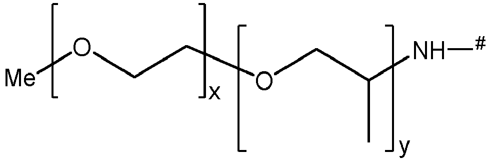 wherein:
x is an integer from 1 to 10, preferably 1 to 5; and
y is an integer from 1 to 10, preferably from 1 to 8.

In embodiment 3, in formula (P1), at least one or both of R^{T1} and R^{T2} is represented by formula (T), wherein R² is a C₂-C₃ alkylene group, G¹ is a block copolymer of an oxy-C₂-alkylene unit and an oxy-C₃-alkylene unit, such as: 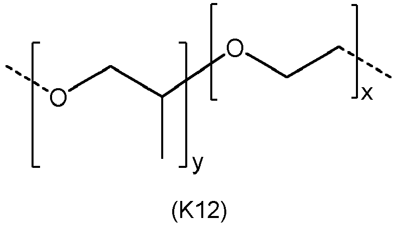 wherein:
x is 1; and
y is an integer from 1 to 10, preferably from 1 to 8;
and E¹ is C₁-C₈ alkoxy.

It is preferred that at least one or both of R^{T1} and R^{T2} is: 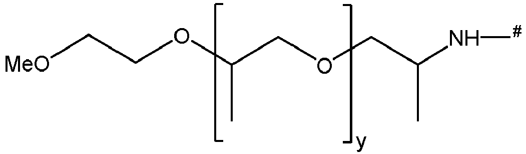 wherein:
y is an integer from 1 to 10, preferably from 1 to 8.

In embodiment 4, in formula (P1), at least one or both of R^{T1} and R^{T2} is represented by formula (T), wherein E¹ is represented by formula (S), wherein each R^{a} is independently selected from C₁-C₂ alkyl, preferably methyl; each R^{b} is independently selected from C₁-C₂ alkyl; and q is an integer of 0, 1 or 2; and either:
(A) G¹ is an amino-C₂-C₃-alkylene group (e.g. mono(amino-C₂-C₃-alkylene), preferably a linear amino-C₃-alkylene group, and R² is a C₂-C₃ alkylene group, preferably a linear C₃ alkylene group; or
(B) G¹ is a single bond and R² is a C₂-C₃ alkylene group, preferably a linear C₃ alkylene group.

In embodiment 4, it is preferred that at least one of, or both of, R^{T1} and R^{T2} is derived from a primary monoamine selected from the at least one primary monoamine is 3-aminopropyltriethoxysilane, 3-aminopropyltrimethoxysilane, (3-aminopropyl)methyldiethoxysilane, (3-aminopropyl)methyldimethoxysilane, N-(2-aminoethyl)-3-aminopropyl-triethoxysilane, N-(2-aminoethyl)-3-aminopropyltrimethoxy-silane, 3-(2-aminoethylamino)-propyldiethoxymethylsilane and 3-(2-aminoethylamino)propyldimethoxymethylsilane.

In the first aspect of the invention, it is generally preferred that the polyurea or the mixture of polyureas is obtained or is obtainable, more preferably directly obtained or is directly obtainable, from the reaction between (a) a single diisocyanate and (b) at least one primary monoamine having an aliphatic side chain. Thus, the polyurea or the mixture of polyureas is derived from only one diisocyanate.

The rheological additive may comprise, or consist essentially, of a single polyurea.

The single polyurea may be a symmetric polyurea or an asymmetric polyurea. An asymmetric polyurea may be obtained from the process of the third aspect of the invention.

When the polyurea is a symmetric polyurea, then R^{T1} and R^{T2} are the same in formula (P1). When the polyurea is an asymmetric polyurea, then R^{T1} is different to R^{T2} in formula (P1).

Typically, a single polyurea is obtained or is obtainable, more preferably directly obtained or is directly obtainable, from the reaction between (a) a single diisocyanate and (b) a single primary monoamine having an aliphatic side chain.

In general, when the linker group of the aliphatic side chain or G¹ in formula (A) or formula (T) is a single bond, a mono(oxy-C₁-C₆-alkylene) group or a mono(amino-C₁-C₆-alkylene) group, then a symmetric polyurea can be obtained. If the linker group or G¹ in formula (A) or formula (Y) does not exist as a distribution (e.g. it has a single structure), then a single polyurea will be obtained, which is a symmetric polyurea.

The rheological additive may comprise, or consist essentially of, a mixture of polyureas.

One way in which a mixture of polyureas may be obtained is if a primary monoamine is used in which the linker group or G¹ has a repeating unit, in which the number of repeating units varies and is present as a distribution (e.g. when G¹ is poly(oxy-C₁-C₆-alkylene) and poly(amino-C₁-C₆-alkylene)). When the composition of a primary monoamine varies as a distribution based on the number of repeating units in the linker group, then the composition of the resulting polyurea will also vary as a distribution based on the number of these repeating units. The rheological additive will therefore include a mixture of polyureas that have the same basic structure, but where there is a distribution in the number of repeating units that make up the overall polyurea structure.

The mixture of polyureas can be obtained or is obtainable from the reaction between (a) a diisocyanate and (b) at least one primary monoamine composition. The or each primary monoamine composition comprises, or consists essentially of, primary monoamines, which each have an aliphatic side chain. It is preferred that the mixture of polyureas is directly obtained or is directly obtainable from the reaction between (a) the diisocyanate and (b) the at least one primary monoamine composition. The mixture of polyureas is the reaction product of the reaction between (a) and (b). In other words, there is no other ingredient present in the reaction that contributes to the structure of the mixture of polyureas.

The mixture of polyureas is obtained or is obtainable, more preferably directly obtained or is directly obtainable, from the reaction between (a) a single diisocyanate and (b) the at least one primary monoamine composition. Thus, the mixture of polyureas is derived from only one diisocyanate.

Typically, the mixture of polyureas is obtained or is obtainable, more preferably is directly obtained or is directly obtainable, from the reaction between (a) a single diisocyanate and (b) a single primary monoamine composition, as described herein above.

The rheological additive may comprise, or consist essentially of, a mixture of polyureas, wherein the mixture comprises polyureas (e.g. a plurality of polyureas) represented by formula (P1'): 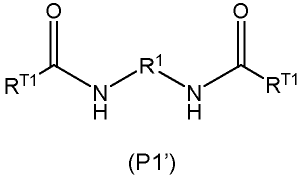 wherein R¹ is a linear C₂-C₁₂ alkylene group or is defined as described above.

In formula (P1'), each R^{T1} is represented by formula (T'):

E¹-G¹-R²-NH-^{#} (T')

wherein:
every R² is the same and is a single bond or a C₁-C₈ alkylene group;
G¹ is the same group and is selected from poly(oxy-C₁-C₆-alkylene) and poly(amino-C₁-C₆-alkylene);
every E¹ is the same and is selected from the group consisting of C₁-C₂₀ alkyl, C₁-C₂₀ alkoxy and a silicon-containing group represented by formula (S):

   R^{a}_{q}(R^{b}O)_{3-q}Si- (S)
wherein:
every R^{a} is the same and is selected from C₁-C₄ alkyl, C₆-C₁₀ aryl and C₆-C₁₀ aryl-C₁-C₄ alkyl;
every R^{b} is the same and is selected from C₁-C₄ alkyl, C₆-C₁₀ aryl and C₆-C₁₀ aryl-C₁-C₄ alkyl; and
every q is the same and is an integer of 0 to 3;
with the proviso that:
- E¹, G¹ and R² of R^{T1} are selected such that R^{T1} does not have an oxygen-oxygen bond, an oxygen-nitrogen bond or a nitrogen-nitrogen bond.

G¹ in formula (T') is preferably selected from poly(oxy-C₂-C₆-alkylene) and poly(amino-C₂-C₆-alkylene), more preferably selected from poly(oxy-C₂-C₄-alkylene) and poly(amino-C₂-C₄-alkylene), and still more preferably selected from poly(oxy-C₂-C₃-alkylene) and poly(amino-C₂-C₃-alkylene).

It is generally preferred that G¹ in formula (T') is poly(oxy-C₁-C₆-alkylene), more preferably poly(oxy-C₂-C₆-alkylene), particularly poly(oxy-C₂-C₄-alkylene), and even more preferably poly(oxy-C₂-C₃-alkylene).

G¹ in formula (T') may be as described hereinabove with respect to G¹ in formula (A') in the section on the primary monoamine.

Another way in which a mixture of polyureas may be obtained is when a plurality of primary monoamines is used to react with the linear diisocyanate. In other words, two or more primary monoamines, each having a different structure, can be used to prepare polyureas.

The mixture of polyureas may be obtained or is obtainable, preferably directly obtained or is directly obtainable, from the reaction between (a) a diisocyanate and (b) a plurality of primary monoamines, such as a first primary monoamine, a second primary monoamine and so on. Each primary monoamine of the plurality of primary monoamines has a structure (i.e. as defined herein above), which is different to the structure of one or more other primary monoamines of the plurality of primary monoamines.

When a mixture of polyureas is prepared from several different primary monoamines, then the resulting rheological additive may provide sealant or adhesive formulations having a superior texture, such as a smooth surface.

The mixture of polyureas is obtained or is obtainable, more preferably directly obtained or is directly obtainable, from the reaction between (a) a single diisocyanate and (b) a plurality of primary monoamines.

In (b), the plurality of primary monoamines may be present as a primary monoamines composition, preferably a single primary monoamines composition. The primary monoamines composition comprises, or consists essentially of, a plurality of primary monoamines.

The plurality of monoamines may include a first primary monoamine and a second primary monoamine. Each of the first primary monoamine and the second primary monoamine is as herein described above.

In general, it is preferred that at least one of E¹, G¹ or R² (e.g. in formula (A)) of the first primary monoamine is different to E¹, G¹ or R², respectively of second primary monoamine.

It may be preferable that the first primary monoamine is a primary monoamine of embodiment 1 and the second primary monoamine is a primary monoamine of embodiment 2 or embodiment 3. The second primary monoamine may be a plurality of second primary amines having a weight-average molecular weight (M_{w}) of from about 600 to about 3000, preferably from about 600 to 2000.

The mixture of polyureas comprises, or consists essentially of, a plurality of polyureas, wherein each polyurea of the plurality of polyureas is represented by formula (P1) as herein described above.

The plurality of polyureas may include one or more symmetric polyureas, such as a polyurea obtained from only the first primary monoamine and a polyurea obtained from only the second primary monoamine.

Additionally or alternatively, the plurality of polyureas may include an asymmetric polyurea, wherein R^{T1} in formula (P1) is derived from the first primary monoamine and R^{T2} in formula (P1) is derived from the second primary monoamine.

A general feature of the rheological additive of the first aspect of the invention is that the rheological additive has a water content of less than or equal to 2.0 wt%, such as less than or equal to 1.5 wt%, preferably less than or equal to 0.5 wt%, more preferably less than or equal to 0.1 wt %. Water can be removed from the polyurea, the mixture of polyureas or the rheological additive by conventional methods, such as by drying in air or with heated dry air. Alternatively, more moisture scavenger can be added to the formulation as needed. The presence of water in the sealant or adhesive formulation surprising does not have a detrimental effect on the product, in that the water does not seem to react with the silyl groups of the resin. It also does not affect other properties, such as viscosity and anti-sag.

The rheological additive may further comprise a plasticizer, such as a plasticizer as described herein. It is preferred that the plasticizer is a phthalate.

The rheological additive may be a pre-activated rheological additive.

The first aspect of the invention also provides a process for the manufacture of the rheological additive, which comprises a polyurea or a mixture of polyureas.

The process comprises reacting (a) the diisocyanate with (b) the at least one primary monoamine having an aliphatic side chain. The at least one primary monoamine may be present as a primary monoamine composition or a primary monoamines composition.

In general, the process is a one-pot process.

The step of reacting (a) the diisocyanate with (b) the at least one primary monoamine may comprise mixing (a) the diisocyanate and (b) the at least one primary monoamine at a temperature of at least 25°C, such as at least 35°C. Typically, the mixing is in a solvent.

The process may comprise adding the diisocyanate to the at least one primary monoamine, preferably to the at least one primary monoamine in a solvent, while stirring.

The reaction between the diisocyanate and the at least one primary monoamine may be monitored, such as by using IR spectroscopy.

The reaction may be performed until substantially all of the diisocyanate has reacted, as measured, for example, by IR spectroscopy.

The resulting polyurea-containing product may be dried.

### Second aspect

In the second aspect of the invention, the rheological additive comprises, or consists essentially, of a polyurea or a mixture of polyureas.

The polyurea or the mixture of polyureas can be obtained or is obtainable from the reaction between (a) a diisocyanate, (b) at least one primary monoamine having an aliphatic side chain and (c) a diamine having two primary amine groups or a triamine having three primary amine groups. It is preferred that the polyurea or the mixture of polyureas is directly obtained or is directly obtainable from the reaction between (a) the diisocyanate, (b) the at least one primary monoamine having an aliphatic side chain and (c) the diamine having two primary amine groups or the triamine having three primary amine groups. The polyurea or the mixture of polyureas is the reaction product of the reaction between (a), (b) and (c). In other words, there is no other ingredient present in the reaction that contributes to the structure of the polyurea or the mixture of polyureas.

Further features in relation to the reaction between (a) the diisocyanate, (b) the at least one primary monoamine having an aliphatic side chain and (c) the diamine having two primary amine groups or the triamine having three primary amine groups are described hereinbelow in relation to the process for the manufacture of a rheological additive.

When a diamine or triamine is used to prepare a polyurea from a linear alkylene diisocyanate monomer, it is possible to further control the rheological properties of the rheological additive. The presence of one or more moieties in the polyurea that are derived from a diamine or triamine can provide increased viscosity, as well as providing excellent anti-sag properties and decreased slump.

It was unexpectedly found that a rheological additive including a polyurea produced from a linear alkylene di-isocyanate and either a diamine or triamine can provide a sealant or an adhesive having excellent transparency and decreased turbidity. In fact, the sealant or the adhesive may show significantly improved transparency and turbidity compared to conventional sealants and adhesives, such as those including fumed silica as a rheological additive.

Typically, the rheological additive comprises, or consists essentially of, a polyurea having a structure comprising:
(a) at least one backbone group, wherein each backbone group is independently represented by formula (U): 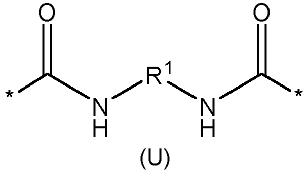 wherein:
   each R¹ is a linear C₂-C₁₂ alkylene group; and
   each backbone group is bonded at a position represented by an asterisk in formula (U) to either a terminal group represented by formula (T) or a linker group represented by formula (L1) or formula (L2);
(b) at least two terminal groups, wherein each terminal group is independently represented by formula (T):

   E¹-G¹-R²-NH-^{#} (T)

   wherein:
   each R² is independently a single bond or a C₁-C₈ alkylene group;
   each G¹ is independently a single bond or one or more units selected from oxy-C₁-C₆-alkylene, amino-C₁-C₆-alkylene and a combination thereof;
   each E¹ is independently selected from the group consisting of C₁-C₂₀ alkyl, C₁-C₂₀ alkoxy and a silyl group represented by formula (S):

      Ra(R^{b}O)_{3-q}Si- (S)

      wherein:
   each R^{a} is independently selected from C₁-C₄ alkyl, C₆-C₁₀ aryl and C₆-C₁₀ aryl-C₁-C₄ alkyl;
   each R^{b} is independently selected from C₁-C₄ alkyl, C₆-C₁₀ aryl and C₆-C₁₀ aryl-C₁-C₄ alkyl;
   each q is independently an integer of 0 to 3;
   with the provisos that:
   - G¹ and R² are not both single bonds;
   - E¹, G¹ and R² of each terminal group is selected such that the terminal group does not have an oxygen-oxygen bond, an oxygen-nitrogen bond or a nitrogen-nitrogen bond; and
   - when E¹ is C₁-C₂₀ alkyl and R² is a C₁-C₈ alkylene group, then G¹ is not a single bond; and
      each terminal group is bonded at a position represented by a hash (#) in formula (T) to a backbone group represented by formula (U) at a position represented by an asterisk (∗); and
(c) a linker group, wherein each linker group is independently represented by formula (L1) or formula (L2):

   ^{#}-NH-R⁴-G²-R³-NH-^{#} (L1)

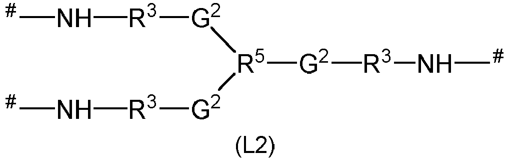

   wherein:
   each R³ is independently a single bond or a C₁-C₈ alkylene group;
   each R⁴ is independently a single bond or a C₁-C₈ alkylene group;
   each G² is the same or different and is independently selected from a poly(oxy-C₁-C₆-alkylene) group, a mono(oxy-C₁-C₆-alkylene) group, a poly(amino-C₁-C₆-alkylene) group and a mono(amino-C₁-C₆-alkylene) group;
   each R⁵ is independently selected from a nitrogen atom and a linear or branched C₁-C₁₂ hydrocarbyl group;
   with the provisos that:
   - in formula (L1), R³ and R⁴ are not both single bonds;
   - in formula (L1), G², R³ and R⁴ are selected such that the linker group represented by formula (L1) does not have an oxygen-oxygen bond, an oxygen-nitrogen bond or a nitrogen-nitrogen bond;
   - in formula (L2), when R⁵ is a nitrogen atom, then each R³ is independently a C₁-C₈ alkylene group; and
   - in formula (L2), when R⁵ is a linear or branched C₁-C₁₂ hydrocarbyl group, then each G² and R³ are selected such that the linker group represented by formula (L2) does not have an oxygen-oxygen bond, an oxygen-nitrogen bond or a nitrogen-nitrogen bond; and
      each linker group is bonded at a position represented by a hash (#) in formula (L1) or formula (L2) to a backbone group represented by formula (U) at a position represented by an asterisk (*); and
      wherein at least one linker group is bonded at a position represented by a hash (#) in formula (L1) or formula (L2) to a backbone group represented by formula (U) at a position represented by an asterisk (*).

The rheological additive may comprise, or consist essentially of, a mixture of polyureas, wherein each polyurea of the mixture of polyureas has a structure as defined above.

The polyurea or the mixture of polyureas obtained or obtainable from the reaction between (a) a diisocyanate, (b) at least one primary monoamine having an aliphatic side chain and (c) a diamine having two primary amine groups or a triamine having three primary amine groups may be a polyurea having a structure comprising the (a) at least one backbone group, (b) at least two terminal groups and (c) a linker group, as described above.

The terminal group represented by formula (T) is as described above in the first aspect of the invention in relation to R^{T1} and R^{T2} as represented by formula (T). The terminal group is derived from the primary monoamine described above.

The linker group represented by formula (L1) is derived from the diamine, such as the diamine of formula (A2) as described above. Similarly, the linker group represented by formula (L2) is derived from the triamine, such as the triamine of formula (A3), as described above.

For a linker group represented by formula (L1), where R³ is a C₁-C₈ alkylene group, it is preferred that the C₁-C₈ alkylene group is a C₂-C₈ alkylene group, such as a C₂-C₆ alkylene group, more preferably a C₂-C₄ alkylene group, particularly a C₂-C₃ alkylene group. The C₂-C₃ alkylene group is preferably a linear or unbranched C₂-alkylene moiety (e.g. linear ethylene, -CH₂CH₂-), a linear or unbranched C₃-alkylene moiety (e.g. linear propylene, -CH₂CH₂CH₂-) or a C₃-alkylene moiety having a methyl-branch (e.g. branched propylene, -CH(CH₃)CH₂-).

When R⁴ is a C₁-C₈ alkylene group, it is preferred that the C₁-C₈ alkylene group is a C₂-C₈ alkylene group, such as a C₂-C₆ alkylene group, more preferably a C₂-C₄ alkylene group, particularly a C₂-C₃ alkylene group. The C₂-C₃ alkylene group is preferably a linear or unbranched C₂-alkylene moiety (e.g. linear ethylene, -CH₂CH₂-), a linear or unbranched C₃-alkylene moiety (e.g. linear propylene, -CH₂CH₂CH₂-) or a C₃-alkylene moiety having a methyl-branch (e.g. branched propylene, -CH(CH₃)CH₂-).

It is generally preferred that G² in formula (L1) is selected from a mono(oxy-C₁-C₆-alkylene) group, a mono(amino-C₁-C₆-alkylene) group and a poly(oxy-C₁-C₆-alkylene) group. It is further preferred that G² in formula (L1) is selected from mono(oxy-C₁-C₆-alkylene) and poly(oxy-C₁-C₆-alkylene). Even more preferably, G² is poly(oxy-C₁-C₆-alkylene).

The oxy-C₁-C₆-alkylene moiety in the mono(oxy-C₁-C₆-alkylene) group or the poly(oxy-C₁-C₆-alkylene) group, is preferably an oxy-C₂-C₆-alkylene moiety, more preferably an oxy-C₂-C₄-alkylene moiety, particularly an oxy-C₂-C₃-alkylene moiety (e.g. oxy-ethylene or oxy-propylene), such as an oxy-C₂-alkylene moiety or an oxy-C₃-alkylene moiety, with the oxy-C₃-alkylene moiety being most preferred.

The amino-C₁-C₆-alkylene moiety in the mono(amino-C₁-C₆-alkylene) group or the poly(amino-C₁-C₆-alkylene) group is preferably an amino-C₂-C₆-alkylene moiety, more preferably an amino-C₂-C₄-alkylene moiety, particularly an amino-C₂-C₃-alkylene moiety (e.g. amino-ethylene or amino-propylene), such as an amino-C₂-alkylene moiety or an amino-C₃-alkylene moiety, with the amino-C₃-alkylene moiety being most preferred.

When G² in formula (L1) is a poly(oxy-C₁-C₆-alkylene) group, then preferably G² is poly(oxy-C₂-C₆-alkylene), more preferably poly(oxy-C₂-C₄-alkylene), and still more preferably poly(oxy-C₂-C₃-alkylene).

When G² in formula (L1) is a poly(amino-C₁-C₆-alkylene) group, then preferably G² is poly(amino-C₂-C₆-alkylene), more preferably poly(amino-C₂-C₄-alkylene), and still more preferably poly(amino-C₂-C₃-alkylene).

It is generally preferred that G² in formula (L1) is selected from a mono(oxy-C₂-C₃-alkylene) group, a mono(amino-C₂-C₃-alkylene) group, a poly(oxy-C₂-C₃-alkylene) group and a poly(amino-C₂-C₃-alkylene) group. More preferably, G² is selected from a mono(oxy-C₂-C₃-alkylene) group, a mono(amino-C₂-C₃-alkylene) group and a poly(oxy-C₂-C₃-alkylene) group. It is further preferred that G² is selected from a mono(oxy-C₂-C₃-alkylene) group and a poly(oxy-C₂-C₃-alkylene) group. Even more preferably, G² is a poly(oxy-C₂-C₃-alkylene) group.

When G² in formula (L1) is a poly(oxy-C₁-C₆-alkylene) group, then the poly(oxy-C₁-C₆-alkylene) group may be a random copolymer consisting of oxy-C₁-C₆-alkylene units, an alternating copolymer consisting of oxy-C₁-C₆-alkylene units, a block copolymer consisting of oxy-C₁-C₆-alkylene units or a homopolymer consisting of oxy-C₁-C₆-alkylene units. For example, the poly(oxy-C₁-C₆-alkylene) group may be a block copolymer consisting of oxy-C₁-C₆-alkylene units or a homopolymer consisting of oxy-C₁-C₆-alkylene units. The same applies when the poly(oxy-C₁-C₆-alkylene) group is a poly(oxy-C₂-C₆-alkylene) group, a poly(oxy-C₂-C₄-alkylene) group or a poly(oxy-C₂-C₃-alkylene) group.

The poly(oxy-C₂-C₃-alkylene) group may be a random copolymer consisting of oxy-C₂-C₃-alkylene units, an alternating copolymer consisting of oxy-C₂-C₃-alkylene units, a block copolymer consisting of oxy-C₂-C₃-alkylene units or a homopolymer consisting of oxy-C₂-C₃-alkylene units. For example, the poly(oxy-C₂-C₃-alkylene) group may be a block copolymer consisting of oxy-C₂-C₃-alkylene units or a homopolymer consisting of oxy-C₂-C₃-alkylene units. The poly(oxy-C₂-C₃-alkylene) group may be a block copolymer consisting of oxy-C₂-alkylene units and oxy-C₃-alkylene units, a homopolymer consisting of oxy-C₃-alkylene units or a homopolymer consisting of oxy-C₂-alkylene units, especially a block copolymer consisting of oxy-C₂-alkylene units and oxy-C₃-alkylene units or a homopolymer consisting of oxy-C₃-alkylene units.

When G² in formula (L1) is a poly(amino-C₁-C₆-alkylene) group, then the poly(amino-C₁-C₆-alkylene) group may be a random copolymer consisting of amino-C₁-C₆-alkylene units, an alternating copolymer consisting of amino-C₁-C₆-alkylene units, a block copolymer consisting of amino-C₁-C₆-alkylene units or a homopolymer consisting of amino-C₁-C₆-alkylene units. For example, the poly(amino-C₁-C₆-alkylene) group may be a homopolymer consisting of amino-C₁-C₆-alkylene units. The same applies when the poly(amino-C₁-C₆-alkylene) group is a poly(amino-C₂-C₆-alkylene) group, a poly(amino-C₂-C₄-alkylene) group or a poly(amino-C₂-C₃-alkylene) group.

The poly(amino-C₂-C₃-alkylene) group may be a random copolymer consisting of amino-C₂-C₃-alkylene units, an alternating copolymer consisting of amino-C₂-C₃-alkylene units, a block copolymer consisting of amino-C₂-C₃-alkylene units or a homopolymer consisting of amino-C₂-C₃-alkylene units. For example, the poly(amino-C₂-C₃-alkylene) group may be a homopolymer consisting of amino-C₂-C₃-alkylene units. The poly(amino-C₂-C₃-alkylene) group may be a block copolymer consisting of amino-C₂-alkylene units and amino-C₃-alkylene units, a homopolymer consisting of amino-C₃-alkylene units or a homopolymer consisting of amino-C₂-alkylene units, especially a homopolymer consisting of amino-C₂-alkylene units or a homopolymer consisting of oxy-C₃-alkylene units.

When the oxy-C₂-C₃-alkylene moiety is oxy-C₂-alkylene (e.g. oxy-ethylene), it is generally preferred that the oxy-C₂-alkylene moiety is a linear or unbranched oxy-C₂-alkylene moiety (e.g. linear oxy-ethylene). The linear or unbranched oxy-C₂-alkylene moiety is -OCH₂CH₂- (i.e. not -OCH(CH₃)-).

When the oxy-C₂-C₃-alkylene moiety is oxy-C₃-alkylene (e.g. oxy-propylene), it is generally preferred that the oxy-C₃-alkylene moiety is a linear or unbranched oxy-C₃-alkylene moiety (e.g. linear oxy-propylene) or a branched oxy-C₃-alkylene moiety, preferably an oxy-C₃-alkylene moiety having a methyl-branch (e.g. branched oxy-propylene). The linear or unbranched oxy-C₃-alkylene moiety is -OCH₂CH₂CH₂-. The oxy-C₃-alkylene moiety having a methyl-branch is either -OCH(CH₃)CH₂- or -OCH₂CH(CH₃)-. More preferably, the oxy-C₃-alkylene moiety is a branched oxy-propylene (i.e. oxy-C₃-alkylene moiety having a methyl-branch).

When the amino-C₂-C₃-alkylene moiety is amino-C₂-alkylene (e.g. amino-ethylene), it is generally preferred that the amino-C₂-alkylene moiety is a linear or unbranched amino-C₂-alkylene moiety (e.g. linear amino-ethylene). The linear or unbranched amino-C₂-alkylene moiety is -NHCH₂CH₂- (i.e. not -NHCH(CH₃)-).

When the amino-C₂-C₃-alkylene moiety is amino-C₃-alkylene (e.g. amino-propylene), it is generally preferred that the amino-C₃-alkylene moiety is a linear or unbranched amino-C₃-alkylene moiety (e.g. linear amino-propylene) or a branched amino-C₃-alkylene moiety, preferably an amino-C₃-alkylene moiety having a methyl-branch (e.g. branched amino-propylene). The linear or unbranched amino-C₃-alkylene moiety is -NHCH₂CH₂CH₂-. The amino-C₃-alkylene moiety having a methyl-branch is either -NHCH(CH₃)CH₂- or -NHCH₂CH(CH₃)-.

In general, it is preferred that G² in formula (L1) is selected from: 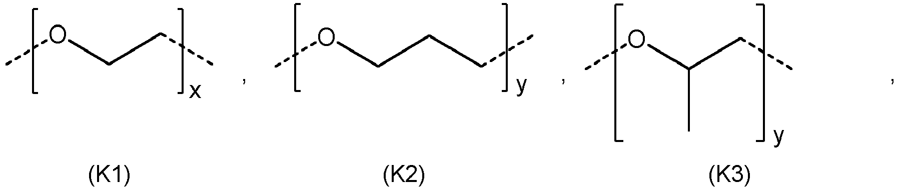 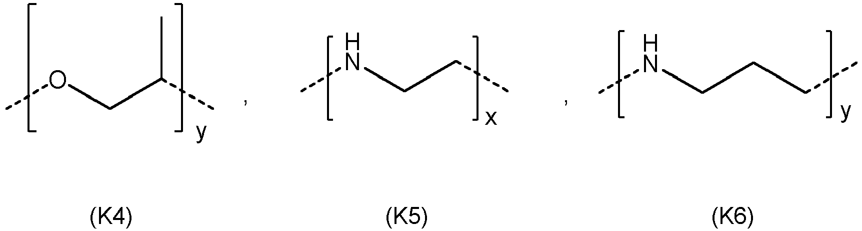 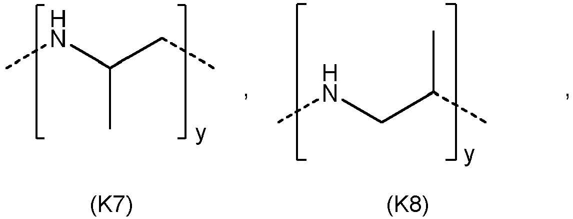 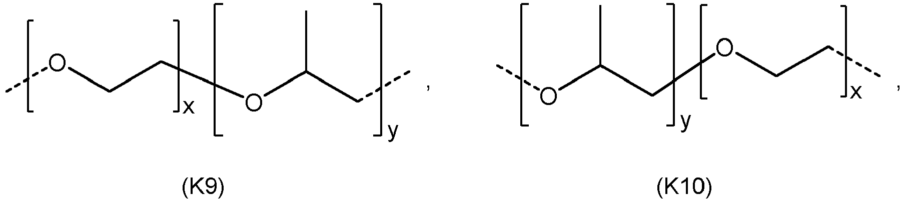 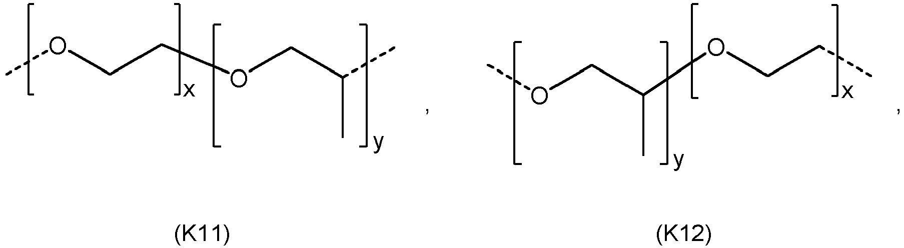 and 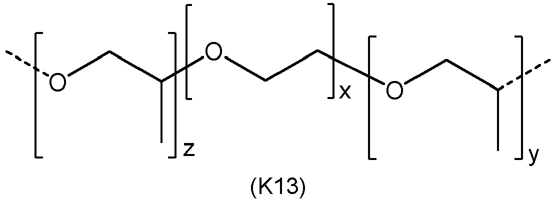 wherein each x, y and z is independently an integer from 1 to 100.

The dashed bonds above indicate the positions at which G² is directly bonded to R³, R⁴ or the nitrogen atom of an NH group. The orientation of each structure is not limited.

More preferably, G² in formula (L1) is selected from: 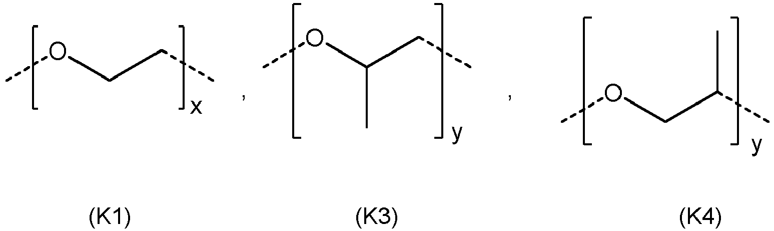 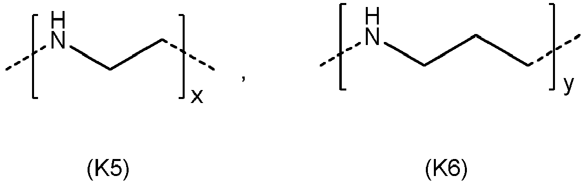 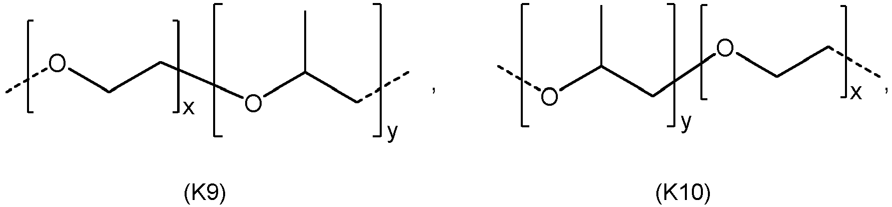 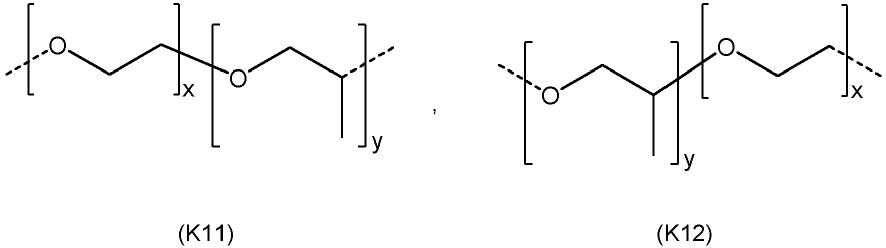 and

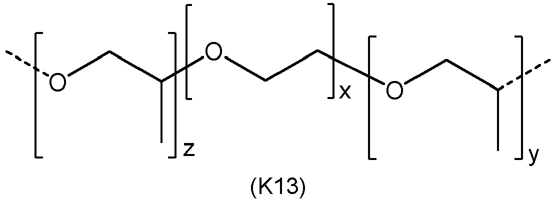

It is further preferred that G² in formula (L1) is selected from: 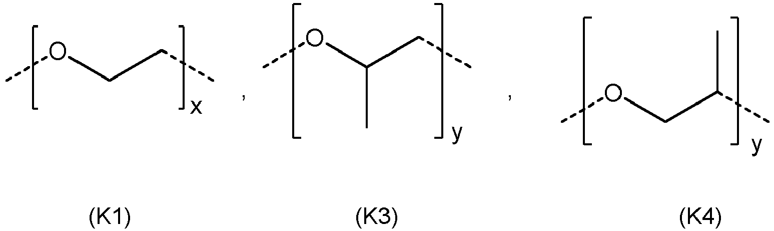 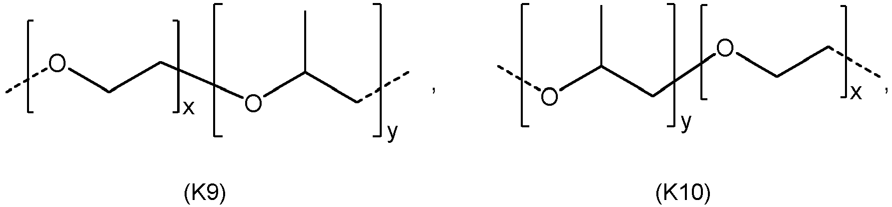 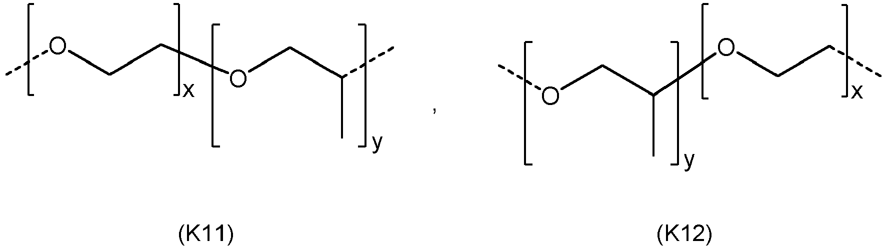 and

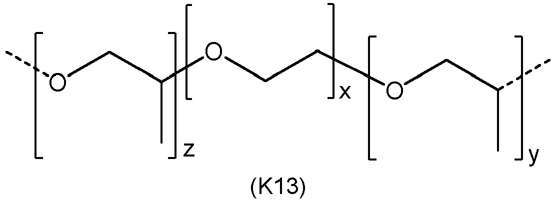

In the moieties represented above by formulas (K1) to (K13), each x, y and z is independently an integer from 1 to 100. It is preferred that each x, y and z is independently an integer from 1 to 50, more preferably each x, y and z is independently an integer from 1 to 25, particularly from 1 to 15, an even more preferably from 1 to 10.

In general, it is preferred that each x is independently an integer from 1 to 15, more preferably from 1 to 10, even more preferably from 1 to 5.

Independently of or in conjunction with the value of x, typically each y is independently an integer from 1 to 10, more preferably from 1 to 8, even more preferably from 1 to 4.

Independently of or in conjunction with the values of x and y, typically each z is independently an integer from 1 to 15, more preferably from 1 to 10, even more preferably from 1 to 5.

In embodiment 5, the linker group is represented by formula (L1a): 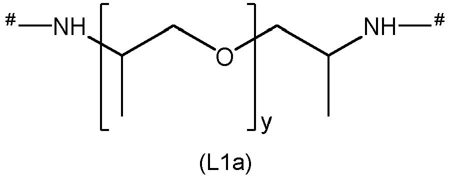 wherein y is an integer from 1 to 200, preferably from 2 to 100, more preferably from 3 to 75.

In the mixture of polyureas, the plurality of polyureas may have a mean value of y from about 2.0 to about 100.0, preferably from about 2.5 to about 75.0.

In embodiment 6, the linker group is represented by formula (L1b):

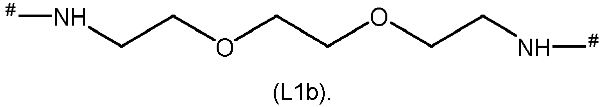

In embodiment 7, the linker group is represented by formula (L1c): 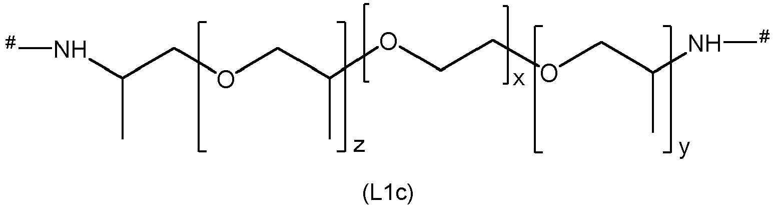 wherein each x, y and z is independently an integer from 1 to 75, preferably from 1 to 50, such as from 1 to 25.

When the linker group is represented by formula (L2) and R³ is a C₁-C₈ alkylene group, it is preferred that the C₁-C₈ alkylene group is a C₂-C₈ alkylene group, such as a C₂-C₆ alkylene group, more preferably a C₂-C₄ alkylene group, particularly a C₂-C₃ alkylene group. The C₂-C₃ alkylene group is preferably a linear or unbranched C₂-alkylene moiety (e.g. linear ethylene, -CH₂CH₂-), a linear or unbranched C₃-alkylene moiety (e.g. linear propylene, -CH₂CH₂CH₂-) or a C₃-alkylene moiety having a methyl-branch (e.g. branched propylene, -CH(CH₃)CH₂-).

R⁵ can be a linear or branched C₁-C₁₂ hydrocarbyl group. The linear or branched C₁-C₁₂ hydrocarbyl group is preferably a linear or branched C₃-C₁₀ hydrocarbyl group, more preferably a linear or branched C₃-C₈ hydrocarbyl group.

The linear or branched C₁-C₁₂ hydrocarbyl group may be selected from: 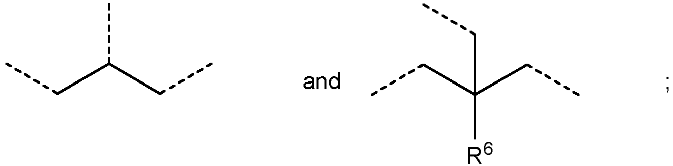 wherein R⁶ is hydrogen, methyl or ethyl.

It is preferred that R⁶ is hydrogen or ethyl.

The dashed bonds above indicate the positions at which R⁵ is directly bonded to each G².

R⁵ is selected from a nitrogen atom and a linear or branched C₁-C₁₂ hydrocarbyl group. In general, it is preferred that R⁵ is a linear or branched C₁-C₁₂ hydrocarbyl group.

It is generally preferred that G² in formula (L2) is selected from a mono(oxy-C₁-C₆-alkylene) group, a mono(amino-C₁-C₆-alkylene) group and a poly(oxy-C₁-C₆-alkylene) group. It is further preferred that G² in formula (L2) is selected from mono(oxy-C₁-C₆-alkylene) and poly(oxy-C₁-C₆-alkylene). Even more preferably, G² is poly(oxy-C₁-C₆-alkylene).

The oxy-C₁-C₆-alkylene moiety in the mono(oxy-C₁-C₆-alkylene) group or the poly(oxy-C₁-C₆-alkylene) group, is preferably an oxy-C₂-C₆-alkylene moiety, more preferably an oxy-C₂-C₄-alkylene moiety, particularly an oxy-C₂-C₃-alkylene moiety (e.g. oxy-ethylene or oxy-propylene), such as an oxy-C₂-alkylene moiety or an oxy-C₃-alkylene moiety, with the oxy-C₃-alkylene moiety being most preferred.

The amino-C₁-C₆-alkylene moiety in the mono(amino-C₁-C₆-alkylene) group or the poly(amino-C₁-C₆-alkylene) group is preferably an amino-C₂-C₆-alkylene moiety, more preferably an amino-C₂-C₄-alkylene moiety, particularly an amino-C₂-C₃-alkylene moiety (e.g. amino-ethylene or amino-propylene), such as an amino-C₂-alkylene moiety or an amino-C₃-alkylene moiety, with the amino-C₃-alkylene moiety being most preferred.

When G² in formula (L2) is a poly(oxy-C₁-C₆-alkylene) group, then preferably G² is poly(oxy-C₂-C₆-alkylene), more preferably poly(oxy-C₂-C₄-alkylene), and still more preferably poly(oxy-C₂-C₃-alkylene).

When G² in formula (L2) is a poly(amino-C₁-C₆-alkylene) group, then preferably G² is poly(amino-C₂-C₆-alkylene), more preferably poly(amino-C₂-C₄-alkylene), and still more preferably poly(amino-C₂-C₃-alkylene).

It is generally preferred that G² in formula (L2) is selected from a mono(oxy-C₂-C₃-alkylene) group, a mono(amino-C₂-C₃-alkylene) group, a poly(oxy-C₂-C₃-alkylene) group and a poly(amino-C₂-C₃-alkylene) group. More preferably, G² is selected from a mono(oxy-C₂-C₃-alkylene) group, a mono(amino-C₂-C₃-alkylene) group and a poly(oxy-C₂-C₃-alkylene) group. It is further preferred that G² is selected from a mono(oxy-C₂-C₃-alkylene) group and a poly(oxy-C₂-C₃-alkylene) group. Even more preferably, G² is a poly(oxy-C₂-C₃-alkylene) group.

When G² in formula (L2) is a poly(oxy-C₁-C₆-alkylene) group, then the poly(oxy-C₁-C₆-alkylene) group may be a random copolymer consisting of oxy-C₁-C₆-alkylene units, an alternating copolymer consisting of oxy-C₁-C₆-alkylene units, a block copolymer consisting of oxy-C₁-C₆-alkylene units or a homopolymer consisting of oxy-C₁-C₆-alkylene units. For example, the poly(oxy-C₁-C₆-alkylene) group may be a homopolymer consisting of oxy-C₁-C₆-alkylene units. The same applies when the poly(oxy-C₁-C₆-alkylene) group is a poly(oxy-C₂-C₆-alkylene) group, a poly(oxy-C₂-C₄-alkylene) group or a poly(oxy-C₂-C₃-alkylene) group.

The poly(oxy-C₂-C₃-alkylene) group may be a random copolymer consisting of oxy-C₂-C₃-alkylene units, an alternating copolymer consisting of oxy-C₂-C₃-alkylene units, a block copolymer consisting of oxy-C₂-C₃-alkylene units or a homopolymer consisting of oxy-C₂-C₃-alkylene units. For example, the poly(oxy-C₂-C₃-alkylene) group may be a homopolymer consisting of oxy-C₂-C₃-alkylene units.

When G² in formula (L2) is a poly(amino-C₁-C₆-alkylene) group, then the poly(amino-C₁-C₆-alkylene) group may be a random copolymer consisting of amino-C₁-C₆-alkylene units, an alternating copolymer consisting of amino-C₁-C₆-alkylene units, a block copolymer consisting of amino-C₁-C₆-alkylene units or a homopolymer consisting of amino-C₁-C₆-alkylene units. For example, the poly(amino-C₁-C₆-alkylene) group may be a homopolymer consisting of amino-C₁-C₆-alkylene units. The same applies when the poly(amino-C₁-C₆-alkylene) group is a poly(amino-C₂-C₆-alkylene) group, a poly(amino-C₂-C₄-alkylene) group or a poly(amino-C₂-C₃-alkylene) group.

The poly(amino-C₂-C₃-alkylene) group may be a random copolymer consisting of amino-C₂-C₃-alkylene units, an alternating copolymer consisting of amino-C₂-C₃-alkylene units, a block copolymer consisting of amino-C₂-C₃-alkylene units or a homopolymer consisting of amino-C₂-C₃-alkylene units. For example, the poly(amino-C₂-C₃-alkylene) group may be a homopolymer consisting of amino-C₂-C₃-alkylene units. The poly(amino-C₂-C₃-alkylene) group may be a block copolymer consisting of amino-C₂-alkylene units and amino-C₃-alkylene units, a homopolymer consisting of amino-C₃-alkylene units or a homopolymer consisting of amino-C₂-alkylene units, especially a homopolymer consisting of amino-C₂-alkylene units or a homopolymer consisting of oxy-C₃-alkylene units.

When the oxy-C₂-C₃-alkylene moiety is oxy-C₂-alkylene (e.g. oxy-ethylene), it is generally preferred that the oxy-C₂-alkylene moiety is a linear or unbranched oxy-C₂-alkylene moiety (e.g. linear oxy-ethylene). The linear or unbranched oxy-C₂-alkylene moiety is -OCH₂CH₂- (i.e. not -OCH(CH₃)-).

When the oxy-C₂-C₃-alkylene moiety is oxy-C₃-alkylene (e.g. oxy-propylene), it is generally preferred that the oxy-C₃-alkylene moiety is a linear or unbranched oxy-C₃-alkylene moiety (e.g. linear oxy-propylene) or a branched oxy-C₃-alkylene moiety, preferably an oxy-C₃-alkylene moiety having a methyl-branch (e.g. branched oxy-propylene). The linear or unbranched oxy-C₃-alkylene moiety is -OCH₂CH₂CH₂-. The oxy-C₃-alkylene moiety having a methyl-branch is either -OCH(CH₃)CH₂- or -OCH₂CH(CH₃)-. More preferably, the oxy-C₃-alkylene moiety is a branched oxy-propylene (i.e. oxy-C₃-alkylene moiety having a methyl-branch).

When the amino-C₂-C₃-alkylene moiety is amino-C₂-alkylene (e.g. amino-ethylene), it is generally preferred that the amino-C₂-alkylene moiety is a linear or unbranched amino-C₂-alkylene moiety (e.g. linear amino-ethylene). The linear or unbranched amino-C₂-alkylene moiety is -NHCH₂CH₂- (i.e. not -NHCH(CH₃)-).

When the amino-C₂-C₃-alkylene moiety is amino-C₃-alkylene (e.g. amino-propylene), it is generally preferred that the amino-C₃-alkylene moiety is a linear or unbranched amino-C₃-alkylene moiety (e.g. linear amino-propylene) or a branched amino-C₃-alkylene moiety, preferably an amino-C₃-alkylene moiety having a methyl-branch (e.g. branched amino-propylene). The linear or unbranched amino-C₃-alkylene moiety is -NHCH₂CH₂CH₂-. The amino-C₃-alkylene moiety having a methyl-branch is either -NHCH(CH₃)CH₂- or -NHCH₂CH(CH₃)-.

In general, it is preferred that G² in formula (L2) is selected from: 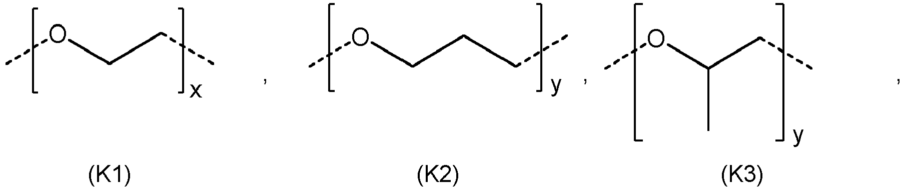 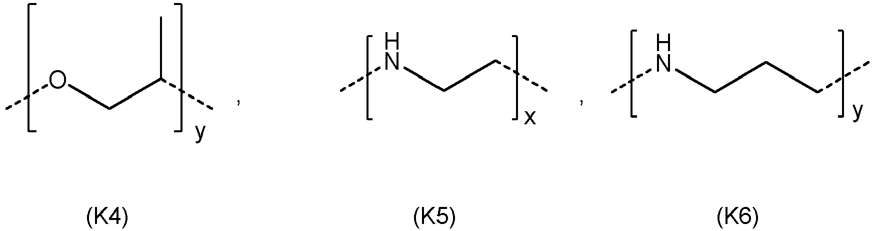 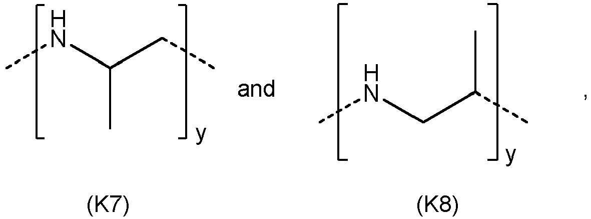 wherein each x and y is independently an integer from 1 to 50.

The dashed bonds above indicate the positions at which G² is directly bonded to R³, R⁵ or the nitrogen atom of the NH group. The orientation of each structure is not limited.

More preferably, G² in formula (L2) is selected from:

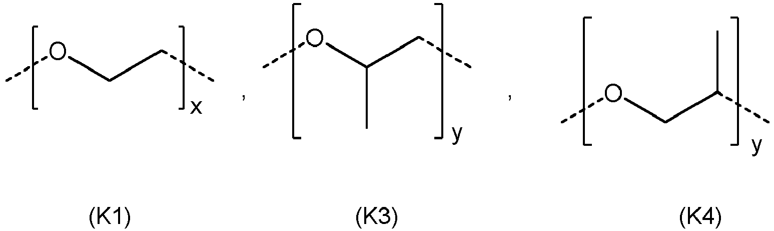

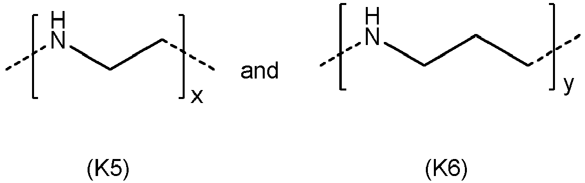

It is further preferred that G² in formula (L2) is selected from:

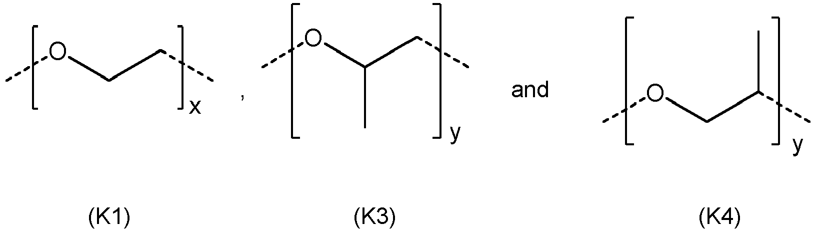

In the moieties represented above by formulas (K1) to (K8), each x and y is independently an integer from 1 to 50. It is preferred that each x and y is independently an integer from 1 to 30, more preferably each x and y is independently an integer from 1 to 25, particularly from 1 to 20, an even more preferably from 1 to 10.

In general, it is preferred that each x is independently an integer from 1 to 30, more preferably from 1 to 25, even more preferably from 1 to 10.

Independently of or in conjunction with the value of x, typically each y is independently an integer from 1 to 30, more preferably from 1 to 20, even more preferably from 1 to 10.

In embodiment 8, the linker group is represented by formula (L2a): 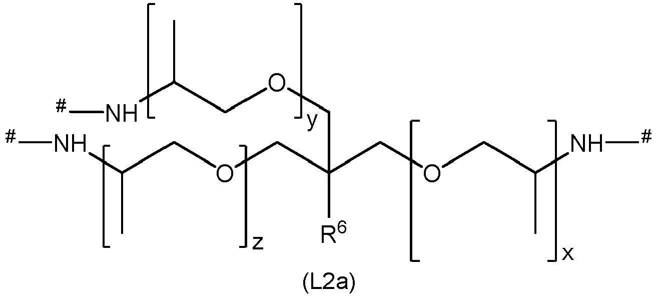 wherein:
R⁶ is hydrogen or ethyl;
x is an integer from 1 to 30;
y is an integer from 1 to 30; and
z is an integer from 1 to 30.

It is generally preferred that the linker group is represented by formula (L1).

A general feature of the rheological additive of the second aspect of the invention is that the rheological additive has a water content of less than or equal to 2.0 wt%, such as less than or equal to 1.5 wt%, preferably less than or equal to 0.5 wt%, more preferably less than or equal to 0.1 wt %. Water can be removed from the polyurea, the mixture of polyureas or the rheological additive by conventional methods, such as by drying in air or with heated dry air. Alternatively, more moisture scavenger can be added to the formulation as needed.

The rheological additive may further comprise a plasticizer, such as a plasticizer as described herein. It is preferred that the plasticizer is a phthalate.

The rheological additive may be a pre-activated rheological additive.

The second aspect of the invention also provides a process for the manufacture of the rheological additive, which comprises a polyurea or a mixture of polyureas.

The process comprises reacting (a) the diisocyanate with (b) at least one primary monoamine having an aliphatic side chain and (c) a diamine having two primary amine groups or a triamine having three primary amine groups. The at least one primary monoamine may be present as a primary monoamine composition or a primary monoamines composition.

A general feature of the second aspect of the invention is that the molar ratio of the diamine to the diisocyanate is not more than 0.35, preferably less than 0.25. The molar ratio of the triamine to the diisocyanate is not more than 0.15. These molar ratios refer to the total amount of diisocyanate, diamine and triamine, such as when more than one type of each ingredient is present.

The polyurea or mixture of polyureas is preferably obtained from a primary monoamine of any one of embodiments 1, 2 or 3 and a diamine of embodiment 5.

The process may comprise reacting (a) a single diisocyanate or a plurality of diisocyanates, (b) at least one primary monoamine having an aliphatic side chain and (c) a diamine having two primary amine groups or a triamine having three primary amine groups. Thus, the second aspect of the invention also relates a polyurea or a mixture of polyureas obtained or obtainable, preferably directly obtained or directly obtainable, from the reaction between a) a single diisocyanate or a plurality of diisocyanates, (b) at least one primary monoamine having an aliphatic side chain and (c) a diamine having two primary amine groups or a triamine having three primary amine groups.

When the reaction involves a plurality of diisocyanates, then each diisocyanate is a diisocyanate as represented by formula (D), as described in headed section above. At least of the diisocyanates of the plurality of diisocyanates have a different structure (e.g. the values of R¹ differ for the diisocyanates).

A mixture of polyureas is obtained when a plurality of diisocyanates is used, which may include a mixture of symmetric polyureas and asymmetric polyureas.

It may be preferable for a single diisocyanate to be used in the process or in the reaction to obtain the polyurea or the mixture of polyureas.

In general, the process of the second aspect of the invention is a one-pot process.

The step of reacting (a) the diisocyanate with (b) the at least one primary monoamine and (c) the diamine or triamine may comprise mixing (a) the diisocyanate, (b) the at least one primary monoamine and (c) the diamine or triamine at a temperature of at least 25°C, such as at least 35°C. Typically, the mixing is in a solvent.

The process may comprise adding the diisocyanate to both the at least one primary monoamine and the diamine or triamine, preferably in a solvent, while stirring. This process provides a convenient one-pot method for preparing the polyurea or mixtures of polyureas.

The reaction between the diisocyanate, the at least one primary monoamine and the diamine or triamine may be monitored, such as by using IR spectroscopy.

The reaction may be performed until substantially all of the diisocyanate has reacted, as measured, for example, by IR spectroscopy.

The resulting polyurea-containing product may be dried.

### Third aspect

In the third aspect of the invention, the rheological additive comprises, or consists essentially of, a polyurea or a mixture of polyureas. The third aspect of the invention also provides a process for the manufacture of the rheological additive.

The polyurea or mixture of polyureas is obtained or is obtainable from a method comprising: (1) reacting a first primary monoamine with a monouretdione to produce a polyurea intermediate; and (2) reacting the polyurea intermediate with a second amine to produce the polyurea.

The process for the manufacture of a rheological additive comprises preparing a polyurea by: (1) reacting a first primary monoamine with a monouretdione to produce a polyurea intermediate; and (2) reacting the polyurea intermediate with a second amine to produce the polyurea.

In the third aspect, the first primary monoamine has an aliphatic side chain, wherein the aliphatic side chain comprises:
(i) an end group independently selected from C₁-C₂₀ alkyl, C₁-C₂₀ alkoxy and a silicon-containing group represented by formula (S):

   R^{a}_{q}(R^{b}O)_{3-q}Si- (S)

   wherein:
   each R^{a} is independently selected from C₁-C₄ alkyl, C₆-C₁₀ aryl and C₆-C₁₀ aryl-C₁-C₄ alkyl,
   each R^{b} is independently selected from C₁-C₄ alkyl, C₆-C₁₀ aryl and C₆-C₁₀ aryl-C₁-C₄ alkyl, and
   q is an integer of 0 to 3; and
(ii) a linker group between the end group and a primary amine group of the primary monoamine, wherein the linker group is either a single bond or one or more units selected from oxy-C₁-C₆-alkylene, amino-C₁-C₆-alkylene and a combination thereof; and optionally
(iii) a C₁-C₈ alkylene group between the linker group and the primary amine group;
   with the proviso that the linker group is a single bond only when the end group is a silicon-containing group represented by formula (S).

The monouretdione is represented by formula (J): 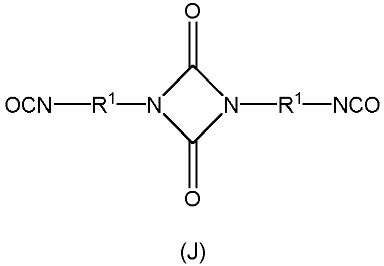 wherein R¹ is a linear C₂-C₁₂ alkylene group.

Uretdiones can be prepared by methods known in the art, such as the method described in US 5,750,629.

In the third aspect, the second amine is either:
(a) a second primary monoamine having an aliphatic side chain comprising:
   (i) an end group selected from C₁-C₂₀ alkyl, C₁-C₂₀ alkoxy and a silicon-containing group represented by formula (S2):

      R^{a'}x(R^{b'}O)₃₋ₓSi- (S2)

      wherein:
      each R^{a} is independently selected from C₁-C₄ alkyl, C₆-C₁₀ aryl and C₆-C₁₀ aryl-C₁-C₄ alkyl,
      each R^{b} is independently selected from C₁-C₄ alkyl, C₆-C₁₀ aryl and C₆-C₁₀ aryl-C₁-C₄ alkyl, and
      x is an integer of 0 to 3; and
   (ii) a linker group between the end group and a primary amine group of the primary monoamine, wherein the linker group is either a single bond or one or more units selected from oxy-C₁-C₆-alkylene, amino-C₁-C₆-alkylene and a combination thereof; and optionally
   (iii) a C₁-C₈ alkylene group between the linker group and the primary amine group;
      with the proviso that the linker group is a single bond only when the end group is a silicon-containing group represented by formula (S2); or
(b) a diamine having two primary amine groups linked by an aliphatic linker group or a triamine having three primary amine groups linked by an aliphatic linker group, wherein the aliphatic linker group (e.g. of the diamine and the triamine) comprises a group selected from a poly(oxy-C₁-C₆-alkylene) group, a mono(oxy-C₁-C₆-alkylene) group, a poly(amino-C₁-C₆-alkylene) group and a mono(amino-C₁-C₆-alkylene) group.

An advantage of the third aspect of the invention is that it permits the controlled synthesis of asymmetric polyureas.

It is preferred that the first primary monoamine has a structure that is different to the structure of the second amine, particularly the second primary monoamine. The first primary monoamine, the second primary monoamine and the diamine or triamine are as herein described above.

It may be preferable for the linker group or G¹ of the first primary monoamine to be a single bond, a mono(oxy-C₁-C₆-alkylene) group or a mono(amino-C₁-C₆-alkylene) group.

The reaction between the first primary monoamine and the monouretdione produces a polyurea intermediate. The first primary monoamine reacts with the available isocyanate groups in the monouretdione to form urea groups. The ring structure of the uretdione remains intact.

The polyurea intermediate may have the following structure: 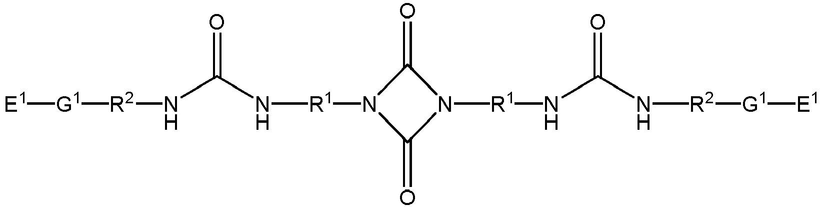 wherein E¹, G¹, R² and R¹ are as herein defined above.

The polyurea is then reacted with a second amine. The second amine opens the ring in the polyurea intermediate and forms a urea group. Harsher reaction conditions are used to bring about the ring opening reaction.

A general feature of the rheological additive of the third of the invention is that the rheological additive has a water content of less than or equal to 2.0 wt%, such as less than or equal to 1.5 wt%, preferably less than or equal to 0.5 wt%, more preferably less than or equal to 0.1 wt %. Water can be removed from the polyurea, as describe above.

The rheological additive may further comprise a plasticizer, such as a plasticizer as described herein. It is preferred that the plasticizer is a phthalate.

The rheological additive may be a pre-activated rheological additive.

### Fourth and fifth aspects

The fourth aspect of the invention provides a sealant or an adhesive (also referred to herein as a sealant formulation or an adhesive formulation, respectively). The sealant or adhesive comprises a rheological additive of any one of the first to third aspects of the invention.

A sealant is a substance or formulation capable of attaching to at least two surfaces, thereby filling the space or opening between them to provide a barrier or protective coating. An adhesive is a substance or formulation capable of holding at least two surfaces together in a strong and permanent manner. There is overlap between the terms "adhesive" and "sealant" because they both adhere and seal, both must be resistant to their operating environments, they are often made of similar materials, and they are sometimes used in similar applications. The use of the term "sealant" or "adhesive" often depends on the extent to which the formulation can adhere or seal, with there being no formal way cut-off point as to when each term should no longer be used. The terms "sealant" or "adhesive" as used herein are used interchangeably.

Sealants are great for air and watertight spaces and should not be used as a primary bonding agent as they are subjected to creep under load. Most sealants are adhesives, but their primary function is to seal a joint, with adhesion merely being one important property. Adhesives on the other hand have more power for holding and bonding and thus are more rigid and durable than sealants. However, some materials can fulfill the requirements of both sealants and adhesives, and these are termed adhesive-sealants.

The sealant or the adhesive typically comprises an amount of about 0.1 to about 20.0 wt% of the rheological additive, preferably an amount of about 1.0 to about 15.0 wt%, more preferably an amount of about 2.0 to about 10.0 wt%, such as about 3.0 to about 8.0 wt%. In general, the sealant or the adhesive comprises an effective amount of the rheological additive.

Typically, the sealant or the adhesive may further comprise a resin. The resin is a sealant polymer.

Typically, the resin may be selected from the group consisting of a silyl modified polyether, a silyl modified polyurethane, a silyl terminated polyacrylate, and combinations thereof. The silyl modified polyether is a polyether terminating with a silyl group. Similarly, a silyl modified polyurethane is a polyurethane terminating with a silyl group. Resins of these type, which are often referred to generally MS polymers, for the inclusion in a sealant or an adhesive are known in the art. See, for example, US 4,574,133. For the avoidance of doubt, the resin, particularly the silyl modified polyurethane, is a different type of polymer to the polyurethanes described herein in the first to third aspects of the invention.

The sealant or the adhesive typically comprises an amount of about 15.0 to about 85.0 wt% of the resin, preferably an amount of about 20.0 to about 80.0 wt%, more preferably an amount of about 25.0 to about 75.0 wt%.

The sealant or the adhesive typically comprises a catalyst. The catalyst is for curing (also referred to as a curing catalyst).

The catalyst may be an organotin compound (e.g. tin(II)-2-ethylhexanoate, dibutyltin maleate, dibutyltin dilaurate, dibutyltin dioctoate, dibutyltin diacetate, dioctyltin dilaurate), an organometallic compound (e.g. zinc naphthenate, zinc 2-ethyloctoate, iron 2-ethylhexoate, cobalt 2-ethylhexoate, cobalt naphthenate), an aminosilane (e.g. 3-aminopropyltriethoxysilane, 3-aminopropyltrimethoxysilane, and N-β-(aminoethyl)-γ-aminopropyltrimethoxysilane, as well as silanes containing a guanidyl group like tetramethylguanidylpropyltrimethoxysilane, tetramethylguanidylpropylmethyldimethoxy-silane), a fluorine-containing compound (e.g. triethoxyfluorosilane), a tertiary amine (e.g. 1,8-diazabicyclo(5.4.0)undec-7-ene (DBU), 1-azabicyclo[3.3.0]octane, 1,4-diazabicyclo[2.2.2]octane, a trialkylamine or an N-substituted piperidine), a titanate (e.g. an alkyl titanate or an organosilicon titanate) or a combination of two or more thereof.

The sealant or the adhesive typically comprises an amount of about 0.005 to about 5.0 wt% of the catalyst, preferably an amount of about 0.05 to about 4.0 wt%, more preferably an amount of about 0.1 to about 2.0 wt%.

In general, the sealant or the adhesive comprises an effective amount of the catalyst. This is an amount sufficient to cure the sealant or the adhesive (e.g. the resin) upon exposure to humidity.

The sealant or the adhesive may comprise a plasticizer.

The plasticizer may be a phthalate (e.g. dioctyl phthalate, dibutyl phthalate, diundecyl phthalate, diisononyl phthalate, diisodecyl phthalate, dibutyl benzyl phthalate), 1,2-cyclohexane dicarboxylic acid diisononyl ester, a terephthalate (e.g. di-2-ethylhexyl terephthalate), an adipate (e.g. dialkyl adipates) a phosphate (e.g. trioctyl phosphate or tricresyl phosphate), a sulfonamide (e.g. N-butyl-p-toluene-sulfonamide), a citric acid ester or low molecular weight polyethers (e.g. polypropyleneglycol, polypropylene glycol dibenzoate). The weight average molecular weight of the low molecular weight polyether is typically below 10000, such as from 200 to 6000. It is preferred that the plasticizer is a phthalate.

When the sealant or the adhesive comprises a plasticizer, then the amount of plasticizer is about 0.5 to about 50.0 wt%, preferably about 1.0 to about 40.0 wt%, more preferably about 5.0 to about 25.0 wt%.

The sealant or the adhesive may further comprise one or more ingredients selected from an adhesion promoter, a reinforcing fiber, a fragrance, a UV absorber, an antioxidant, a moisture scavenger, a filler and a pigment.

The sealant or the adhesive may comprise an adhesion promoter. The adhesion promoter is for promoting wet and dry adhesion of the formulation. Other properties may be promoted, such as mechanical properties, resistance to heat, moisture and other atmospheric factors.

The adhesion promoter may be a silane coupling agent, such as a silane coupling agents having a functional group, particularly a functional group selected from an amino group, a mercapto group, an epoxy group, a carboxyl group and a vinyl group. It is preferred that the silane coupling agent is an aminosilane, such as 3-aminopropyltriethoxysilane, 3-aminopropyltrimethoxysilane, and N-β-(aminoethyl)-γ-aminopropyltrimethoxysilane or a combination of two or more thereof.

When the sealant or the adhesive comprises an adhesion promoter, such as a silane coupling agent, then the amount of adhesion promoter is about 0.1 to about 2.0 wt%, preferably about 0.5 to about 1.5 wt%.

The sealant or the adhesive may comprise a moisture scavenger. The moisture scavenger is particularly advantageous for the storage stability of the composition.

The moisture scavenger may be a vinyl silane (e.g. vinyltrimethoxysilane or vinyltriethoxysilane).

When the sealant or the adhesive comprises a moisture scavenger, then the amount of moisture scavenger is about 0.1 to about 2.0 wt%, preferably about 0.5 to about 1.5 wt%.

The sealant or the adhesive may further comprise a filler.

Examples of fillers include, but are not limited to, fumed or pyrogenic silica, precipitated silica, carbon black, precipitated calcium carbonate, talc, kaolin and bentonite clay, ground calcium carbonate, barium sulfate, and magnesium silicate. It may be preferable that the filler is not silica, particularly fumed or pyrogenic silica and/or precipitated silica.

Examples of other fillers that can be used include, but are not limited to, ground quartz, magnesium carbonate, titanium dioxide, aluminum silicate, diatomaceous earth, ferric oxide, mica, zinc oxide, ceramic microspheres, glass microbubbles, intumescent filler, waxes (e.g. polyamide wax), each of which can be used either alone or in combination.

A filler can be treated with coupling or non-coupling treatments to improve their dispersion and compatibility with the resin. For example, hydrophobic fumed silicas are fumed silicas treated with hydrophobizing agents to provide a hydrophobic coating. There are silanol groups on the surface of the untreated fumed silica rendering it hydrophilic and with a high tendency to adsorb moisture. These silanol groups are replaced by organic groups rendering the silica hydrophobic. Such silicas have a reduced tendency to adsorb moisture, and thus introduce less moisture into the system, compared to silicas lacking a hydrophobic treatment, thus preventing crepe hardening and providing better shelf life and composition stability. Preferably, hexamethyldisilazane, dimethyldichlorosilane, polydimethylsiloxane or organocyclosiloxane are used as a hydrophobizing agent.

It may be preferable that the sealant or the adhesive does not comprise a filler. The filler may turn the sealant composition non-transparent or opaque.

The sealant or the adhesive may further comprise reinforcing fibers.

The reinforcing fibers may be selected from glass fibers, carbon fibers, aramid fibers, boron fibers, cellulose fibers and nylon fibers. The fiber type, fiber content, fiber aspect ratio, fiber dispersion, fiber-matrix adhesion will all depend on the desired stiffness, strength, and flexibility. Prior to using the fibers in the composition of the present invention, they can be treated with an adhesion promoter to increase the bond with polymer matrix.

When the sealant or the adhesive comprises reinforcing fibers, then the amount of reinforcing fibers is about 0.5 to about 20.0 wt%, preferably about 1.0. to about 10.0 wt%.

Other ingredients which may be added to the sealant or the adhesive formulation include dyes, ultraviolet stabilizers, fungicides, heat stabilizers, fire retardants, HALS stabilizers etc. Some sealant formulations may contain organic solvents, such as toluene for instance, whereas other sealant compositions are solvent free, or almost solvent free in view of, for instance, volatile organic compounds (VOC) restrictions.

In general, the sealant or the adhesive has a water content of less than or equal to 2.0 wt%, such as less than or equal to 1.5 wt%, preferably less than or equal to 0.5 wt%, more preferably less than or equal to 0.1 wt %. Water can be removed from the polyurea, the mixture of polyureas or the rheological additive by conventional methods, such as described above.

When exposed to humidity upon application, the sealant or the adhesive can cure at ambient temperatures, such as temperatures from 20 to 25°C. The sealant or the adhesive can also cure at elevated temperatures, such as temperatures from 40 to 50°C.

The sealant or the adhesive may have a transparency of at least 70%, preferably at least 75%, and more preferably at least 80%. Such transparency can be obtained when using a rheological additive of the first to third aspects of the invention, particularly a polyurea or a mixture of polyureas from the second aspect.

A fifth aspect of the invention relates to the use of a polurea or a mixture of polyureas as a rheological additive for a sealant or an adhesive. The polyurea or the mixture of polyureas is as defined in any one of the first to third aspects of the invention. The sealant or the adhesive is as defined above.

Rheology is used to describe and assess the deformation and flow behaviour of fluids. Fluid formulations have inherent rheological behaviour. This behaviour can be changed using additives. A rheological additive is a material that can be added in small quantities to a formulation and that can modify the rheological properties of said formulation. Thus, rheological additives can be used to adjust and control rheological properties such as viscosity, anti-sag or slump, yield point, extrudability, ease of application etc.

Certain rheological additives can modify the rheology of the system simply by being added, dispersed, or dissolved into the formulation. Other rheological additives may need to be activated. A rheological additive can be partially activated. Pre-activated means activated in advance. Pre-activated does not necessarily mean fully activated. A rheological additive that needs to be activated does not significantly modify the rheology of a formulation unless it is activated, or at least partially activated.

The fifth aspect of the invention also provides a process for the manufacture of the sealant or the adhesive.

The process may comprise: (i) combining the rheological additive with a precursor formulation. This step may include combining and mixing the rheological additive with the precursor formulation.

The precursor formulation may include a resin. The precursor formulation may further include a plasticizer and/or a catalyst (e.g. curing catalyst).

The rheological additive may be combined with the precursor formulation as a molten mass or in solid form, such as flake or pastille. The rheological additive may be combined or added to the precursor formulation prior to activation. Thus, the rheological additive is typically an inactivated rheological additive or is a partially activated rheological additive.

The step of combining the rheological additive with a precursor formulation produces a "pre-activated formulation".

The process may further comprise: (ii) activating the rheological additive in the pre-activated formulation.

In general, the rheological additive may have an activation temperature of about 20°C to 140°C, such as about 30°C to about 85°C, or about 40°C to about 70°C. The activation temperature may vary depending on the sealant formulation composition, e.g., the activation temperature of the rheological additive may be different in MS polymer versus SPUR resins.

The activating the rheological additive in the pre-activated formulation may include heating the pre-activated formulation and/or shear mixing the pre-activated formulation, preferably high shear mixing the pre-activated formulation. The pre-activated formulation may be heated to the activation temperature of the rheological additive. Heat to activate the additive may come from various sources. Heat can be applied from external sources, or heat of activation can be provided by high shear mixing for instance.

Alternatively, the step of activating the rheological additive in the pre-activated formulation may include low shear mixing of the pre-activated formulation, followed by heating the pre-activated formulation to dissolve, and optionally activate, the rheological additive.

The rheological additive may be added to a mixture of resin, plasticizer and other ingredients (e.g. in the precursor formulation). The additive can be activated in this mixture. Alternatively, the additive may be activated in a mixture of resin and plasticizer prior to adding additional ingredients.

After the activating step, the process may further comprise: (iii) adding one or more ingredients to the activated formulation, such as the one or more ingredients defined above, such as to produce a sealant formulation or an adhesive formulation.

In yet another approach, the additive may be activated in resin, and then combined with plasticizer. In another approach, the additive may be partially activated in either resin and/or plasticizer. Letting down of such a preactivated mix in resin and/or plasticizer may already provide a satisfying formulation, but additional activation could yield a further activated composition.

An alternative process for the manufacture of the sealant or the adhesive comprises (i) preparing a pre-activated rheological additive and (ii) combining the pre-activated rheological additive with a resin and/or (further plasticizer) and optionally a catalyst.

Any reference to a pre-activated rheological additive as used herein refers to a pre-activated rheological additive obtained or obtainable from a process comprising activating a rheological additive, typically when the rheological additive further comprises a plasticizer or a resin.

The rheological additive may be activated in plasticizer to yield a thickened mass. This mass is pre-activated. Pre-activated material could be stored and shipped to sealant manufacturers. The pre-activated material may be combined with resin and optionally more plasticizer and other ingredients to prepare a final sealant composition.

The step of preparing the pre-activated rheological additive comprises activating a rheological additive (e.g. of the any one of the first to third aspects), wherein the rheological additive comprises a plasticizer and/or a resin. This may include heating the rheological additive and/or shear mixing the rheological additive, preferably high shear mixing the rheological additive. The rheological additive may be heated to its activation temperature. Alternatively, the activation step may include low shear mixing of the rheological additive, followed by heating to dissolve, and optionally activate, the rheological additive.

The step of (ii) combining the pre-activated rheological additive with a resin may include mixing the pre-activated rheological additive with the resin and/or the (further) plasticizer and optionally the catalyst.

After combining the pre-activated rheological additive with a resin, the process may include a further step of (iii) activating the pre-activated rheological additive. The pre-activated rheological additive may require further activation in the presence of the resin and optionally the catalyst and/or further plasticizer.

### EXAMPLES

The invention is illustrated by the following non-limiting examples.

### Example 1 - Polyurea made from polyetheramine and TDI

69.25 g of Jeffamine^{™} M 600 and 80g of toluene were charged into a 500 mL reaction flask equipped with overhead mechanical stirrer, a condenser, a thermocouple, and heating equipment. Jeffamine^{™} M 600 is O-(2-aminopropyl)-O'-(2-methoxyethyl)polypropylene glycol (average Mₙ ∼600). The mixture was heated to 25°C while stirring under nitrogen blanket and then 10.0 g of 2,4-toluene diisocyanate (2,4-TDI) was dropwise added into the reaction mixture with the help of an addition funnel. During this addition, the reaction temperature increased to 40°C. The reaction was allowed to run at this temperature until the -NCO peak disappeared as evidenced by IR (2270 cm⁻¹). Toluene was later removed from the reaction product by rotatory evaporation. The flake, powder like product was left in a vacuum oven overnight. The desired polyurea was confirmed with NMR.

### Example 2 - Polyurea made from polyetheramine, polyetherdiamine and TDI

54.16 g of Jeffamine^{™} M 600, 10.37g of Jeffamine^{™} D400 and 80g of toluene were charged into a 500 mL reaction flask equipped with overhead mechanical stirrer, a condenser, a thermocouple, and heating equipment. Jeffamine^{™} D400 is polyoxypropylenediamine. The mixture was heated to 25°C while stirring under nitrogen blanket and then 12.0 g of 2,4-TDI was added dropwise with the help of an addition funnel into the reaction mixture. During this addition, the reaction temperature increased to 40°C. The reaction was allowed to run at this temperature until the -NCO peak disappeared as evidenced by IR (2270 cm⁻¹). Toluene was later removed from the reaction product by rotatory evaporation. The flake, powder like product was left in a vacuum oven overnight. The desired polyurea was confirmed with NMR.

### Example 3 - Polyurea made from tridecylamine and HDI

99.57 g of tridecylamine (mixture of branched chain isomers, [86089-17-0]) and 100 mL of toluene were charged into a 500 mL reaction flask equipped with overhead mechanical stirrer, a condenser, a thermocouple, and a heating equipment. The solution was heated while stirring under nitrogen blanket to 40°C and then 42.0 g of HDI was added dropwise with the help of an addition funnel into the reaction mixture. The reaction temperature increased to 80°C during this addition process. The reaction was allowed to run at this temperature until the -NCO peak disappeared as evidenced by IR (2270 cm⁻¹). Toluene was later removed from the reaction product by rotatory evaporation. The flake, powder like product was left in a vacuum oven overnight. The desired polyurea was confirmed with NMR.

### Example 4 - Polyurea made from alkyloxyalkaneamine and HDI

118.28 g of Tomamine^{™} PA-12EH (2-ethylhexyloxypropyl amine) and 150 mL of toluene were charged into a 500 mL reaction flask equipped with overhead mechanical stirrer, a condenser, a thermocouple, and a heating equipment. The mixture was heated with stirring under nitrogen blanket to 45°C and then 50.0 g of hexamethylene diisocyanate (HDI) was added dropwise with the help of an addition funnel into the reaction mixture. During this addition, the temperature of the reaction increased up to 100°C. The reaction was allowed to run at this temperature until the -NCO peak disappeared as evidenced by IR (2270 cm⁻¹). Toluene was later removed from the reaction product by rotatory evaporation. The flake, powder like product was left in a vacuum oven overnight. The desired polyurea was confirmed with NMR.

### Example 5 - Polyurea made from polyetheramine and HDI

153.57 g of Jeffamine^{™} M600 was charged into a 500 mL reaction flask equipped with overhead mechanical stirrer, a condenser, a thermocouple, and a heating equipment. 21.0 g of HDI was added dropwise with the help of addition funnel to the reaction mixture with stirring under nitrogen atmosphere. During this addition, the temperature of the reaction increased to 50°C. The reaction was allowed to run at this temperature until the - NCO peak disappeared as evidenced by IR (2270 cm⁻¹). After the reaction was complete, the product was poured into thin sheets and milled cryogenically. The desired polyurea was confirmed with NMR.

### Example 6 - Polyurea made from polyetheramine, polyetherdiamine and HDI

90.96 g of Jeffamine^{™} M600 and 53.51 g of Jeffamine^{™} D4000 was charged into a 500 mL reaction flask equipped with overhead mechanical stirrer, a condenser, a thermocouple, and a heating equipment. 15.0 g of HDI was added dropwise with the help of addition funnel to the reaction mixture with stirring under nitrogen atmosphere. During this addition, the temperature of the reaction increased up to 55°C. The reaction was allowed to run at this temperature until the -NCO peak disappeared as evidenced by IR (2270 cm⁻¹). After the reaction was complete, the product was poured into thin sheets and milled cryogenically. The desired polyurea was confirmed with NMR.

### Example 7 - Polyurea made from polyetheramine, polyetherdiamine, alkyloxyalkaneamine and HDI

78.48 g of Jeffamine^{™} M600, 71.34 g of Jeffamine^{™} D4000 and 14.19 g of Tomamine^{™} PA- 12EH was charged into a 500 mL reaction flask equipped with overhead mechanical stirrer, a condenser, a thermocouple, and a heating equipment. The mixture was heated with stirring under nitrogen blanket to 45°C and then 20.0 g of HDI were added dropwise with the help of an addition funnel into the reaction mixture over a period of 15 min. During this addition, the temperature of the reaction increased to 90°C. The reaction was allowed to run at this temperature until the -NCO peak disappeared as evidenced by IR (2270 cm⁻¹). After the reaction was complete, the product was poured into thin sheets and milled cryogenically. The desired polyurea was confirmed with NMR.

### Example 8 - Sealant formulations prepared using the polyureas of Examples 1-7

To a 1-pint jacketed mixing pot was added 81.2 g of Kaneka^{™} MS Polymer S303H (silyl-terminated polyether) and 56.8 g of plasticizer (DINP), followed by 4.5 g of moisture scavenger (trimethoxyvinylsilane). The mixture was mixed for about 3 minutes at 200-300 rpm to attain homogeneity before the addition of 7.5 g of additive. Mixing was continued at 2000 rpm for 30 minutes, then the mixing speed was reduced to less than 100 rpm and pulling a mild vacuum to expel as many air bubbles as possible. Control samples were made using HDK H18 Pyrogenic Silica from Wacker Chemie^{™} AG at either 5 or 10 wt% loading. All samples were transferred to a storage container and allowed to equilibrate overnight before testing.

### Experimental methods

Brookfield viscosity was taken at 4 rpm with RV spindle #7 at room temperature.

ASTM D2202 was followed to determine degree of slump - readings in inches were taken 30 minutes after materials were loaded both at room temperature and 50°C.

ASTM 1746-70 (with minor modifications) was used to measure the transparency of the sealant formulations. A Cary^{™} 60 UV-VIS instrument with simple read software was used for the analysis. Transmittance was measured at 550 nm wavelength for 5 seconds. The transmittance is set to 100 %, with no specimen in the beam path. Test specimens: BrandTech^{™} 759070D polystyrene cuvettes were filled with the sealant formulation. Bubbles in formulations were removed with the help of a combination of temperature, vacuum, and centrifuge methods. All samples were allowed to equilibrate overnight. Measurement procedure: The instrument is turned on for at least 15 minutes to warm the lamps. The no specimen sample is set to 100 % transmittance. Experimental sample cuvettes are placed in the sample holder, and the transmittance value is measured in percentage. Store purchased commercial clear sealants typically have a percent transmittance above 75, with some of these having a transmittance above 85%.

A HACH^{™} 2100 N laboratory turbidimeter instrument was used to record turbidity values. Instructions are per the user manual were followed. The instrument is turned on at least 15 minutes before measurement to warm up the lamp. The manufacturer provided Stablcal calibration standards were used to perform instrument calibration. Samples were placed in the sample cells and carefully bubbles were removed using standard laboratory practices. The cell tube was wiped clean from the outside, and a drop of silicon oil was applied to remove any imperfections on the surface. The sample tube cell was placed in the holder, and the reading was recorded in the NTU unit. Store purchased commercial clear sealants typically have a turbidity reading less than 25 [NTU].

Results from all measurements are summarized in Table 1 below.

**Table 1**

| Additive | Brookfield Viscosity [cP] | Slump* (RT) | Slump* (50°C) | Transparency' [%] | Turbidity² [NTU] |
|---|---|---|---|---|---|
| Control 1 | 66,000 | Fail | Fail | 74.9 | 42.2 |
| Control 2 | 718,000 | Fail (1.3) | Fail (2.0) | 72.2 | 66.0 |
| Example 1 | 2,000 | Fail | Fail | 87.6 | 1.0 |
| Example 2 | 3,000 | Fail | Fail | 3.0 | 141 |
| Example 3 | 35,000 | Fail | Fail | 0.1 | 3463 |
| Example 4 | 76,000 | Fail | Fail | 0.1 | 3624 |
| Example 5 | 102,000 | Fail | Fail | 61.1 | 94 |
| Example 6 | 225,000 | Pass (0) | Fail | 84.8 | 12.0 |
| Example 7 | 484,000 | Pass (0) | Pass (0) | 74.5 | 24.2 |

| | | | | | |
|---|---|---|---|---|---|
| * Fail (number): A number in the parenthesis is the distance in inches that the test samples traveled. No number means it travels all the way down. Pass (0): no sagging. ¹ Kaneka^{™} MS Polymer S303H resin - 86.5% transmission; DINP plasticizer 88.9% transmission. ² Kanena S303 resin has turbidity of 3.4 and DINP plasticizer is 0.2 [NTU]. | | | | | |

The results in Table 1 show that the use of a linear alkylene di-isocyanate to produce the rheology additive produced sealant formulations having higher viscosities compared to when non-linear arylene di-isocyanates were used. Compare the viscosities Example 1 with Example 5 or Example 2 with Example 6.

The use of a diamine to prepare the rheology additive resulted in sealants having increased viscosity. Compare the results for Example 1 with Example 2 and Example 5 with Example 6.

When a non-linear aromatic di-isocyanate was used, the use of a diamine resulted in a rheology additive having substantially worse transparency and higher turbidity than the rheology additive without the diamine (c.f. Example 1 with Example 2). However, when a linear alkylene di-isocyanate was used, then the use of the diamine surprisingly improved transparency and decreased turbidity in comparison to the rheology additive with the diamine (c.f. Example 5 with Example 6). In fact, the sealant containing the rheology additive of Example 6 showed significantly improved transparency and turbidity compared to both Control 1 and Control 2.

The effect of the composition of the monoamine that was used to prepare the rheology additive can be seen by comparing the results in Table 1 for Examples 3, 4 and 5. When the monoamine was changed from a monoamine having a linear alkyl substituent (Example 3) to a monoamine having an alkyl-ether substituent (Examples 4 and 5), the resulting rheology additive produced a sealant having significantly increased viscosity. The use of a monoamine having an alkyl-ether repeating unit as a substituent increased viscosity, as well as improved transparency and turbidity (see Example 6).

### Example 9 - Polyurea made from polyetherdiamine, aminosilane, polyetheramine and HDI

60.64 g of Jeffamine D4000, 10.87 g of 3-(Trimethoxysilyl)-propylamine and 66.71 g of Jeffamine M 600 were charged into a 500 mL reaction flask equipped with overhead mechanical stirrer, a condenser, a thermocouple, and a heating equipment. The reactant mixture was heated while stirring under nitrogen blanket to 40°C and then 17.0 g of HDI was added dropwise with the help of an addition funnel into the reaction mixture. During this course of addition, the reaction temperature increased to 75°C. The reaction was allowed to run at 70°C until the -NCO peak disappeared as evidenced by IR (2270 cm⁻¹). The reaction product was cryogenically milled into powder for use. The above additive, when formulated at 5 wt.% loading in a sealant formulation as per Example 8, gave a Brookfield viscosity of 854,000 [cP] with RV #7 spindle at 4 rpm. When using 2 wt% loading of this additive instead, the viscosity was 191,000 [cP] with a 0.25 RT slump reading, while the 50°C slump was 0.25 (after 20min) but a Fail after the standard 30 min. This last formulation had a turbidity reading of 11.9 [NTU] and a 77.9 % transmission.

### Example 10: Polyurea made from polyetheramine, polyetherdiamine, alkyloxyalkaneamine and HDI

35.67 g of Jeffamine D 4000, 7.1 g of Tomamine PA-12EH and 131.12 g of Jeffamine M2005 were charged into a 500 mL reaction flask equipped with overhead mechanical stirrer, a condenser, a thermocouple, and a heating equipment. The reactant mixture was heated while stirring under nitrogen blanket to 50°C and then 10.0 g of HDI was added dropwise with the help of an addition funnel into the reaction mixture over a period of 20 min. During this course of addition, the reaction temperature increased to 90°C. The reaction was allowed to run at this temperature until the -NCO peak disappeared as evidenced by IR (2270 cm⁻¹). The reaction product was cryogenically milled into powder for use.

A pre-gel of the additive of this example was prepared in plasticizer: 80 g of DINP and 20 g of the additive were weighed into a 1-pint jacketed pot. The pot was placed under a dispermat fitted with a 60 mm dispersion blade, connected to a water bath at 75°C. The contents were mixed for 3 minutes at 200-300 rpm and then for 60 minutes at 2000 rpm to obtain a homogenous dispersion of the polyurea additive in the plasticizer.

37.5 g of the above pre-gel was weighed into a 1-pint jacketed pot. To it was added another 26.8 g of DINP plasticizer, 81.2 g of resin (Momentive SPUR+ 1015 silane - a silylated polyurethane resin) and 4.5 g of vinyltrimethoxysilane moisture scavenger. The pot was placed under a dispermat fitted with a 60 mm dispersion blade. The contents were mixed for about 3 minutes at 200-300 rpm and then mixing speed was adjusted to 1800 rpm. Mixing was for 30 min. No external heat was added during this formulation process. Afterwards, mixing speed was reduced to 100 rpm to expel any bubbles and later transferred to a jar. The above formulation, at 7.5 wt.% loading of the additive, gave a Brookfield viscosity of 166,000 [cP] with RV #7 at 4 rpm. The formulation had a turbidity reading of 21 [NTU] and a 70.5 % transmission.

As comparison to the pre-gel approach, a direct add sealant sample was prepared. The processing was as per Example 8. The polyurea of this example was used and with materials chosen to match the final sealant formulation as made via the pregel process. A Brookfield viscosity was obtained for this direct add comparison of 193,000 [cP] with RV #7 at 4 rpm. This formulation passed the Boeing slump test at RT but failed it at 50°C. The formulation had a turbidity reading of 17.3 [NTU] and a 74.4 % transmission.

The entire disclosure of each document cited herein is hereby incorporated herein by reference. All references cited in this disclosure are incorporated by reference to the same extent as if each reference had been incorporated by reference in its entirety individually.

The citation and incorporation of patent documents herein is done for convenience only and does not reflect any view of the validity, patentability, and/or enforceability of such patent documents.

A number of embodiments of the disclosure have been described. Nevertheless, it will be understood that various modifications may be made without departing from the spirit and scope of the present disclosure. Accordingly, other embodiments are within the scope of the following claims.

All headings and sub-headings are used herein for convenience only and should not be construed as limiting the invention in any way.

The use of any and all examples, or exemplary language (e.g. "such as") provided herein, is intended merely to better illuminate the invention and does not pose a limitation on the scope of the invention unless otherwise paragraphed. No language in the specification should be construed as indicating any non-paragraphed element as essential to the practice of the invention.

## Claims

1. A rheological additive comprising a polyurea, wherein the polyurea is obtained or is obtainable from a reaction between (a) a diisocyanate and (b) at least one primary monoamine having an aliphatic side chain, wherein:
(a) the diisocyanate is represented by formula (D):
OCN-R¹-NCO (D)
wherein R¹ is a linear C₂-C₁₂ alkylene group; and
(b) the at least one primary monoamine has an aliphatic side chain comprising:
(i) an end group independently selected from C₁-C₂₀ alkyl, C₁-C₂₀ alkoxy and a silicon-containing group represented by formula (S):
R^{a}_{q}(R^{b}O)_{3-q}Si- (S)
wherein:
each R^{a} is independently selected from C₁-C₄ alkyl, C₆-C₁₀ aryl and C₆-C₁₀ aryl-C₁-C₄ alkyl,
each R^{b} is independently selected from C₁-C₄ alkyl, C₆-C₁₀ aryl and C₆-C₁₀ aryl-C₁-C₄ alkyl, and
q is an integer of 0 to 3; and
(ii) a linker group between the end group and a primary amine group of the primary monoamine, wherein the linker group is either a single bond or one or more units selected from oxy-C₁-C₆-alkylene, amino-C₁-C₆-alkylene and a combination thereof; and
optionally
(iii) a C₁-C₈ alkylene group between the linker group and the primary amine group;
with the proviso that the linker group is a single bond only when the end group is a silicon-containing group represented by formula (S).

2. A rheological additive comprising a polyurea, wherein the polyurea is obtained or is obtainable from a reaction between (a) a diisocyanate, (b) at least one primary monoamine having an aliphatic side chain and (c) a diamine having two primary amine groups or a triamine having three primary amine groups, wherein:
(a) the diisocyanate is represented by formula (D):
OCN-R¹-NCO (D)
wherein R¹ is a linear C₂-C₁₂ alkylene group; and
(b) the at least one primary monoamine has an aliphatic side chain comprising:
(i) an end group independently selected from C₁-C₂₀ alkyl, C₁-C₂₀ alkoxy and a silicon-containing group represented by formula (S):
R^{a}_{q}(R^{b}O)_{3-q}Si- (S)
wherein:
each R^{a} is independently selected from C₁-C₄ alkyl, C₆-C₁₀ aryl and C₆-C₁₀ aryl-C₁-C₄ alkyl,
each R^{b} is independently selected from C₁-C₄ alkyl, C₆-C₁₀ aryl and C₆-C₁₀ aryl-C₁-C₄ alkyl, and
q is an integer of 0 to 3; and
(ii) a linker group between the end group and a primary amine group of the primary monoamine, wherein the linker group is either a single bond or one or more units selected from oxy-C₁-C₆-alkylene, amino-C₁-C₆-alkylene and a combination thereof; and
optionally
(iii) a C₁-C₈ alkylene group between the linker group and the primary amine group;
with the proviso that the linker group is a single bond only when the end group is a silicon-containing group represented by formula (S); and
(c) the diamine has the two primary amine groups linked by an aliphatic linker group and the triamine has the three primary amine groups linked by an aliphatic linker group, wherein each aliphatic linker group comprises a group selected from a poly(oxy-C₁-C₆-alkylene) group, a mono(oxy-C₁-C₆-alkylene) group, a poly(amino-C₁-C₆-alkylene) group and a mono(amino-C₁-C₆-alkylene) group.

3. The rheological additive according to claim 2, wherein the diamine is represented by formula (A2):
H₂N-R⁴-G²-R³-NH₂ (A2)
wherein:
each R³ is independently a single bond or a C₁-C₈ alkylene group;
each R⁴ is independently a single bond or a C₁-C₈ alkylene group; and
each G² is the same or different and is independently selected from a poly(oxy-C₁-C₆-alkylene) group, a mono(oxy-C₁-C₆-alkylene) group, a poly(amino-C₁-C₆-alkylene) group and a mono(amino-C₁-C₆-alkylene) group; and
with the provisos:
- in formula (A2), R³ and R⁴ are not both single bonds; and
- in formula (A2), G², R³ and R⁴ are selected such that the diamine represented by formula (A2) does not have an oxygen-oxygen bond, an oxygen-nitrogen bond or a nitrogen-nitrogen bond.

4. The rheological additive according to claim 3, wherein G² in formula (A2) is selected from: 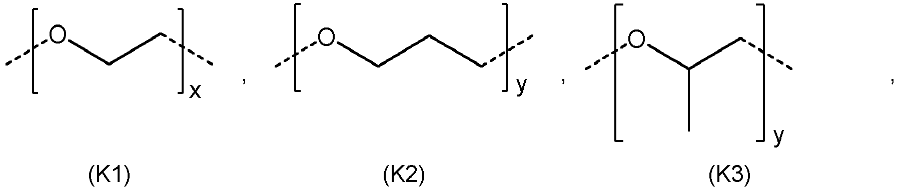 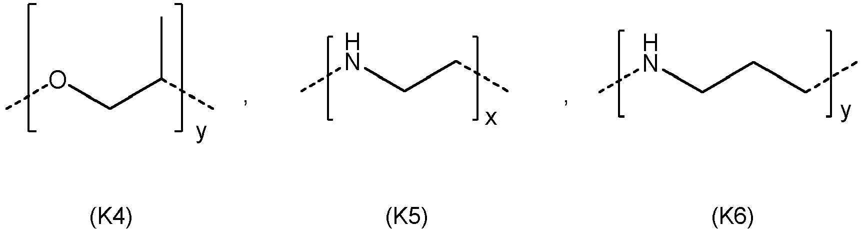 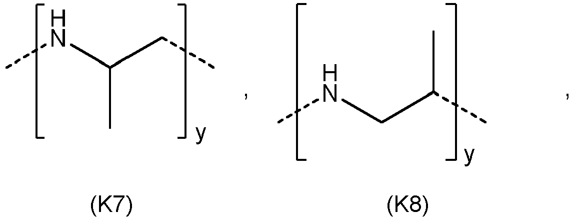 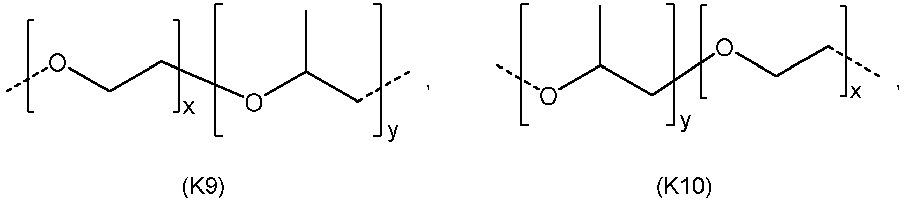 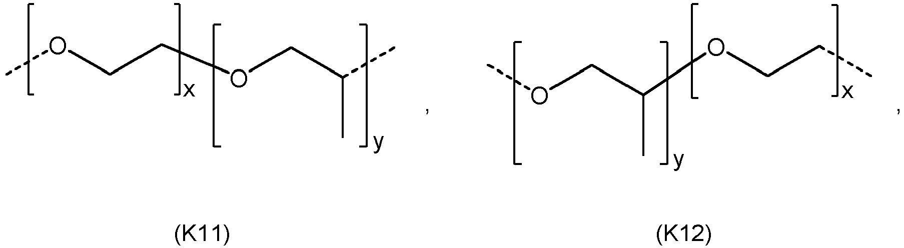 and 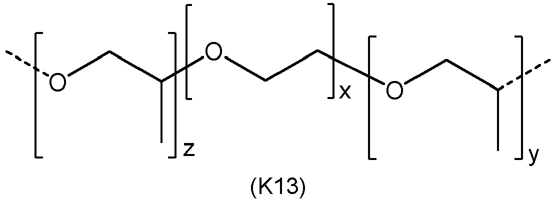 wherein each x, y and z is independently an integer from 1 to 100, preferably each x, y and z is independently an integer from 1 to 50, more preferably each x, y and z is independently an integer from 1 to 15.

5. The rheological additive according to any one of claims 2 to 4, wherein the diamine is represented by formula (A2a): 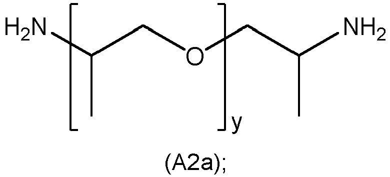 or the diamine is represented by formula (A2b): 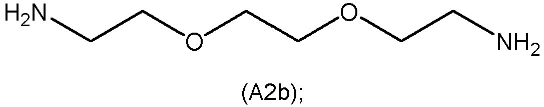 Or the diamine is represented by formula (A2c):

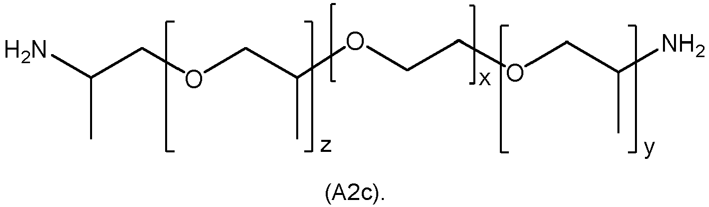

6. The rheological additive according to claim 2, wherein the triamine is represented by formula (A3): 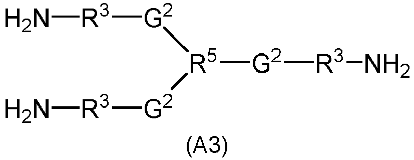 wherein:
each R³ is independently a single bond or a C₁-C₈ alkylene group;
each G² is the same or different and is independently selected from a poly(oxy-C₁-C₆-alkylene) group, a mono(oxy-C₁-C₆-alkylene) group, a poly(amino-C₁-C₆-alkylene) group and a mono(amino-C₁-C₆-alkylene) group; and
R⁵ is selected from a nitrogen atom and a linear or branched C₁-C₁₂ hydrocarbyl group;
with the provisos:
- in formula (A3), when R⁵ is a nitrogen atom, then each R³ is independently a C₁-C₈ alkylene group; and
- in formula (A3), when R⁵ is a linear or branched C₁-C₁₂ hydrocarbyl group, then each G² and R³ are selected such that the triamine represented by formula (A3) does not have an oxygen-oxygen bond, an oxygen-nitrogen bond or a nitrogen-nitrogen bond.

7. The rheological additive according to claim 6, wherein R⁵ is a linear or branched C₁-C₁₂ hydrocarbyl group, preferably a linear or branched C₃-C₁₀ hydrocarbyl group, more preferably a linear or branched C₁-C₁₂ hydrocarbyl group may be selected from: 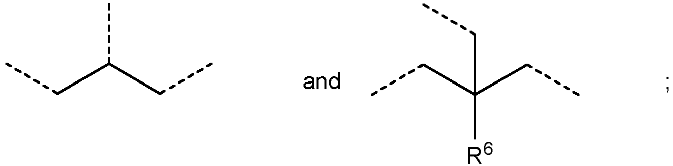 wherein R⁶ is hydrogen, methyl or ethyl.

8. The rheological additive according to claim 6 or claim 7, wherein G² in formula (A3) is selected from: 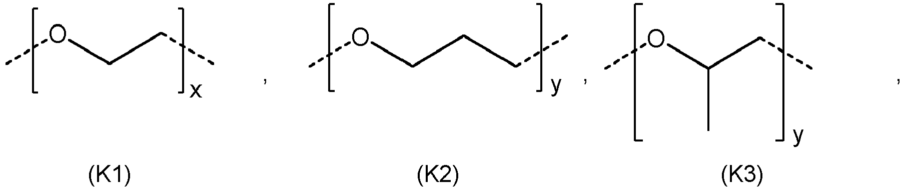 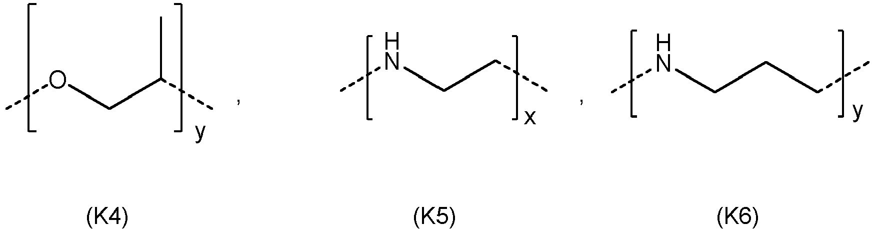 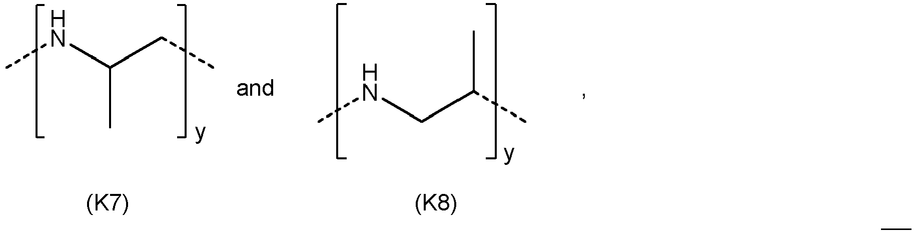 wherein each x and y is independently an integer from 1 to 50.

9. The rheological additive according to any one of claims 6 to 8, wherein the triamine is represented by formula (A3a): 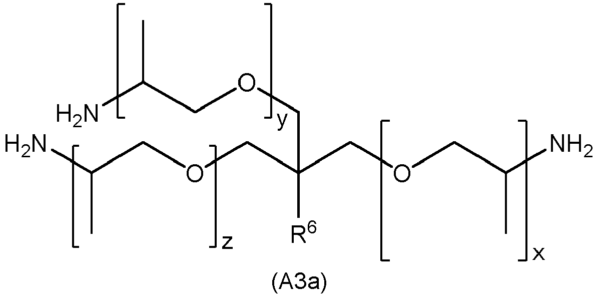 wherein:
R⁶ is hydrogen or ethyl;
x is an integer from 1 to 30;
y is an integer from 1 to 30; and
z is an integer from 1 to 30.

10. The rheological additive according to any one of the preceding claims, wherein the at least one primary monoamine having an aliphatic side chain is represented by formula (A):
E¹-G¹-R²-NH₂ (A)
wherein:
each R² is independently a single bond or a C₁-C₈ alkylene group;
each G¹ is independently a single bond or one or more units selected from oxy-C₁-C₆-alkylene, amino-C₁-C₆-alkylene and a combination thereof;
each E¹ is independently selected from the group consisting of C₁-C₂₀ alkyl, C₁-C₂₀ alkoxy and a silicon-containing group represented by formula (S):
R^{a}_{q}(R^{b}O)_{3-q}Si- (S)
wherein:
each R^{a} is independently selected from C₁-C₄ alkyl, C₆-C₁₀ aryl and C₆-C₁₀ aryl-C₁-C₄ alkyl;
each R^{b} is independently selected from C₁-C₄ alkyl, C₆-C₁₀ aryl and C₆-C₁₀ aryl-C₁-C₄ alkyl; and
each q is independently an integer of 0 to 3;
with the provisos that:
- G¹ and R² are not both single bonds;
- E¹, G¹ and R² of each primary monoamine are selected such that the primary monoamine does not have an oxygen-oxygen bond, an oxygen-nitrogen bond or a nitrogen-nitrogen bond; and
- when E¹ is C₁-C₂₀ alkyl and R² is a C₁-C₈ alkylene group, then G¹ is not a single bond.

11. The rheological additive according to claim 10, wherein G¹ is independently a single bond or is selected from: 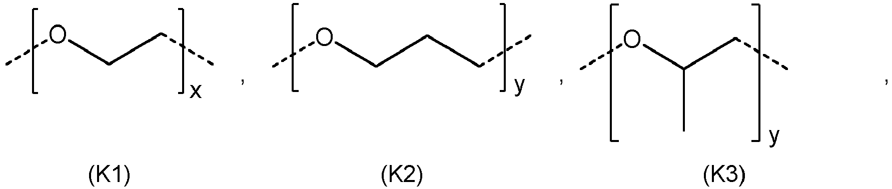 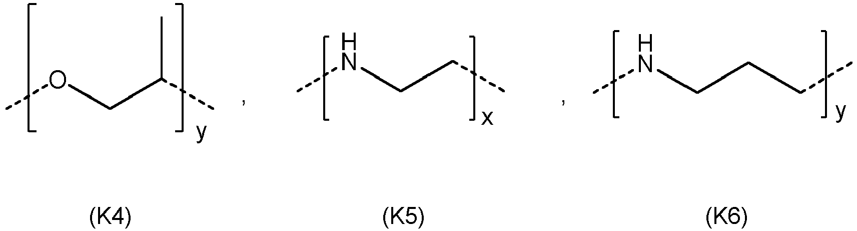 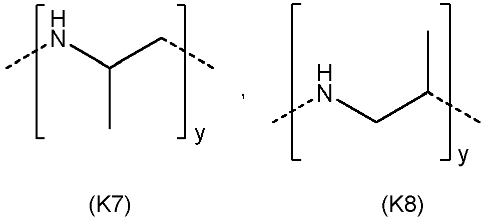 and a combination of two or more thereof;
wherein each x and y is independently an integer from 1 to 100.

12. The rheological additive according to claim 10 or claim 11, wherein the at least one primary monoamine is: 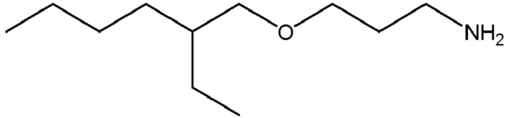 or the at least one primary monoamine is: 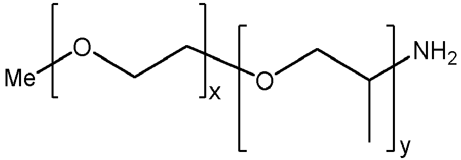 wherein:
x is an integer from 1 to 10, preferably 1 to 5; and
y is an integer from 1 to 10, preferably from 1 to 8;
or the at least one primary monoamine is: 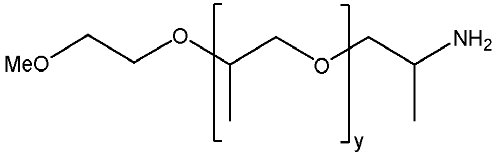 wherein y is an integer from 1 to 10, preferably from 1 to 8.

13. A rheological additive comprising a polyurea having a structure comprising:
(a) at least one backbone group, wherein each backbone group is independently represented by formula (U): 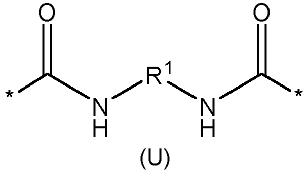 wherein:
each R¹ is a linear C₂-C₁₂ alkylene group; and
each backbone group is bonded at a position represented by an asterisk in formula (U) to either a terminal group represented by formula (T) or a linker group represented by formula (L1) or formula (L2);
(b) at least two terminal groups, wherein each terminal group is independently represented by formula (T):
E¹-G¹-R²-NH-^{#} (T)
wherein:
each R² is independently a single bond or a C₁-C₈ alkylene group;
each G¹ is independently a single bond or one or more units selected from oxy-C₁-C₆-alkylene, amino-C₁-C₆-alkylene and a combination thereof;
each E¹ is independently selected from the group consisting of C₁-C₂₀ alkyl, C₁-C₂₀ alkoxy and a silyl group represented by formula (S):
Ra(R^{b}O)_{3-q}Si- (S)
wherein:
each R^{a} is independently selected from C₁-C₄ alkyl, C₆-C₁₀ aryl and C₆-C₁₀ aryl-C₁-C₄ alkyl;
each R^{b} is independently selected from C₁-C₄ alkyl, C₆-C₁₀ aryl and C₆-C₁₀ aryl-C₁-C₄ alkyl;
each q is independently an integer of 0 to 3;
with the provisos that:
- G¹ and R² are not both single bonds;
- E¹, G¹ and R² of each terminal group is selected such that the terminal group does not have an oxygen-oxygen bond, an oxygen-nitrogen bond or a nitrogen-nitrogen bond; and
- when E¹ is C₁-C₂₀ alkyl and R² is a C₁-C₈ alkylene group, then G¹ is not a single bond; and
each terminal group is bonded at a position represented by a hash (#) in formula (T) to a backbone group represented by formula (U) at a position represented by an asterisk (*); and
(c) a linker group, wherein each linker group is independently represented by formula (L1) or formula (L2):
^{#}-NH-R⁴-G²-R³-NH-^{#} (L1) 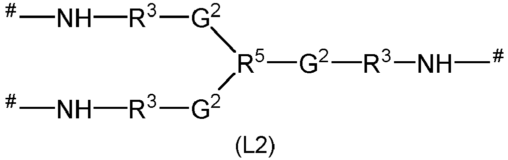
wherein:
each R³ is independently a single bond or a C₁-C₈ alkylene group;
each R⁴ is independently a single bond or a C₁-C₈ alkylene group;
each G² is the same or different and is independently selected from a poly(oxy-C₁-C₆-alkylene) group, a mono(oxy-C₁-C₆-alkylene) group, a poly(amino-C₁-C₆-alkylene) group and a mono(amino-C₁-C₆-alkylene) group;
each R⁵ is independently selected from a nitrogen atom and a linear or branched C₁-C₁₂ hydrocarbyl group;
with the provisos that:
- in formula (L1), R³ and R⁴ are not both single bonds;
- in formula (L1), G², R³ and R⁴ are selected such that the linker group represented by formula (L1) does not have an oxygen-oxygen bond, an oxygen-nitrogen bond or a nitrogen-nitrogen bond;
- in formula (L2), when R⁵ is a nitrogen atom, then each R³ is independently a C₁-C₈ alkylene group; and
- in formula (L2), when R⁵ is a linear or branched C₁-C₁₂ hydrocarbyl group, then each G² and R³ are selected such that the linker group represented by formula (L2) does not have an oxygen-oxygen bond, an oxygen-nitrogen bond or a nitrogen-nitrogen bond; and
each linker group is bonded at a position represented by a hash (#) in formula (L1) or formula (L2) to a backbone group represented by formula (U) at a position represented by an asterisk (*); and
wherein at least one linker group is bonded at a position represented by a hash (#) in formula (L1) or formula (L2) to a backbone group represented by formula (U) at a position represented by an asterisk (*).

14. A sealant or an adhesive comprising the rheological additive according to any one of the preceding claims, preferably the sealant or the adhesive having an amount of about 0.1 to about 20.0 wt% of the rheological additive, preferably an amount of about 1.0 to about 15.0 wt%, more preferably an amount of about 2.0 to about 10.0 wt%.

15. The sealant or the adhesive according to claim 14, having a transparency of at least 70%, preferably at least 75%, and more preferably at least 80%.
